# EUROPEAN PATENT APPLICATION

(11) **EP 4 614 225 A1**
(43) Date of publication of application: **10.09.2025**
(21) Application number: 23886352.6
(22) Date of filing: 03.11.2023
(51) Int. Cl.: G03B 5/06, G03B 3/10, G03B 13/36, G03B 17/12, H04N 23/54, H04N 23/55, G02B 27/64, G02B 7/10

(54) **LENS DRIVING DEVICE, AND CAMERA DEVICE AND OPTICAL INSTRUMENT COMPRISING SAME**

(30) Priority: 04.11.2022 KR 20220146278; 04.11.2022 KR 20220146285
(71) Applicant: LG INNOTEK CO. LTD, Gangseo-gu Seoul 07796 (KR)
(72) Inventor: LEE, Sungguk, Seoul 07796 (KR)
(74) Representative: DREISS Patentanwälte PartG mbB
(86) International application number: PCT/KR2023/017482
(87) International publication number: WO 2024/096658

(57) **Abstract**

An embodiment comprising: a housing; a bobbin disposed in the housing; sliding members disposed between the housing and the bobbin and fixed to the housing; a magnet disposed on the bobbin; and a coil disposed in the housing and moving the bobbin in the optical axis direction by interaction with the magnet, wherein the sliding members are magnetic bodies that are attracted to the magnet.

## Description

### [Technical Field

Embodiments relate to a lens moving apparatus and to a camera device and an optical instrument each including the same.

### [Background Art]

It is difficult to apply technology of a voice coil motor (VCM) used in existing general camera modules to a subminiature, low-power camera module, and therefore research related thereto has been actively conducted.

Demand for and production of electronic products, such as smartphones and mobile phones equipped with cameras have increased. A camera for mobile phones is on a trend of increased resolution and miniaturization. As a result, an actuator has also been miniaturized, increased in diameter, and been made multifunctional. In order to realize a high-resolution camera for mobile phones, improvement in performance of the camera for mobile phones and additional functions thereof, such as autofocus, handshake correction, and zooming, are required.

### [Disclosure]

### [Technical Problem]

Embodiments provide a lens moving apparatus, a camera device and an optical instrument, which are capable of reducing the manufacturing cost and of reducing the space occupied by the yoke, thus improving design freedom and reducing the size thereof.

Embodiments provide a lens moving apparatus, a camera device and an optical instrument, which are capable of reducing the size and manufacturing cost thereof and of stably supporting an AF moving unit and an OIS moving unit.

### [Technical Solution]

A lens moving apparatus according to an embodiment includes a housing, a bobbin disposed in the housing, a sliding member disposed between the housing and the bobbin and fixed to the housing, a magnet disposed on the bobbin, and a coil disposed on the housing to move the bobbin in an optical axis direction by virtue of interaction with the magnet, wherein the sliding member is a magnetic body which exerts attractive force with respect to the magnet.

The bobbin may be slidably moved along the sliding member in the optical axis direction. The housing may include a groove to which at least a portion of the sliding member is fixed. The bobbin may include a groove in which at least one other portion of the sliding member is inserted and disposed.

The housing may include a groove which a lower portion of the sliding member is inserted into and fixed to.

The housing may include a projection projecting from an inner surface of a lateral portion of the housing, and the sliding member may be fixed to the projection.

At least a portion of the bobbin may be disposed between the magnet and the sliding member.

The sliding member may overlap the magnet in a direction which is perpendicular to the optical axis direction and which the magnet faces the coil. The sliding member may not overlap the coil in the direction which is perpendicular to the optical axis direction and in which the magnet faces the coil.

The shortest distance between the sliding member and the magnet may be greater than a half of a length of the magnet in a direction which is perpendicular to the optical axis direction and which the magnet faces the coil but be less than three times a thickness of the magnet.

The length of the sliding member in the optical axis direction may be equal to or greater than 70% of the length of the magnet in the optical axis direction but be equal to or less than 150% of the length of the magnet in the optical axis direction.

The housing may include a first lateral portion, a second lateral portion positioned opposite the first lateral portion, a third lateral portion disposed between the first lateral portion and the second lateral portion, and a fourth lateral portion positioned opposite the third lateral portion.

The coil may be disposed on the first lateral portion of the housing, and the magnet may be disposed on a first lateral surface of the bobbin opposed to the first lateral portion of the housing.

The housing may include a first projection projecting from the inner surface of the third lateral portion and a second projection projecting from the inner surface of the fourth lateral portion, and the sliding member may include a first shaft member fixed to the first projection and a second shaft member fixed to the second projection.

The first shaft member may be disposed adjacent to one end of the magnet, and the second shaft member may be disposed adjacent to the other end of the magnet.

A lens moving apparatus according to another embodiment includes a housing including a first lateral portion, a second lateral portion positioned opposite the first lateral portion, a third lateral portion disposed between the first lateral portion and the second lateral portion, and a fourth lateral portion positioned opposite the third lateral portion, a bobbin disposed in the housing, a sliding member disposed between the housing and the bobbin and fixed to the housing, a coil disposed on the first lateral portion of the housing, and a magnet disposed on a first lateral surface of the bobbin opposed to the first lateral portion of the housing, wherein the sliding member is a magnetic body which exerts attractive force with respect to the magnet, and at least a portion of the bobbin is disposed between the magnet and the sliding member.

A lens moving apparatus according to an embodiment includes a housing, a frame disposed in the housing, a first sliding member disposed between the housing and the frame, a first magnet disposed on the frame, and a coil disposed on the housing to move the frame in a direction perpendicular to the optical axis direction by virtue of the interaction with the first magnet, wherein the first sliding member is a magnetic body which exerts attractive force with respect to the first magnet.

The first sliding member may be fixed to the housing, and the frame may be slidably movable along the first sliding member in a direction perpendicular to the optical axis direction.

The housing may include a groove to which at least a portion of the first sliding member is fixed, and the frame may include a groove into and in which at least one other portion of the first sliding member is inserted and disposed.

The lens moving apparatus may include a second sliding member coupled to the frame, a bobbin disposed in the frame and in contact with the second sliding member, a second magnet disposed on the bobbin, and a second coil disposed on the housing opposed to the second magnet to move the bobbin in the optical axis direction by virtue of the interaction with the second magnet, wherein the second sliding member may be a magnetic body which exerts attractive force with respect to the second magnet.

A lens moving apparatus according to another embodiment includes a housing, a first frame disposed in the housing, a first sliding member disposed between the housing and the first frame, a second frame disposed on the first frame, a first magnet disposed on the first frame, a second magnet disposed on the second frame, a first coil disposed on the housing to move the first frame in a first direction perpendicular to an optical axis direction by virtue of the interaction with the first magnet, and a second coil disposed on the housing to move the second frame in a second direction perpendicular both to the optical axis direction and to the first direction, wherein the first sliding member is a magnetic body which exerts attractive force with respect to the first magnet.

The second sliding member may be a magnet body which exerts attractive force with respect to the second magnet. The first sliding member may be fixed to the housing.

The second sliding member may be fixed to the first frame.

The housing may include a groove coupled to at least a portion of the first sliding member.

The first frame may include a groove in which at least one other portion of the first sliding member is disposed. The first frame may include a groove to which at least a portion of the second sliding member is coupled. The second frame may include a groove in which at least one other portion of the second sliding member is disposed.

The housing may include a first lateral portion, a second lateral portion positioned opposite the first lateral portion, a third lateral portion disposed between the first lateral portion and the second lateral portion, and a fourth lateral portion positioned opposite the third lateral portion, and the first coil may be disposed on the second lateral portion of the housing. Here, the first magnet may be disposed on the second lateral portion of the first frame, the second coil may be disposed on the fourth lateral portion of the housing, and the second magnet may be disposed on the fourth lateral portion of the second frame.

The first sliding member may include first to fourth shaft members, and each of the first to fourth shaft members may be disposed adjacent to a corresponding one of the four corners of the housing.

The second sliding member may include fifth to eighth shaft members, and each of the fifth to eighth shaft members may be disposed adjacent to a corresponding one of the four corners of the first frame.

The lens moving apparatus according to the other embodiment may include a third sliding member coupled to the second frame, a bobbin disposed in the first and second frames and in contact with the third sliding member, a third magnet disposed on the bobbin, and a third coil disposed in the housing opposed to the third magnet to move the bobbin in the optical axis direction by virtue of the interaction with the third magnet, wherein the third sliding member may be a magnet body which exerts attractive force with respect to the third magnet.

The third sliding member may include two shaft members which are spaced apart from each other. At least a portion of the bobbin may be disposed between the third sliding member and the third magnet.

The corner of one end of the first magnet adjacent to the first sliding member may be eliminated by chamfering. The corner of one end of the second magnet adjacent to the second sliding member may be eliminated by chamfering.

### [Advantageous Effects]

According to the embodiments, because the bobbin has a structure including the groove contacting a portion of the sliding member, sticking of the sliding member does not occur.

According to the embodiments, the sliding member has magnetism to exert attractive force with respect to the magnet, and thus the bobbin may be stably supported with respect to the sliding member by virtue of the attractive force between the sliding member and the magnet.

According to the embodiments, because there is no need to provide an additional yoke in order for the sliding member to stably support the bobbin with respect to the housing, it is possible to reduce the manufacturing cost and the space occupied by the yoke, thus improving design freedom and the size of the lens moving apparatus.

Furthermore, according to the embodiments, because the lower portion of the sliding member is disposed in the groove in the housing, it is possible to design the height of the sliding member in the optical axis direction to be lowered and to design the height of the lens moving apparatus in the optical axis direction to be lowered.

According to the embodiments, because the sliding member configured to support the bobbin for an AF operation and the sliding member configured to support the frame for OIS operation are made of a magnetic material, it is possible to support the bobbin and the frame without having to provide an additional yoke.

Furthermore, the embodiments are able to reduce the size of the lens moving apparatus and the manufacturing cost.

Furthermore, according to the embodiments, because portions of the corners of the two opposite ends of the magnet are cut off, it is possible to reduce the space occupied by the magnet 130 and thus to improve space availability of the lens moving apparatus, thus realizing miniaturization of the lens moving apparatus.

Furthermore, according to the embodiments, because the cut surface of the magnet faces the sliding member, it is possible to increase the attractive force between the magnet and the sliding member and to increase holding force (or supporting force) required to support the bobbin and holding force (or supporting force) required to support the frame.

Furthermore, according to the embodiments, because the projection is formed in the groove in the bobbin, it is possible to reduce the frictional force between the bobbin and the sliding member.

According to the embodiments, because the corner portions of the two magnets are eliminated by chamfering, it is possible to reduce the magnetic field interference between the two magnets, to prevent erroneous OIS operation caused by the magnetic field interference, and to improve reliability of OIS operation.

### [Description of Drawings]

FIG. 1 is an exploded perspective view of a lens moving apparatus according to an embodiment;
FIG. 2 is a perspective view of the lens moving apparatus from which a cover member is removed;
FIG. 3A is a perspective view of a bobbin;
FIG. 3B is a perspective view of the bobbin, a sliding member and a magnet member;
FIG. 4A is a first perspective view of a housing;
FIG. 4B is a second perspective view of the housing;
FIG. 5 is a perspective view of the housing, a coil, a position sensor, a capacitor, and a circuit board;
FIG. 6A is a cross-sectional view of the lens moving apparatus, taken along line A-B in FIG. 2;
FIG. 6B is a cross-sectional view of the lens moving apparatus, taken along line C-D in FIG. 2;
FIG. 6C is a cross-sectional view of the lens moving apparatus, taken along line E-F in FIG. 2;
FIG. 6D is a cross-sectional view of the lens moving apparatus, taken along line G-H in FIG. 2;
FIG. 7 illustrates the attractive force acting between the sliding member and the magnet;
FIG. 8 illustrates an assembly sequence of the lens moving apparatus according to an embodiment;
FIG. 9 is a plan view of the housing, the sliding member, the magnet, and the coil;
FIG. 10 is a plan view of the magnet, the bobbin, and the sliding member according to another embodiment;
FIG. 11A is a cross-sectional view of the lens moving apparatus according to another embodiment, taken along line E-F in FIG. 2;
FIG. 11B is a cross-sectional view of the lens moving apparatus shown in FIG. 11A, taken along line G-H in FIG. 2;
FIG. 12 is an exploded perspective view of a camera device according to an embodiment;
FIG. 13 is an exploded perspective view of the lens moving apparatus according to an embodiment;
FIG. 14 is a perspective view of the lens moving apparatus from which the cover member is removed;
FIG. 15 is an exploded perspective view of the bobbin and the frame shown in FIG. 13;
FIG. 16A is an exploded perspective view of the bobbin, the magnet, and the sliding member;
FIG. 16B is an assembled perspective view of the bobbin, the magnet, and the sliding member;
FIG. 17A is a perspective view of the housing;
FIG. 17B is an assembled perspective view of the housing, the coils, the position sensors, the capacitor, and the sliding member;
FIG. 17C is an assembled perspective view of the circuit board, the position sensors, the coils, and the capacitor;
FIG. 18A is a perspective view of the first frame, the magnet, and the sliding members;
FIG. 18B is a first perspective view of the first frame, the magnet, and the sliding member;
FIG. 18C is a second perspective view of the first frame, the magnet, and the sliding member;
FIG. 18D is an assembled perspective view of the first frame, the magnet, and the sliding member;
FIG. 19A is a perspective view of the second frame, the magnet, the sliding members, and the magnet;
FIG. 19B is a perspective view of the second frame, the magnet, and the sliding member;
FIG. 19C is an assembled perspective view of the second frame, the magnet, and the sliding member;
FIG. 20 is an assembled perspective view of the frames, the magnets, and the sliding member;
FIG. 21A is a cross-sectional view of the lens moving apparatus, taken along line A-B in FIG. 14;
FIG. 21B is a cross-sectional view of the lens moving apparatus, taken along line C-D in FIG. 14;
FIG. 21C is a cross-sectional view of the lens moving apparatus, taken along line G-H in FIG. 14;
FIG. 21D is a cross-sectional view of the lens moving apparatus, taken along line E-F in FIG. 14;
FIG. 21E is a cross-sectional view of the lens moving apparatus, taken along line I-J in FIG. 14;
FIG. 22A illustrates movement of an OIS moving unit caused by electromagnetic force acting on the first and second frames;
FIG. 22B is a perspective view of the coils, the magnets, and the first and second frames;
FIG. 22C is a perspective view of the coils, the magnets, the sliding members, and the position sensors;
FIG. 23 is a perspective view of the magnets and the sliding members;
FIG. 24 illustrates the attractive force acting between the magnets and the sliding members;
FIG. 25 illustrates the attractive force acting between the magnets and the sliding members;
FIG. 26 illustrates an assembly sequence of the lens moving apparatus according to an embodiment;
FIG. 27A is a perspective view of the seating portion of the bobbin and the sliding member according to another embodiment;
FIG. 27B is an enlarged view of the seating portion shown in FIG. 27A;
FIG. 27C is a plan view of the seating portion of the bobbin and the sliding member shown in FIG. 27A;
FIG. 28 is a plan view of the bobbin, the second frame, and the sliding member according to another embodiment;
FIG. 29 is a cross-sectional view of the lens moving apparatus according to another embodiment, taken in a direction perpendicular to the optical axis;
FIG. 30 illustrates another embodiment including an additional OIS yoke;
FIG. 31 is an exploded perspective view of a camera device according to an embodiment;
FIG. 32 is a perspective view of a portable terminal according to an embodiment; and
FIG. 33 is a view illustrating the configuration of the portable terminal illustrated in FIG. 32.

### [Best Mode]

Hereinafter, embodiments of the present invention capable of concretely achieving the above objects will be described with reference to the accompanying drawings.

In the following description of the embodiments, it will be understood that, when an element is referred to as being formed "on" or "under" another element, it can be directly "on" or "under" the other element, or can be indirectly disposed, with one or more intervening elements therebetween. In addition, it will also be understood that "on" or "under" the element may mean an upward direction or a downward direction based on the element.

In addition, relative terms such as, for example, "first", "second", "on/upper/above" and "beneath/lower/under", used in the following description may be used to distinguish any one substance or element from another substance or element without requiring or implying any physical or logical relationship or sequence between these substances or elements. The same reference numeral designates the same element throughout all of the drawings.

Unless otherwise defined, the terms "comprise," "include" or "have" used in the above description are used to designate the presence of features, steps or combinations thereof described in the specification, and should be understood so as not to exclude the presence or probability of additional inclusion of one or more different features, steps or combinations thereof.

Hereinafter, lens moving apparatuses according to embodiments of the present disclosure will be described with reference to the accompanying drawings. For the convenience of description, although the lens moving apparatus is described using a rectangular coordinate system (x, y, z), the lens moving apparatus may be described using some other coordinate systems, and the embodiments are not limited with regard thereto. In the respective drawings, the X-axis and the Y-axis mean directions perpendicular to an optical axis, i.e. the Z-axis, and the optical-axis OA direction or a direction parallel to the optical axis OA may be referred to as a "first direction", the X-axis direction may be referred to as a "second direction", and the Y-axis direction may be referred to as a "third direction".

An "auto-focusing device", which is applied to a subminiature camera module of a mobile device such as, for example, a smart phone or a tablet PC, is a device that automatically focuses an image of a subject on an image sensor surface. The auto-focusing device may be configured in various ways, and the lens moving apparatus according to an embodiment may move an optical module, which is constituted of at least one lens, in the first direction, so as to perform auto-focusing.

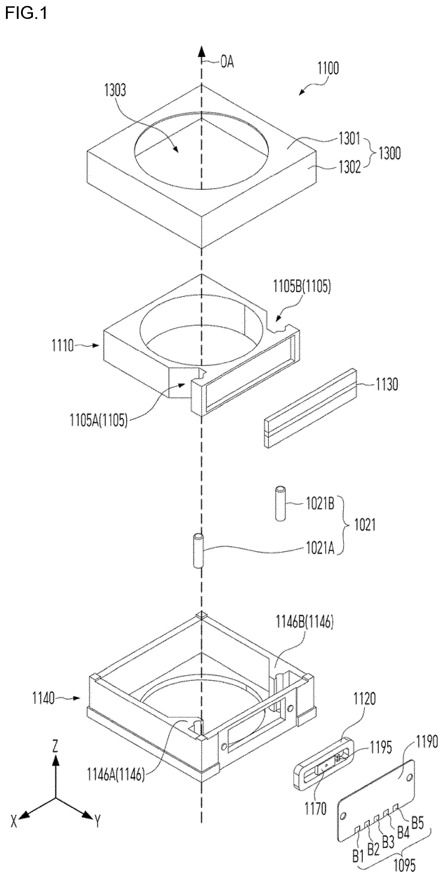

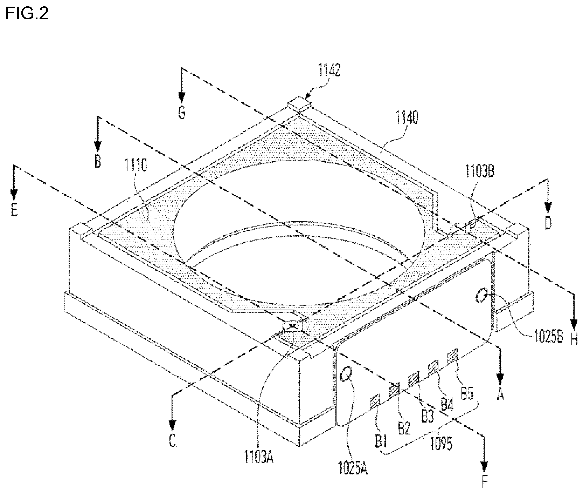

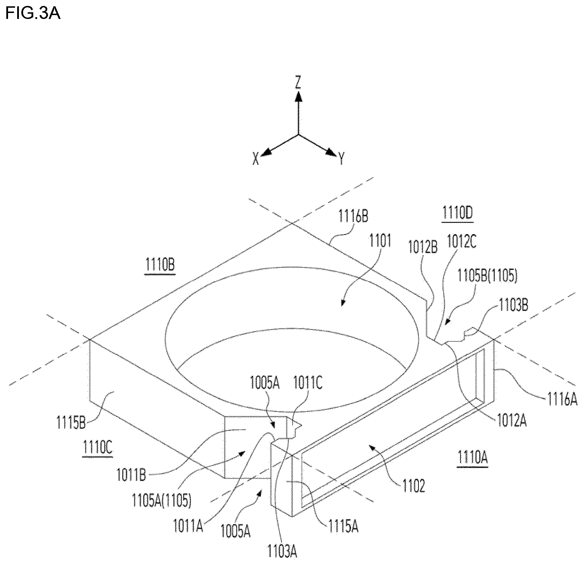

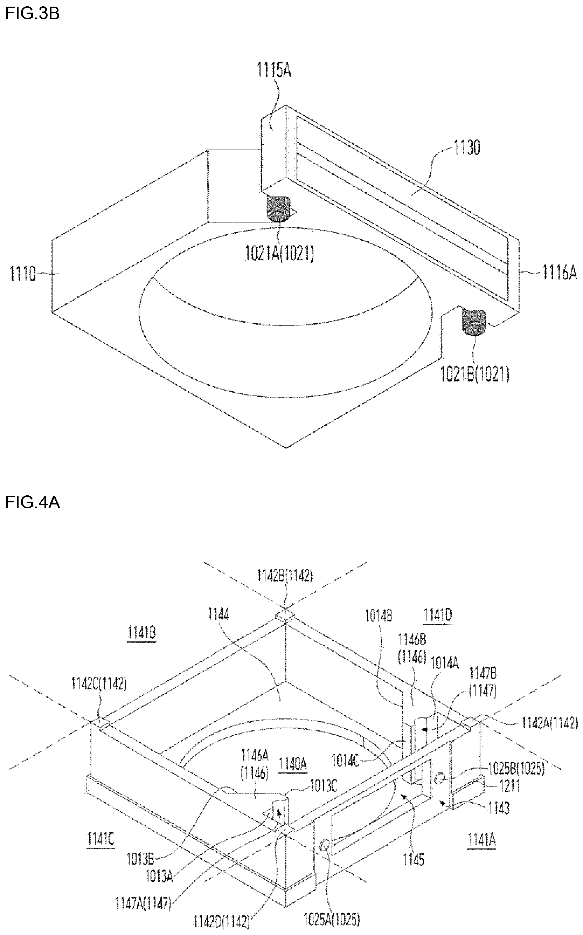

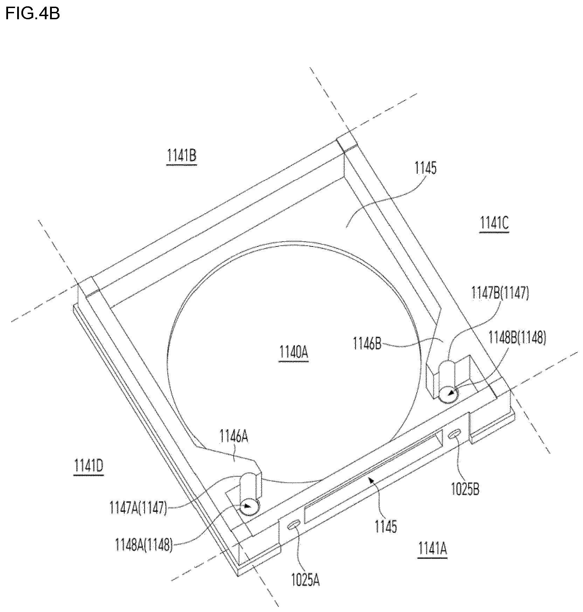

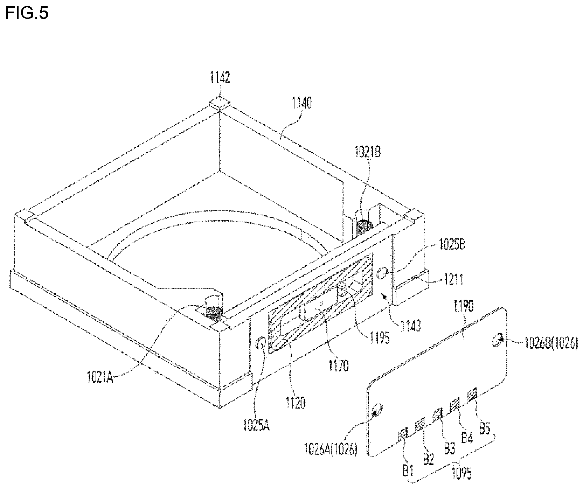

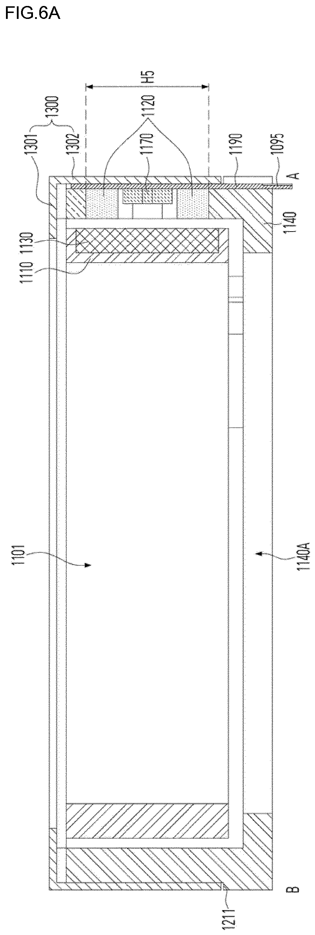

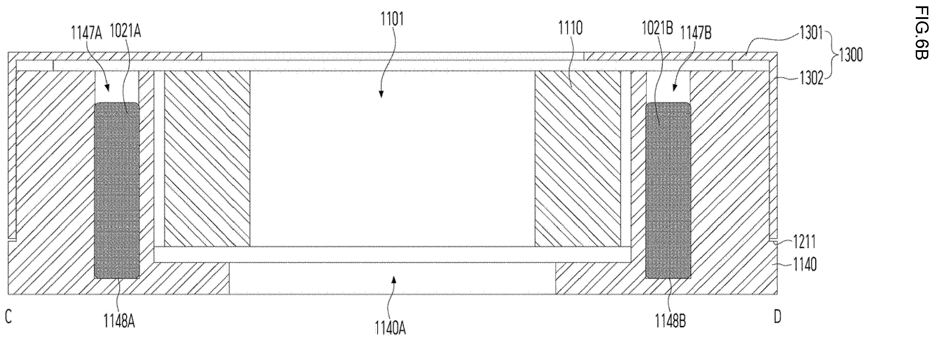

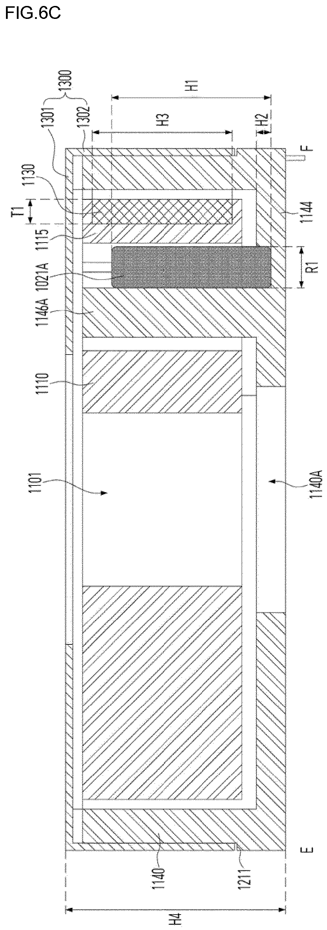

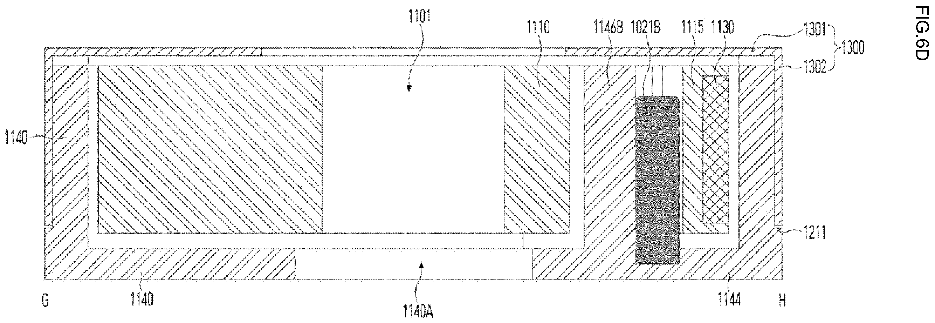

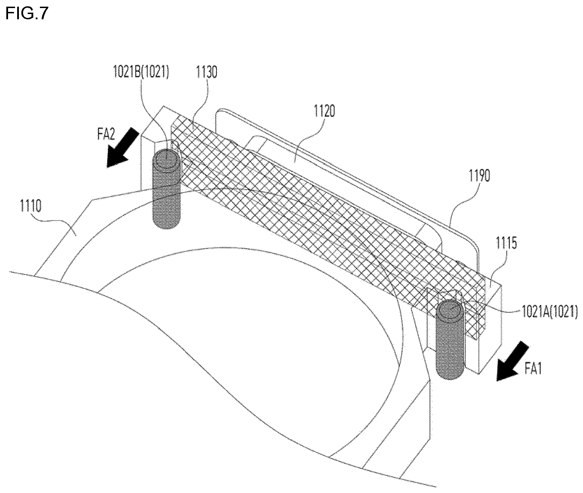

FIG. 1 is an exploded perspective view of a lens moving apparatus 1100 according to an embodiment. FIG. 2 is a perspective view of the lens moving apparatus 1100 from which a cover member 1300 is removed. FIG. 3A is a perspective view of a bobbin 1110. FIG. 3B is a perspective view of the bobbin 1110, a sliding member 1021, and a magnet 1130. FIG. 4A is a first perspective view of a housing 1140. FIG. 4B is a second perspective view of the housing 1140. FIG. 5 is a perspective view of the housing 1140, a coil 1120, a position sensor 1170, a capacitor 1195, and a circuit board 1190. FIG. 6A is a cross-sectional view of the lens moving apparatus 1100, taken along line A-B in FIG. 2. FIG. 6B is a cross-sectional view of the lens moving apparatus 1100, taken along line C-D in FIG. 2. FIG. 6C is a cross-sectional view of the lens moving apparatus 1100, taken along line E-F in FIG. 2. FIG. 6D is a cross-sectional view of the lens moving apparatus 1100, taken along line G-H in FIG. 2. FIG. 7 illustrates attractive forces FA1 and FA2 acting between the sliding member 1021 and the magnet 1130.

Referring to FIGs. 1 to 7, the lens moving apparatus 1100 may include the housing 1140, the bobbin 1110, the coil 1120, the magnet 1130, and the sliding member 1021.

The lens moving apparatus 1100 may further include a position sensor 1170 for AF feedback operation. In addition, the lens moving apparatus 1100 may further include a circuit board 1190, which is conductively connected to the position sensor 1170 in order to supply a drive signal to the position sensor 1170 and receive the output of the position sensor 1170. Furthermore, the lens moving apparatus 1100 may further include the capacitor 1195 electrically connected to the circuit board 1190. The lens moving apparatus 1100 may further include a cover member 1300 configured to accommodate the bobbin 1110 and the housing 1140 therein.

The bobbin 1110, which receives a lens or a lens barrel therein, may be disposed in the housing 1140. The bobbin 1110 may alternatively be referred to as a "lens holder" or a "lens carrier".

The bobbin 1110 may be movable in the optical axis direction. For example, by virtue of the electromagnetic interaction between the coil 1120 and the magnet 1130, the bobbin 1110 may be moved in the first direction (for example, in the Z-axis direction).

The bobbin 1110 may include a bore 101 for coupling with a lens module 1400. For example, the lens module 1400 may include at least one of the lens or the lens barrel. The shape of the bore 101 in the bobbin 1110 may coincide with the shape of the lens or the lens barrel mounted therein, and may have, for example, a circular shape, an elliptical shape, or a polygonal shape, without being limited thereto.

Although not illustrated in FIG. 1, the bobbin 1110 may include at least one stopper disposed on at least one of the upper surface or the lower surface thereof. The stopper of the bobbin 1110 may project in the first direction or in the upward direction (or in the downward direction) from the upper surface (or the lower surface) of the bobbin 1110 to prevent the upper surface of the bobbin 1110 from directly colliding with the inner surface of the upper plate 1301 of the cover member 1300 (or the lower portion of the housing 1140.

The bobbin 1110 may include a seating portion 1102 in which the magnet 1130 is seated. For example, the seating portion 1102 may be a groove depressed from the outer surface of the bobbin 1110.

The bobbin 1110 may include a plurality of lateral surfaces 1110A to 1110D or outer surfaces. For example, the bobbin 1110 may include a first lateral surface 1110A, a second lateral surface 1110B, a third lateral surface 1110C, and a fourth lateral surface 1110D.

For example, the second lateral surface 1110B may face the first lateral surface 1110A or may be positioned opposite the first lateral surface 1110A based on the optical axis OA. The third lateral surface 1110C and the fourth lateral surface 1110D may be positioned between the first lateral surface 1110A and the second lateral surface 1110B. The fourth lateral surface 1110D may face the third lateral surface 1110C or may be positioned opposite the third lateral surface 1110C based on the optical axis OA.

Although FIG. 3A illustrates the bobbin 1110 including four lateral surfaces, the bobbin 1110 may include three or more lateral surfaces in another embodiment. For example, the seating portion 1102 may be formed in the first lateral surface 1110A of the bobbin. For example, the lower portion of the seating portion 1102 may not be open but be closed at the lower surface of the bobbin 1110. Furthermore, the upper portion of the seating portion 1102 may not be open but be closed at the upper surface of the bobbin 1110. In another embodiment, for example, the seating portion 1102 may include an opening which is open at at least one of the upper surface or the lower surface of the bobbin 1110.

The bobbin 1110 may include a reception portion 1105 configured to receive a portion of the housing 1140 therein. For example, the bobbin 1110 may include one or more reception portions 1105A and 1105B positioned between the first lateral surface 1110A and the second lateral surface 1110B.

For example, the reception portion of the bobbin 1110 may receive the sliding member 1021 therein. For example, the sliding member 1021 may be disposed in the reception portion 1105 of the bobbin 1110.

For example, the bobbin 1110 may include a first reception portion 1105A configured to receive at least a portion of a first support 1146A of the housing 1140 therein, and a second reception portion 1105B configured to receive at least a portion of a second support 1146B of the housing 1140 therein.

For example, the first reception portion 1105A may be disposed or formed in the third lateral surface 1110C of the bobbin 1110, and the second reception portion 1105B may be disposed or formed in the fourth lateral surface 1110D of the bobbin 1110.

For example, the first reception portion 1105A may have the form of a groove depressed from the third lateral surface 1110C of the bobbin 1110. The second reception portion 1105B may have the form of a groove depressed from the fourth lateral surface 1110D of the bobbin 1110.

For example, the first reception portion 1105A (or the second reception portion 1105B) may include a first opening 1005A at the lower surface of the bobbin 1110. The first reception portion 1105A (or the second reception portion 1105B may include a second opening 1005B at the upper surface of the bobbin 1110. In another embodiment, at least one of the first opening 1005A or the second opening 1005B of the first reception portion 1105A (or the second reception portion 1105B).

Referring to FIG. 3A, for example, the first reception portion 1105A may include a first surface 1011A adjacent to or abutting a first region 1115A of the third lateral surface 1110C of the bobbin 1110, which is adjacent to or abuts one side (or an end) of the magnet 1130, a second surface 1011B positioned between the first 1011A and the second lateral surface 1110B, and a third surface 1011C positioned between the first surface 1011A and the second surface 1011B.

For example, the second surface 1011B may abut a second region 1115B of the third lateral surface 1110C of the bobbin 1110. For example, the second region 1115B may be a region of the third lateral surface 1110C of the bobbin 1110 which is adjacent to or abuts the second lateral surface 1110B of the bobbin 1110.

For example, the second surface 1011B may be a sloping surface which is inclined relative to the third lateral surface 1110C of the bobbin 1110. For example, the angle included between the second surface 1011B and the third surface 1011C may be an obtuse angle.

For example, the second reception portion 1105B may include a first surface 1012A adjacent to or abutting a first region 1116A of the fourth lateral surface 1110D of the bobbin 1110 which is adjacent to another side (or the other end) of the magnet 1130, a second surface 1012B positioned between the first surface 1012A and the second lateral surface 1110B, and a third surface 1012C positioned between the first surface 1012A and the second surface 1012B.

For example, the second surface 1012B may abut a second region 1116B of the fourth lateral surface 1110D of the bobbin 1110. For example, the second region 1116B may be a region of the fourth lateral surface 1110D of the bobbin 1110 which is adjacent to or abuts the second lateral surface 1110B of the bobbin 1110.

For example, the second surface 1012B may be a sloping surface which is inclined relative to the fourth lateral surface 1110D of the bobbin 1110. For example, the angle defined between the second surface 1012B and the third surface 1012C may be an obtuse angle. In another embodiment, the angle defined between the second surface 1012B and the third surface 1012C may be a right angle. In a further embodiment, the angle defined between the second surface 1012B and the third surface 1012C may be an acute angle.

For example, the first reception portion 1105A and the second reception portion 1105B may have shapes symmetrical with each other based on the optical axis.

An AF moving unit (or a moving body) may include at least one groove in which at least a portion of the sliding member 1021 is disposed or received.

For example, the bobbin 1110 may include one or more grooves 1103A and 1103B in which at least a portion of the sliding member 1021 is disposed, inserted or received. For example, the grooves 1103A and 1103B may alternatively be referred to as "reception grooves", "guide grooves", or "guide portions".

For example, the first reception portion 1105A may include a first groove 1103A in which at least a portion of the first sliding member 1021A is disposed or received. For example, the second reception portion 1105B may include a second groove 1103B in which at least a portion of the second sliding member 1021B is disposed or received.

For example, the first groove 1103A may be formed in the first surface 1011A of the first reception portion 1105A. For example, the first groove 1103A may have a shape depressed from the first surface 1011A of the first reception portion 1105A. For example, the first groove 1103A may include an opening at at least one of the upper surface or the lower surface of the bobbin 1110. In another embodiment, the upper portion of the first groove 1103A may not be open but be closed at the upper surface of the bobbin 1110. For example, when viewed from above, the shape of the groove 103A may be a triangular shape, a semicircular shape or a polygonal shape (for example, a quadrilateral shape or a pentagonal shape. Alternatively, for example, the first groove 1103A may have a V shape or a U shape.

For example, the second groove 1103B may be formed in the first surface 1012A of the second reception portion 1105B. For example, the second groove 1103B may have a shape depressed from the first surface 1012A of the second reception portion 1105B. For example, the second groove 1103B may include an opening at at least one of the upper surface or the lower surface of the bobbin 1110. The description of the first groove 1103A may be applied to the shape of the second groove 1103B with or without modification.

The magnet 1130 may be disposed on, coupled to or mounted to the bobbin 1110. For example, the magnet 1130 may be disposed or coupled to the first lateral surface 1110A of the bobbin 1110. For example, the magnet 1130 may be disposed in or coupled to the seating portion 1102 of the bobbin 1110.

The shape of the magnet 1130 may have a shape corresponding to the first lateral surface 1110A of the bobbin 1110, for example, a rectangular shape. In another embodiment, at least one of the two opposite ends of the magnet 1130 may be sloped.

The magnet 1130 may be a monopolar magnetized magnet or a bipolar magnet, which includes different polarities and an interface plane naturally formed between the different polarities. For example, the magnet 1130 may be a monopolar magnetized magnet or a bipolar magnet in which the N pole is separated from the S pole in the optical axis direction. In another embodiment, the magnet 1130 may be a monopolar magnetized magnet or a bipolar magnet in which the N pole is separated from the S pole in a direction perpendicular to the optical axis direction.

In a further embodiment, the magnet 1130 may also be a tetrapolar magnet or a bipolar magnetized magnet in order to increase electromagnetic force. For example, the magnet 1130 may include a first magnet including the N pole and the S pole, a second magnet including the S pole and the N pole, and a partition wall disposed between the first magnet and the second magnet. Here, the partition wall is a portion that is almost completely non-magnetic and which may include a zone having almost no polarity. The partition wall may be filled with air or a non-magnetic material, and may be referred to as a "neutral zone". For example, the first magnet and the second magnet may face each other in the optical axis direction, and may be oriented such that different polarities thereof face each other.

The housing 1140 may define a reception space for the bobbin 1110 in conjunction with the cover member 1300. For example, the housing 1140 may be coupled to the cover member 1300. The housing 1140 may alternatively be referred to as a "base".

At least a portion of the housing 1140 may be disposed in the cover member 1300, and may receive the bobbin 1110 therein. For example, the housing 1140 may support the sliding member 1021, the coil 1120, and the circuit board 1190.

The housing 1140 may include a cavity configured to receive the bobbin 1110 therein. Furthermore, the housing 1140 may include a bore 1140A corresponding to the bore101 in the bobbin 1110. For example, the bore 1140A may be a through-hole or a cavity through which at least a portion of the bobbin 1110 (or the lens module 1400) is exposed. For example, the bore 1140A may be positioned in the center or the central region of the housing 1140. For example, the bore 140A in the housing 1140 may be a through-hole or a cavity that is formed through the housing 1140 in the optical axis direction.

Although the bore 140A in the housing 1140 may have a shape corresponding to the shape of the bobbin 1110, for example, a polygonal shape (for example, a quadrilateral shape or an octagonal shape) or a circular shape (or an elliptical shape), the disclosure is not limited thereto. The bore 1201 in the housing 1140 may have various shapes.

The housing 140 may include a plurality of side portions 141A to 141D. The housing 140 may include a corner positioned between two adjacent side portions.

The housing 1140 may include a first lateral portion 1141A, which corresponds to or is opposed to the first lateral surface 1110A of the bobbin 1110, a second lateral portion 1141B, which corresponds to or is opposed to the second lateral surface 1110B of the bobbin 1110, a third lateral portion 1141C, which corresponds to or is opposed to the third lateral surface 1110C of the bobbin 1110, and a fourth lateral portion 1141D, which corresponds to or is opposed to the fourth lateral surface 1110D of the bobbin 1110.

The first lateral portion 1141A (or the first lateral surface or the first outer surface) of the housing 1140 may be positioned opposite the second lateral portion 1141B (or the second lateral surface or the second outer surface) of the housing 1140, and the third lateral portion 1141C (or the third lateral surface or the third outer surface) of the housing 1140 may be positioned opposite the fourth lateral portion 1141D (or the fourth lateral surface or the fourth outer surface) of the housing 1140.

Each of the first to fourth lateral portions 1141A to 1141D of the housing 1140 may be disposed parallel to a corresponding one of the lateral plates 1302 of the cover member 1300.

The housing 1140 may include a seating portion 1145 in which the coil 1120 is disposed. For example, the seating portion 1145 may be disposed or formed in the first lateral portion 1141A of the housing 1140. For example, the seating portion 1145 may be a through-hole which is formed through the first lateral portion 1141A.

Because the seating portion 1145 has the form of a through-hole, a portion of the housing 1140 may not be disposed between the coil 1120 and the magnet 1130, thereby increasing the electromagnetic force between the magnet 1130 and the coil 1120. Furthermore, because a portion of the housing 1140 is not disposed between the position sensor 1170 and the magnet 1130, it is possible to increase the output of the position sensor 1170 and to improve the sensitivity of the position sensor 1170.

In another embodiment, the seating portion 1145 may have the form of a groove which is depressed from the outer surface

(or the inner surface) of the first lateral portion 1141A of the housing 1140.

The housing 1140 may include a seating portion 1143 in which the circuit board 1190 is disposed or seated. For example, the seating portion 1143 may be a groove depressed from the first lateral portion 1141A (or the first lateral surface of the first outer surface) of the housing 1140, and may include an opening at at least one of the upper surface or the lower surface of the housing 1140. For example, the seating portion 1145 may be formed in the bottom surface of the groove of the seating portion 1143 of the housing 1140.

The housing 1140 may include at least one protrusion 1025 which is to be coupled to the circuit board 1190. For example, the at least one protrusion 1025 may be disposed on the bottom surface of the groove in the seating portion 1143 or may project from the bottom surface of the groove.

The circuit board 1190 may include a hole 1026 to which at least one protrusion 1025 is coupled. For example, the hole 1026 may be a through-hole. For example, the housing 1140 may include two protrusions 1025A and 1025B, and the circuit board 1190 may include two holes 1026A and 1026B which are to be coupled to the two protrusions 1025A and 1025B.

The housing 1140 may include a step 1211 disposed on a lower portion of at least one of the lateral portions 1141A to 1141D of the housing 1140. For example, the step 1211 may project from the outer surfaces of the lateral portions 1141A to 1141D of the housing 1140 in a direction perpendicular to the optical axis.

For example, the step 1211 may be coupled to the lower end of the lateral plate 1302 of the cover member 1300. For example, the step 1211 of the housing 1140 and the lower end of the lateral plate 1302 of the cover member 1300 may be bonded or sealed to each other using an adhesive or a sealing member.

The housing 1140 may include at least one stopper 1142 which projects from the upper surface thereof. For example, the stopper 1142 may project from a region of the upper surface of the housing 1140 which is adjacent to or abuts the corner of the housing 1140.

For example, the housing 1140 may include four stoppers 142A to 142D which are adjacent to or abut the four corners thereof. In another embodiment, the housing 1140 may include two or more stoppers.

The housing 1140 may include a support 1146 configured to hold or support the sliding member 1021. The support 1146 may be disposed in the reception portion 1105 of the bobbin 1110. The support 1146 may alternatively be referred to as a "holding portion", a "projecting portion", or a "protrusion". The support 1146 may project from the inner surface (or the internal surface) of the lateral portion of the housing 1140.

For example, the housing 1140 may include a first support 1146A disposed on the inner surface (or the internal surface) of the third lateral portion 1141C and a second support 1146B disposed on the inner surface (or the internal surface) of the fourth lateral portion 1141D.

For example, the first support 1146A may project toward the fourth lateral portion 1141D of the housing 1140, and the second support 1146B may project toward the third lateral portion 1141C of the housing 1140.

Referring to FIG. 4A, the first support 1146A may include a first surface 1013A which corresponds to or is opposed to the first surface 1011A of the first seating portion 1105A of the bobbin 1110, a second surface 1013B which corresponds to or is opposed to the second surface 1011B of the first seating portion 1105A of the bobbin 1110, and a third surface 1013C which corresponds to or is opposed to the third surface 1011C of the first seating portion 1105A of the bobbin 1110.

The second support 1146B may include a first surface 1014A which corresponds to or is opposed to the first surface 1012A of the second seating portion 105B of the bobbin 1110, a second surface 1014B which corresponds to or is opposed to the second surface 1012B of the second seating portion 105B of the bobbin 1110, and a third surface 1014C which corresponds to or is opposed to the third surface 1012C of the second seating portion 105B of the bobbin 1110.

The sliding member 1021 may be disposed between the first surfaces 1011A and 1012A of the seating portion 1105 of the bobbin 1110 and the first surfaces 1013A and 1014A of the support 1146 of the housing 1140. The sliding member 1021 may be coupled to the housing 1140 or may be fixed to the housing 1140.

For example, the sliding member 1021 may be coupled or fixed to the support 1146 of the housing 1140. For example, the sliding member 1021 may be coupled or fixed to the first surfaces 1013A and 1014A of the support 1146 of the housing 1140. For example, the sliding member 1021 may be coupled or fixed to the first surfaces 1013A and 1024A of the support 1146 of the housing 1140 by means of an adhesive.

For example, the support 1146 of the housing 1140 may include a groove 1147 which is to be coupled or fixed to at least one other portion of the sliding member 1021. The at least other portion of the sliding member 1021 may be disposed in the groove 1147. The groove 1147 may increase the contact area with the sliding member 1021, thus increasing the coupling force between the sliding member 1021 and the housing 1140 and firmly holding the sliding member 1021 to the housing 1140.

At least a portion of the sliding member 1021 may project outwards beyond the groove 1147 of the support 1146 of the housing 1140 and may come into contact with the bobbin 1110. For example, at least a portion of the sliding member 1021 may project outwards beyond the groove 1137 of the support 1146 of the housing 1140, and may be disposed in the groove 1103 in the bobbin 1110 so as to contact at least a portion of the groove 1103.

The contact area between the sliding member 1021 and the groove 1103 in the bobbin 1110 may be decided according to the shape of the groove 1103 of the bobbin 1110. For example, when the groove 1103 in the bobbin 1110 has a "V" shape, the V-shaped inner surface (for example, two surfaces) of the groove 1103 of the bobbin 1110 may be in contact with the sliding member 1021.

For example, the groove 1147 may be disposed or formed in the first surfaces 1103A and 1014A of the support 1146. For example, the grooves 1147A and 1147B may be formed in the first surfaces 1013A and 1013B of the first and second supports 1146A and 1146B.

For example, the groove 1147 may extend to the upper surface of the housing 1140 or may abut the upper surface of the housing 1140. Furthermore, for example, the groove 1147 may extend to the inner surface of the lower portion 1144 of the housing 1140 or may extend to the lower portion 1144 of the housing 1140.

Referring to FIGs. 4B, 6B and 6C, in order to allow a portion of the sliding member 1021 to be inserted into, disposed on or coupled to the housing 1140, the housing 1140 may include a groove 1148 formed in the lower portion 1144 thereof. The groove 1148 may be formed in the inner surface (or the upper surface) of the lower portion 1144 of the housing 1140.

The lower portion 1144 of the housing 1140 may be connected to the lower portions or the lower ends of the lateral portions 1141A to 1141D of the housing 1140. For example, the bore 1140A in the housing 1140 may be formed in the lower portion 1144 of the housing 1140.

The length H2 in the optical axis direction of the portion of the sliding member 1021 that is inserted or disposed in the groove 1148 in the housing 1140 may range from 5% to 40% of the entire length H1 in the optical axis direction of the sliding member 1021. For example, the length H2 may range from 10% to 30% of the length H1. In another embodiment, the length H2 may range from 10% to 20% of the length H1. When the length H2 is less than 5% of the length H1, the coupling force between the sliding member 1021 and the housing 1140 may be lowered. Meanwhile, when the length H2 exceeds 40% of the length H1, the size of the lens moving apparatus in the optical axis direction may excessively increase.

The coil 1120 may move the AF moving unit in the optical axis direction by virtue of the interaction between the coil 1120 and the magnet 1130. For example, the AF moving unit may include the bobbin 1110. For example, the AF moving unit may include the bobbin 1110 and a component coupled or mounted to the bobbin 1110. For example, the AF moving unit may include the bobbin 1110 and the magnet 1130. Alternatively, the AF moving unit may include the lens module 1400 coupled or mounted to the bobbin 1110.

The coil 1120 may be disposed on the housing 1140. For example, the coil 1120 may be disposed on the housing 1140 so as to correspond to, face or overlap the magnet 1130. For example, the coil 1120 may be disposed on the first lateral portion 1141A of the housing 130.

Referring to FIGs. 4A and 5, the coil 1120 may be disposed on the seating portion 1145 of the housing 1140.

The circuit board 1190 may be disposed on, coupled to or fixed to the housing 1140. For example, the circuit board 1190 may be disposed on or coupled to the first lateral portion 1141A of the housing 1140.

For example, the circuit board 1190 may be disposed on the seating portion 1143 of the housing 1140.

The circuit board 1190 may be electrically connected to the coil 1120. For example, the coil 1120 may be electrically connected to the coil 1120 using a conductive adhesive or a solder.

For example, the coil 1120 may be disposed on, mounted on or fixed to the circuit board 1190 so as to correspond to or face the magnet 1130. For example, the coil 1120 may be disposed on, coupled to or fixed to the first surface of the circuit board 1190. For example, the first surface of the circuit board 1190 may be a surface that faces or is opposed to the outer circumferential surface of the bobbin 1110.

The circuit board 1190 may include at least one terminal 1095. For example, the circuit board 1190 may include a plurality of terminals B1 to B5. For example, the plurality of terminals B1 to B5 may be disposed on the second surface of the circuit board 1190. For example, the second surface of the circuit board 1190 may be the face opposite the first surface of the circuit board 1190. For example, the circuit board 1190 may be a printed circuit board or a flexible printed circuit board.

For example, the coil 1120 may include a cavity. For example, the coil 1120 may have the form of a ring. For example, the coil 1120 may have the form of a ring which is wound around a line perpendicular to the optical axis OA and perpendicular to the outer surface of the first lateral portion 1141A of the housing 1140. For example, the coil 1120 may have the form of a ring in which a length in a horizontal direction (or in the second direction) is longer than the length in a vertical direction (or in the optical axis direction).

In another embodiment, the coil 1120 may be formed on the circuit board 1190 in the form of an FP (fine pitch) coil.

In order to create electromagnetic force resulting from the electromagnetic interaction between the magnet 1130 and the coil 1120, a drive signal may be applied to the coil 1120. Here, the drive signal applied to the coil 120 may be a DC signal, and may be a voltage type or a current type. For example, the drive signal applied to the coil 120 may include at least one of a DC signal and an AC signal.

The coil 120, to which the drive signal is applied, may electromagnetically interact with the magnet 130 disposed at the bobbin 110, and an AF operation unit may be moved in the first direction by means of the electromagnetic force resulting from the electromagnetic interaction between the coil 120 and the magnet 130. By controlling the intensity and/or direction of the drive signal (for example, drive current), it is possible to control movement of the AF operation unit in the first direction and thus to perform an autofocus function.

The position sensor 1170 may detect the magnet 1130 disposed on the bobbin 1110. For example, the position sensor 1170 may detect displacement or position of the bobbin 1110 in the optical axis direction.

For example, the position sensor 1170 may be disposed on the housing 1140. For example, the position sensor 1170 may be disposed on the first lateral portion 1141A of the housing 1140. For example, the position sensor 1170 may be disposed in the seating portion 1145 of the housing 1140. For example, the position sensor 1170 may be disposed in the cavity in the coil 1120. In another embodiment, the position sensor 1170 may be disposed outside the cavity in the coil 1120.

For example, the position sensor 1170 may be coupled to the circuit board 1190 using a conductive adhesive or a solder. For example, the position sensor 1170 may be electrically connected to the circuit board 1190. For example, the position sensor 1170 may be disposed on the first surface of the circuit board 1190. For example, the position sensor 1170 may be coupled to the first surface of the circuit board 1190.

For example, the position sensor 1170 may correspond to, face or overlap the magnet 1130 in a direction perpendicular to the optical axis.

For example, the position sensor 1170 may detect the intensity of a magnetic field of the magnet 130 mounted on the bobbin 110 according to the movement of the bobbin 110, and may output an output signal corresponding to the detected intensity.

The position sensor 1170 may be embodied as a drive IC type including a hall sensor, or may be embodied as only a single location detection sensor such as a hall sensor or the like.

For example, in the case in which the position sensor 1170 is a driver IC including a Hall sensor, the position sensor 1170 may transmit and receive data to and from the outside through data communication using a protocol, for example, I2C communication.

For example, in the case in which the position sensor 1170 is a driver IC including a Hall sensor, the position sensor 1170 may include first and second terminals to which power or a drive signal is input, a third terminal for a clock signal, a fourth terminal for a data signal, and fifth and sixth terminals for supply of a drive signal to the coil 1120.

Here, each of the first to fourth terminals of the first position sensor 1170 may be electrically connected to a corresponding one of the first to fourth terminals B1 to B4 of the circuit board 1190. Furthermore, the fifth and sixth terminals of the position sensor 1170 may be electrically connected to the first coil 1120. For example, the fifth terminal of the position sensor 1170 may be electrically connected to one end of the coil 1120, and the sixth terminal of the position sensor 1170 may be electrically connected to the other end of the coil 1120.

In an embodiment in which the position sensor 1170 is embodied as a Hall sensor alone, the position sensor 1170 may include two input terminals and two output terminals. In this case, the circuit board 1190 may include four terminals, which are electrically connected to two input terminals and two output terminals of the position sensor 1170, and two terminals electrically connected to the coil 1120. Although FIG. 5 illustrates five terminals, the circuit board 1190 may include six terminals in an embodiment in which the position sensor 1170 is embodied as a Hall sensor alone.

The capacitor 1195 may be disposed on the housing 1140. For example, the capacitor 1195 may be disposed on the first lateral portion 140A of the housing 1140. For example, the capacitor 1195 may be disposed in the seating portion 1145 of the housing 1140. For example, the capacitor 1195 may be disposed in the cavity in the coil 1120.

The capacitor 1195 may be disposed on or coupled to the first surface of the circuit board 1190. The capacitor 1195 may be configured to have a chip shape. The chip may include a first terminal, which corresponds to one end of the capacitor 1195, and a second terminal, which corresponds to the other end of the capacitor 1195. The capacitor 1195 may alternatively be referred to as a "capacitive element" or "condenser".

The capacitor 1195 may be electrically connected in parallel to first and second terminals (for example, B1 and B2) of the circuit board 1190 through which power (or a drive signal) is supplied to the position sensor 1170 from the outside. Alternatively, the capacitor 1195 may be electrically connected in parallel to the first and second terminals of the first position sensor 1170, to which power or a drive signal is supplied.

Since the capacitor 1195 is electrically connected in parallel to the first and second terminals of the position sensor 1170 or the first and second terminals of the circuit board 1190, the capacitor 1195 is capable of serving as a smoothing circuit for eliminating ripple components included in the power which is supplied to the first position sensor 1170 from the outside, and is thus capable of supplying stable and consistent power signals to the first position sensor 1170.

The cover member 1300 may define a reception space in conjunction with the housing 1140 to receive the bobbin 1110 and the housing 1140 therein.

The cover member 1300 may have the form of a box which is open at the lower portion thereof. The lower end of the side plate 1302 of the cover member 1300 may be coupled to the housing 1140. The upper plate 1301 of the cover member 1300 may have a polygonal shape, for example, a quadrilateral shape or an octagonal shape. The upper plate 1301 of the cover member 1300 may have formed therein a bore 1303 through which the lens module 1400 coupled to the bobbin 1110 is exposed to external light.

The sliding member 1021 may be disposed between the bobbin 1110 and the housing 1140.

At least a portion of the sliding member 1021 may be coupled or fixed to the housing 1140. For example, at least a portion of the sliding member 1021 may be coupled or fixed to the support 1146 of the housing 1140 using an adhesive. Furthermore, for example, at least a portion of the sliding member 1021 may be coupled or fixed to the groove 1147 in the housing 1140 using an adhesive.

Referring to FIG. 5, for example, the upper end or the upper surface of the sliding member 1021 coupled or fixed to the housing 1140 (for example, the support 1146) may be positioned lower than the upper surface or the upper end of the housing 1140 (for example, the support 1146).

Furthermore, for example, the upper end or the upper surface of the sliding member 1021 coupled or fixed to the housing 1140 (for example, the support 1146) may be positioned at a level equal to or lower than the upper surface or the upper end of the coil 1120.

Furthermore, for example, when the lateral portion 1141A of the housing 1140 is viewed from the front, the coil 1120 may be disposed between the first shaft member 1021A and the second shaft member 1021B. Furthermore, for example, when the lateral portion 141A of the housing 1140 is viewed from the front, at least a portion of the magnet 1130 may be disposed between the first shaft member 1021A and the second shaft member 1021B.

Furthermore, for example, when the lateral portion 1141A of the housing 1140 is viewed from the front, at least a portion of the coil 1120 may be disposed between the upper end of the sliding member 1021 and the lower end of the sliding member.

The sliding member 1021 may support the bobbin 1110 with respect to the housing 1140 such that the bobbin 1110 is movable in the optical axis direction. For example, the bobbin 1110 may be pressed by the sliding member 1021. Furthermore, for example, the bobbin 1110 may be maintained in the state of being in contact with the sliding member 1021 by virtue of the interaction between the sliding member 1021 and the magnet 1130.

The sliding member 1021 may alternatively be referred to as a "shaft", a "shaft member", a "support member", a "pin member", a "pin", or a "rod member". For example, the sliding member 1021 may be a member in which the length H1 thereof in the optical axis direction is greater than the length R1 thereof in a direction perpendicular to the optical axis. For example, in order to reduce frictional force of the sliding member 1021, the outer circumferential surface of the sliding member 1021 may be rounded. For example, the cross section of the sliding member 1021, taken in a direction perpendicular to the optical axis, may have a circular shape or an elliptical shape.

For example, the sliding member 1021 may include two shaft members 21A and 21B. In another embodiment, the sliding member 1021 may include one shaft member. In a further embodiment, the sliding member 1021 may include three or more shaft members.

At least a portion of the bobbin 1110 may come into contact with at least one other portion of the sliding member 1021. For example, at least a portion of the bobbin 1110 may come into contact with at least one other portion of the sliding member 1021.

For example, at least a portion of the bobbin 1110 may come into contact with at least a portion of the first shaft member 1021A, and at least one other portion of the bobbin 1110 may come into contact with at least a portion of the second shaft member 1021B. Accordingly, the bobbin 1110 may come into contact with the first and second shaft members 1021A and 1021B at two lines.

For example, the reception portion 1105 of the bobbin 1110 may come into contact with at least one other portion of the sliding member 1021. For example, the first surface 1011A or 1012A of the reception portion 1105 of the bobbin 1110 may come into contact with at least one other portion of the sliding member 12.

The bobbin 1110 may be slidable along the sliding member 1021 in the optical axis direction. Furthermore, the bobbin 1110 may be movable in the optical axis direction in the state of contacting the sliding member 1021 or of being in contact with the sliding member 1021. Here, the sliding member 1021 may support the bobbin 1110 such that the bobbin 1110 is movable in the optical axis direction.

In order to reduce the frictional force between the bobbin 1110 and the sliding member 1021, a lubricant may be disposed between the bobbin 1110 and the sliding member 1021. For example, although the lubricant may be a grease-based lubricant, for example, SDM (steel dust meter)-378 grease, the present disclosure is not limited thereto.

For example, the lubricant may be disposed between the reception portion 1105 of the bobbin 1110 and the sliding member 1021. Alternatively, for example, the lubricant may be disposed between the grooves 1103A and 1103B in the reception portion 1105 and the sliding member 1021. By virtue of the lubricant, the bobbin 1110 may be smoothly slidable along the sliding member 1021.

The sliding member 1021 may be a magnetic body or may include a magnetic body. The magnetic body may be a ferromagnetic material. For example, the sliding member 1021 may be a metal material (for example, iron) having magnetism or may include a metal material (for example, iron) having magnetism.

For example, attractive force may act between the sliding member 1021 and the magnet 1130. For example, due to the attractive force acting between the sliding member 1021 and the magnet 1130, the bobbin 1110 may be in close contact with the sliding member 1021, and a predetermined force is applied to the sliding member 1021, with the result that the sliding member 1021 is able to support the bobbin 1110 by virtue of the predetermined force.

Referring to FIG. 7, attractive force is generated between the sliding member 1021 fixed to the housing 1140 and the magnet 1130 coupled to the bobbin 1110, and the sliding member 1021, which is positioned between the bobbin 1110 and the housing 1140, may be pressed by the bobbin 1110 and the housing 1140. Consequently, the sliding member 1021 is able to stably support the bobbin 1110 with respect to the housing 1140.

For example, attractive force FA1 may be generated between the first shaft member 1021A of the sliding member 1021 and one end (or a first end) of the magnet 1130, and attractive force FA2 may be generated between the second shaft member 1021B of the sliding member 1021 and the other end (or a second end) of the magnet 1130.

By virtue of the electromagnetic force resulting from the interaction between the coil 1120 and the magnet 1130, the bobbin 1110 is able to slide or be slidably moved along the sliding member 1021 in the first direction.

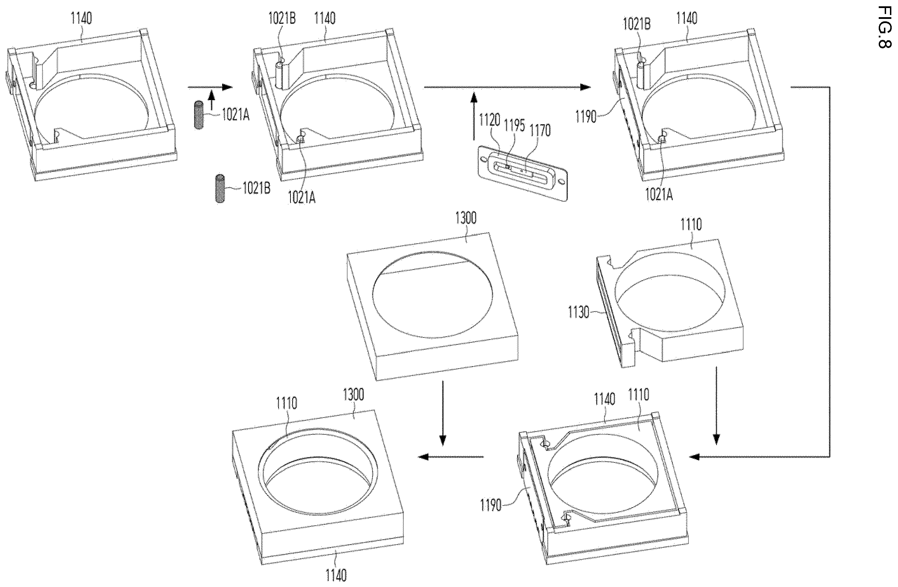

FIG. 8 illustrates the assembly sequence of the lens moving apparatus 1100 according to an embodiment. Referring to FIG. 8, the housing 1140 and the sliding member 21A and 21B are coupled to each other using an adhesive. Thereafter, the coil 1120, the position sensor 1170, and the capacitor 1195 are coupled to the circuit board 1190 using a conductive adhesive or a solder. Subsequently, the circuit board 1190 is coupled to the housing 1140 using an adhesive.

Subsequently, the magnet 1130 and the bobbin 1110 are coupled to each other using an adhesive. The bobbin 1110 is disposed in the housing 1140. Thereafter, the cover member 1300 and the housing 1140 are coupled to each other using an adhesive.

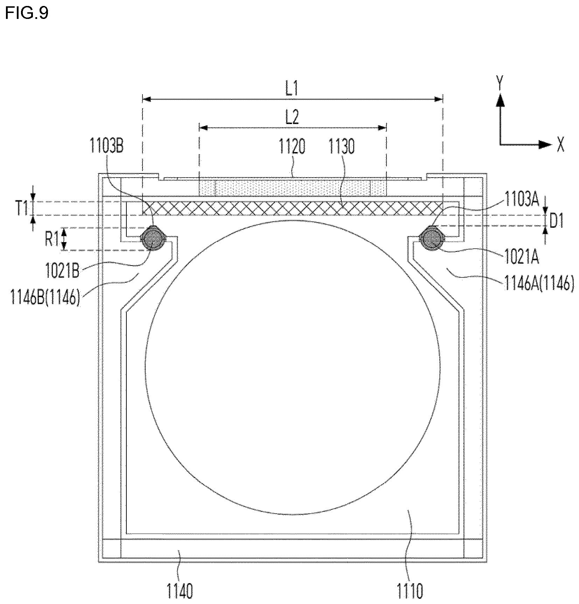

FIG. 9 is a plan view of the housing 1140, the sliding member 1021, the magnet 1130, and the coil 1120. Referring to FIG. 9, the coil 1120 and the magnet 1130 may correspond to, face or overlap each other in the third direction (in the Y-axis direction). For example, the third direction may be a direction which is perpendicular to the optical axis (or the optical axis direction) and is directed toward the second lateral surface 1110B from the first lateral surface 1141A. Furthermore, the third direction may be a direction which is perpendicular to the optical axis (or the optical axis direction) and in which the magnet 1130 and the coil 1120 face each other.

The sliding member 1021 may be disposed between at least a portion of the bobbin 1110 and at least a portion of the housing 1140, for example, the support 1146.

For example, the sliding member 1021 may be disposed between the magnet 1130 and at least a portion of the housing 1140 (for example, the support 1146).

At least a portion of the sliding member 1021 may correspond to, face or overlap the magnet 1130 in the third direction. At least a portion of the sliding member 1021 may correspond to, face or overlap at least a portion of the housing 1140 (for example, the support 1146) in the third direction.

At least a portion of the sliding member 1021 may correspond to, face or overlap the magnet 1130 in a direction in which the coil 1120 and the magnet 1130 face each other. For example, at least a portion of the sliding member 1021 may correspond to, face or overlap at least a portion of the housing 1140 (for example, the support 1146) in a direction in which the coil 1120 and the magnet 1130 face each other.

For example, at least a portion of the sliding member 1021 may correspond to, face or overlap the magnet 1130 in a direction which is directed to one lateral surface of the housing 1140 on which the magnet 1130 is disposed from one lateral surface of the bobbin 1110 on which the coil 1120 is disposed.

For example, the first shaft member 1021A may be disposed between one end (or the first end) of the magnet 1130 and the first support 1146A. For example, the first shaft member 1021A may correspond to, face or overlap one end (or the first end) of the magnet 1130 in the third direction. For example, the first shaft member 1021A may correspond to, face or overlap the first support 1146A of the housing 1140 in the third direction.

For example, the second shaft member 1021B may be disposed between the other end (or the second end) of the magnet 1130 and the second support 1146B. For example, the second shaft member 1021B may correspond to, face or overlap the other end (or the second end) of the magnet 1130 in the third direction. For example, the second shaft member 1021B may correspond to, face or overlap the second support 1146B of the housing 1140 in the third direction.

In FIG. 9, among the grooves 1103A and 1103B in the bobbin 1110 and the support 1146 of the housing 1140 (or the sliding member 1021), the grooves 1103A and 1103B in the bobbin 1110 may be disposed closer to the first lateral portion 1141a of the housing 1140.

In another embodiment, among the grooves in the bobbin 1110 and the support of the housing (or the sliding member 1021), the support of the housing 1140 (or the sliding member 1021) may be disposed closer to the first lateral portion 1141A of the housing 1140. In other words, in another embodiment, the grooves 1103A and 1103B may be formed in the first lateral surface of the bobbin 10, and the sliding member 1021 may be coupled to the second surfaces 1013B and 1014B of the supports of the housing 1140.

For example, the sliding member 1021 may not overlap the coil 1120 in the third direction. In another embodiment, at least a portion of the sliding member 1021 may overlap the coil 1120 in the third direction.

The length L1 of the magnet 1130 in the second direction (for example, in the X-axis direction) may be greater than the length L2 of the coil 1120 in the second direction. For example, the second direction may be a direction which is perpendicular to the optical axis (or the optical axis direction) and which is directed toward the fourth lateral surface 1110D from the third lateral surface 1110C of the bobbin 1110. For example, the second direction may be a direction which is perpendicular to the optical axis and which is directed toward the fourth lateral portion 1141D from the third lateral portion 1141C of the housing 1140. In another embodiment, the length L1 and the length L2 may be equal to each other.

For example, the length L1 of the magnet 1130 in the second direction (for example, in the X-axis direction) may be greater than the distance (or the shortest distance) between the first shaft member 1021A and the second shaft member 1021A. In other words, the magnet 1130 may be greater than the distance between the first shaft member 1021A and the second shaft member 1021A or may extend longer than the distance.

Alternatively, for example, at least a portion of the sliding member 1021 may be disposed between the one end and the other end of the magnet 1130.

For example, the distance D1 between the magnet 1130 and the sliding member 1021 in the third direction may be greater than the half of the thickness T1 of the magnet 1130 (D1 > T1/2) . For example, the distance D1 may be the shortest distance between the magnet 1130 and the sliding member 1021 in the third direction. The thickness T1 of the magnet 1130 may be the length of the magnet 1130 in the third direction.

Furthermore, for example, the distance D1 between the magnet 1130 and the sliding member 1021 in the third direction may be less than 3 times the thickness T1 of the magnet 1130 (D1 < 3T1). In another embodiment, the distance D1 may be equal to or greater than the thickness T1 but be less than twice the thickness T1. In a further embodiment, the distance D1 may be equal to or greater than 1.5 times the thickness T1 but be less than twice the thickness T1.

When the distance D1 is equal to or less than the half of the thickness T1, the distance between the sliding member 1021 and the magnet 1130 is excessively little, and thus the attractive force between the sliding member 1021 and the magnet 1130 is excessively high, thus making it difficult to easily move the bobbin 1110 in the optical axis direction. In other words, moving the bobbin 1110 in the optical axis direction may require high force and increased power consumption.

When the distance D1 is three times the thickness T1, the distance between the sliding member 1021 and the magnet 1130 is excessively great, and thus the attractive force between the sliding member 1021 and the magnet 1130 is excessively low, with the result that the sliding member 1021 is incapable of stably supporting the bobbin 1110.

The diameter R1 of the sliding member 1021 may be equal to or greater than the half of the stroke of the bobbin 1110 in the optical axis direction but be equal to or less than twice the stroke of the bobbin 1110 in the optical axis direction. In another embodiment, for example, the diameter R1 may be equal to or greater than the half of the stroke of the bobbin 1110 in the optical axis direction but be equal to or less than 1.5 times the stroke of the bobbin 1110 in the optical axis direction. For example, the stroke of the bobbin 1110 in the optical axis direction may be the distance between the highest point and the lowest point of the bobbin 1110. Furthermore, for example, the stroke of the bobbin 1110 in the optical axis direction may be the distance between the highest position and the lowest position between which the bobbin 1110 is physically movable.

The diameter R1 of the sliding member 1021 may range from 0.4 mm to 2 mm. In another embodiment, the diameter R1 of the sliding member 1021 may range from 0.6 mm to 1.5 mm. In a further embodiment, the diameter R1 of the sliding member 1021 may range from 0.7 mm to 1 mm. When the diameter R1 is less than 0.4 mm, the diameter is excessively small, thereby making it impossible to stably support the bobbin 1110. When the diameter R1 exceeds 2 mm, the diameter of the sliding member 1021 is excessively large, and thus the size of the lens moving apparatus in a direction perpendicular to the optical axis may increase.

For example, the stroke (or the movable distance) of the bobbin 1110 in the optical axis direction may be equal to or greater than 12% of the length H1 of the sliding member 1021 in the optical axis direction but be equal to or less than 50% of the length H1. When the stroke (or the movable distance) of the bobbin 1110 in the optical axis direction is less than 12% of the length H1, the length of the sliding member 1021 may be unnecessarily or unintentionally increased, compared to the stroke of the bobbin 1110, and thus the weight of the lens moving apparatus may be unnecessarily or unintentionally increased.

When the stroke (or the movable distance) of the bobbin 1110 in the optical axis direction exceeds 50% of the length H1, the length H1 is too small to stably support the bobbin 1110, and thus reliability of AF operation may be deteriorated. In another embodiment, the stroke (or the movable distance) of the bobbin 1110 in the optical axis direction may be equal to or greater than 20% of the length H1 but be equal to or less than 40% of the length H1.

Referring to FIG. 6C, the length H1 of the sliding member 1021 in the optical axis direction may be equal to or greater than the length H3 of the magnet 1130 in the optical axis direction. In another embodiment, the length H1 may be less than the length H3.

For example, the length H1 of the sliding member 1021 in the optical axis direction may be equal to or greater than 70% of the length H3 of the magnet 1130 in the optical axis direction. Furthermore, for example, the length H1 of the sliding member 1021 in the optical axis direction may be equal to or less than 150% of the length H3. In another embodiment, the length H1 may be equal to or greater than 80% of the length H3 but be equal to or less than 102% of the length H3. In a further embodiment, the length H1 may be equal to or greater than 90% of the length H3 but be equal to or less than 110% of the length H3.

When the length H1 is less than 70% of the length H3, the attractive force between the sliding member 1021 and the magnet 1130 may be insufficient to stably support the bobbin 1110 with respect to the housing 1140. Meanwhile, when the length H1 exceeds 150% of the length H3, the length of the sliding member 1021 may be excessively great, thus increasing the size of the lens moving apparatus.

For example, at the highest position of the bobbin 1110, the height of the upper surface (or the highest end) of the magnet 1130 may be equal to or higher than the height of the upper surface (or the highest end) of the sliding member 1021. In another embodiment, at the highest point of the bobbin 1110, the height of the upper surface (or the highest end) of the magnet 1130 may be lower than the height of the upper surface (or the highest end) of the sliding member 1021.

For example, at the lowest position of the bobbin 1110, the height of the lower surface (or the lowest end) of the magnet 1130 may be higher than the height of the lower surface (or the lowest end) of the sliding member 1021. In another embodiment, at the lowest position of the bobbin 1110, the height of the lower surface (or the lowest end) of the magnet 1130 may be equal to or lower than the height of the lower surface (or the lowest end) of the sliding member 1021.

The length H1 of the sliding member 1021 in the optical axis direction may be equal to or greater than 40% of the distance H4 between the upper surface of the cover member 1300 (or the upper surface of the upper plate 1301) and the lower surface of the housing 1140 (or the lower surface of the lower portion 1144) but be equal to or less than 90% of the distance H4. If the length H1 is less than 40% of the distance H4, the supporting force of the sliding member 1021 with respect to the bobbin 1110 may be decreased, thereby making it impossible to stably support the bobbin 1110 within a predetermined stroke range. When the length H1 exceeds 90% of the distance H4, stable support of the bobbin 1110 is assured. However, because the length of the sliding member 1021 is unnecessarily increased, the weight of the lens moving apparatus may be increased. In another embodiment, the length H1 may be equal to or greater than 50% of the distance H4 but be equal to or less than 80% of the distance H4. In a further embodiment, the length H1 may be equal to or greater than 60% of the distance H4 but be equal to or less than 80% of the distance H1.

Referring to FIGs. 6A and 6C, the length H5 of the coil 1120 in the optical axis direction may be less than the length H1 of the sliding member 1021 in the optical axis direction. In another embodiment, the length H1 of the sliding member 1021 in the optical axis direction may be equal to the length H5 of the coil 1120 in the optical axis direction. In a further embodiment, the length H5 may be greater than the length H1.

For example, the length H5 of the coil 1120 in the optical axis direction may be equal to or greater than the lower limit but be equal to or less than the upper limit. Here, the lower limit may be the value obtained by subtracting 30% of the length H1 from the length H1, and the upper limit may be the value obtained by adding 30% of the length H1 to the length H1. When the length H5 is less than the lower limit, the length of the coil 1120 may be excessively short, thereby making it impossible to obtain a predetermined driving force required for AF operation. When the length H5 is equal to or greater than the upper limit, the length of the sliding member 1021 may be excessively short, thereby making it impossible to stably support the bobbin 1110 by the sliding member 1021.

In a comparative example in which the shaft member is coupled to the bobbin through a portion (for example, a ring) of the bobbin, when the linearity of the shaft member is not good, there may be a problem in that the shaft member sticks to a portion (for example, the ring) of the bobbin. Furthermore, the comparative example includes an additional yoke provided at the housing, which generates attractive force with respect to the magnet coupled to the bobbin, in order to press the bobbin to the shaft member and thus to stably support the bobbin with respect to the housing.

Because the embodiment has a structure in which the bobbin 1110 has the grooves 1103A and 1103B which are in contact with a portion of the sliding member 1021, the sliding member 1021 does not stick.

The sliding member 1021 has magnetism in order to generate attractive force with respect to the magnet 1130, and the bobbin 1110 may be stably supported by the sliding member 1021 by virtue of the attractive force between the sliding member 1021 and the magnet 1130. In other words, in the embodiment, because there is no need to provide an additional yoke which enables the sliding member 1021 to stably support the bobbin 1110 with respect to the housing 1140, it is possible to reduce manufacturing cost. In addition, because the space occupied by the yoke is eliminated, it is possible to improve design freedom and to reduce the size of the lens moving apparatus.

Furthermore, because the lower portion of the sliding member 1021 is disposed in the groove 1148 in the housing 1140, it is possible to lower the height of the sliding member 1021 in the optical axis direction and thus to design the lens moving apparatus having a decreased height in the optical axis direction.

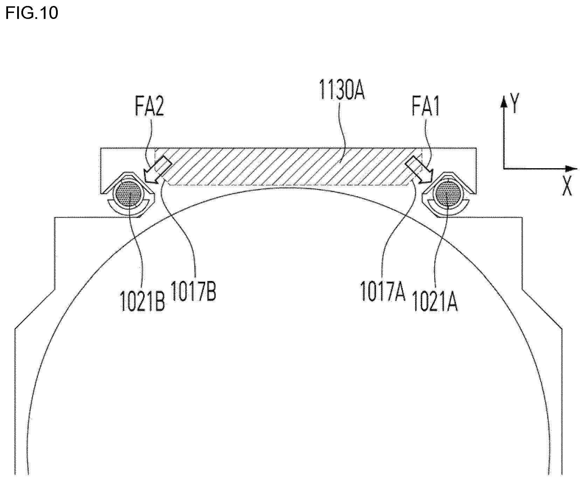

FIG. 10 is a plan view of the magnet 1130A, the bobbin 1110 and the sliding member 1021 according to another embodiment.

Referring to FIG. 10, in order to increase the attractive force FA1 and FA2 between the sliding member 1021 and the magnet 1130A, the corners of the magnet 1130A adjacent to the sliding member 1021 may be chamfered.

For example, the corner portion of one end of the magnet 1130A adjacent to the first shaft member 1021A may be eliminated by chamfering, and the one end of the magnet 1130 may have a flat surface 1017A which faces the first shaft member 1021A.

Furthermore, for example, the corner portion of the other end of the magnet 1130A adjacent to the second shaft member 1021B may be eliminated by chamfering, and the other end of the magnet 1130A may have a flat surface 1017B which faces the second shaft member 1021B.

For example, when viewed in a direction which is perpendicular to the optical axis direction and is directed toward the magnet 1130A from the coil 1120, the magnet 1130A may include a portion the length of which is reduced in the second direction (for example, in the X-axis direction).

For example, the sliding member 1021 may not correspond to, face or overlap the magnet 1130A in the third direction (for example, in the Y-axis direction).

In FIG. 10, the projection 146 of the housing 1140 may be omitted, and the lower portion of the sliding member 1021 may be fixed to the groove 1148 in the housing 1140.

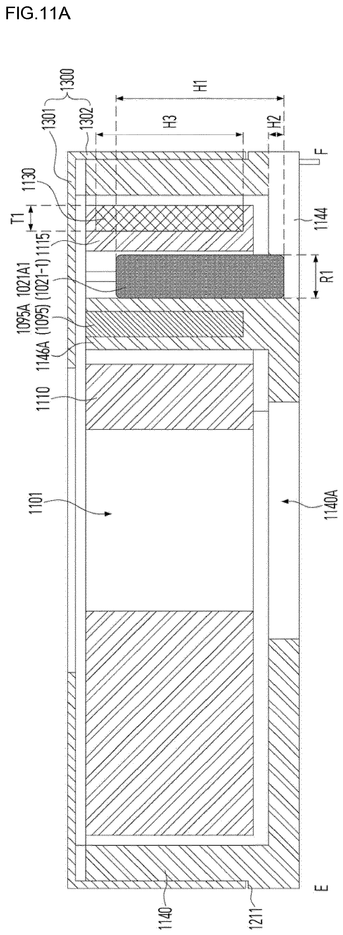

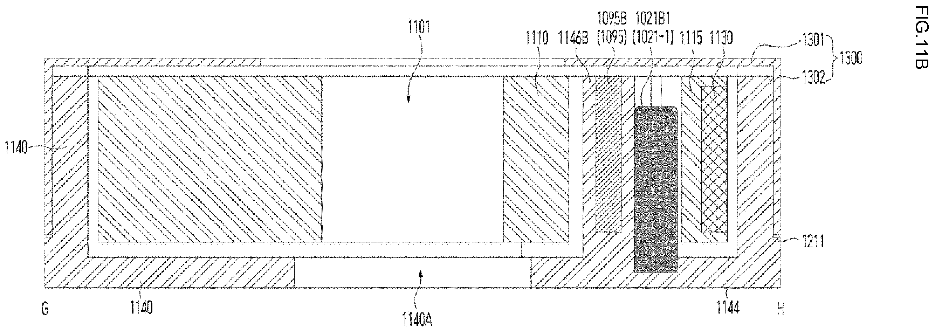

FIG. 11A is a cross-sectional view of the lens moving apparatus according to another embodiment, taken along line E-F in FIG. 2. FIG. 11B is a cross-sectional view of the lens moving apparatus shown in FIG. 11A, taken along line G-H in FIG. 2.

In the lens moving apparatus shown in FIGs. 11A and 11B, the sliding member 1021-1 may be a non-magnetic body. For example, each of the first sliding member 1021A and the second sliding member 1021B may be a non-magnetic body which does not generate attractive force with respect to the magnet 1130.

The lens moving apparatus shown in FIGs. 11A and 11B may include an additional yoke 1095 which generates attractive force resulting from interaction with the magnet 1130.

For example, the yoke 1095 may be disposed on the support 1146 of the housing 1140. For example, at least a portion of the yoke 1095 may correspond to, face or overlap the magnet 1130 in direction toward the first lateral portion 1141A from the second lateral portion 1141B of the housing 1140.

At least a portion of the yoke 1095 may correspond to, face or overlap the sliding member 1021-1 in a direction toward the first lateral portion 1141A from the second lateral portion 1141B of the housing 1140 or in the third direction.

For example, the yoke 1095 may include a first yoke 1095A disposed on the first support 1146A of the housing 1140 and a second yoke 1095B disposed on the second support 1146B of the housing 1140. For example, the first yoke 1095A may correspond to, face or overlap the first sliding member 1021A1 in a direction toward the first lateral portion 1141A from the second lateral portion 1141B of the housing 1140 or in the third direction, and the second yoke 1095B may correspond to, face or overlap the second sliding member 1021B1 in a direction toward the first lateral portion 1141A from the second lateral portion 1141B of the housing 1140 or in the third direction. For example, the first yoke 1095A and the second yoke 1095B may be spaced apart from each other. In another embodiment, the first yoke 1095A and the second yoke 1095B may be connected to each other.

The yoke 1095 may be a magnetic body, and the bobbin 1110 may be supported by the housing 1140 such that the bobbin 1110 is moved in the optical axis direction by virtue of attractive force acting between the yoke 1095 and the magnet 1130. Furthermore, for example, the bobbin 1095 may be pressed toward the sliding member 1021 by virtue of the attractive force acting between the yoke 1095 and the magnet 1130. Furthermore, for example, the bobbin 1110 may be maintained in the state of being in contact with the sliding member 1021 by virtue of the attractive force acting between the yoke 1095 and the magnet 1130.

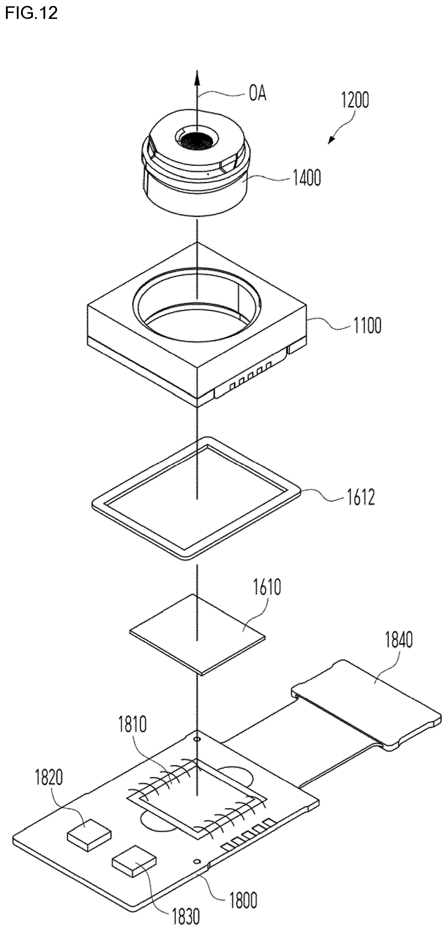

FIG. 12 is an exploded perspective view of a camera device 1200 according to an embodiment.

Referring to FIG. 12, the camera device 1200 may include a lens module 1400, a lens moving apparatus 1100, an adhesive member 1612, a filter 1610, a first holder 1600, a second holder 1800, an image sensor 1810, a motion sensor 1820, a controller 1830, and a connector 1840. The lens moving apparatus 1100 may be the above-described embodiment. The camera device 200 may alternatively be referred to as a "camera module" or an "imaging device".

The lens module 1400 may be mounted on the bobbin 1110 of the lens moving apparatus 1100.

The first holder 1600 may be disposed below the housing 140 of the lens moving apparatus 1100. The filter 1601 may be mounted on the first holder 1600, and the first holder 1600 may include a projection 500 on which the filter 1610 is seated.

The adhesive member 1612 may couple or attach the housing 140 of the lens moving apparatus 1100 to the first holder 1600. For example, the adhesive member 1612 may be an epoxy adhesive, a thermohardening adhesive, an ultraviolet hardening adhesive or the like.

The filter 1610 may serve to prevent light of a specific frequency band in the light passing through the lens module 1400 from entering the image sensor 1810. Although the filter 610 may be an infrared filter, the present disclosure is not limited thereto. Here, the filter 1610 may be oriented so as to be parallel to the X-Y plane.

The region of the first holder 1600 to which the filter 1610 is mounted may have formed therein a bore through which the light having passed through the filter 1610 is incident on the image sensor 1810.

The second holder 1800 may be disposed below the first holder 1600, and the image sensor 1810 may be mounted on the second holder 600. The image sensor 1810 may be a portion on which the light having passed through the filter 1610 is incident and an image included in the light is formed.

The second holder 1800 may include various circuits, elements, a controller and the like in order to convert the image formed on the image sensor 1810 into an electrical signal and to transmit the electrical signal to an external device. The second holder 1800 may be embodied as a circuit board to which the image sensor is mounted, the circuit pattern is formed and various elements are coupled.

The image sensor 1810 may receive an image included in the light which is incident through the lens moving apparatus 1100 and may convert the received image into an electrical signal.

The filter 1610 and the image sensor 1810 may face each other and be spaced apart from each other in the first direction.

The motion sensor 1820 may be mounted on the second holder 1800, and may be electrically connected to the controller 1830 via the circuit pattern provided at the second holder 1800.

The motion sensor 1820 may output rotational angular velocity corresponding to movement of the camera device 1200. The motion sensor 1820 may be embodied as a biaxial or triaxial gyro sensor or an angular velocity sensor.

The controller 1830 may be mounted on the second holder 1800. The second holder 1800 may be electrically connected to the lens moving apparatus 1100. For example, the second holder 1800 may be electrically connected to the coil 1120 of the lens moving apparatus 1100 so as to provide the coil 1120 with a drive signal.

The connector 1840 may include a port which is electrically connected both to the second holder 1800 and to an external device.

A "hand tremor correction device", which is applied to a small-sized camera device of a mobile device, such as a smart phone, a tablet or the like, may mean a device configured to prevent the contour line of a captured image from blurring due to vibration caused by shaking of the user's hand when capturing a still image.

The lens moving apparatus 100 may perform an autofocus operation by moving the optical module constituted by at least one lens in the first direction. In addition, the lens moving apparatus 100 according to the embodiment may perform a hand tremor correction operation by moving the optical module constituted by at least one lens in the second and third directions perpendicular to the first direction.

A "hand tremor correction device", which is applied to a small-sized camera device of a mobile device, such as a smart phone, a tablet or the like, may mean a device configured to prevent the contour line of a captured image from blurring due to vibration caused by shaking of the user's hand when capturing a still image.

The lens moving apparatus 100 may perform an autofocus operation by moving the optical module constituted by at least one lens in the first direction. In addition, the lens moving apparatus 100 according to the embodiment may perform a hand tremor correction operation by moving the optical module constituted by at least one lens in the second and third directions perpendicular to the first direction.

Hereinafter, the term "reception portion" may be used interchangeably with "seating portion" or "groove". Hereinafter, the term "structure eliminated by chamfering" may include a sloping surface, a chamfered surface, or a tapered surface.

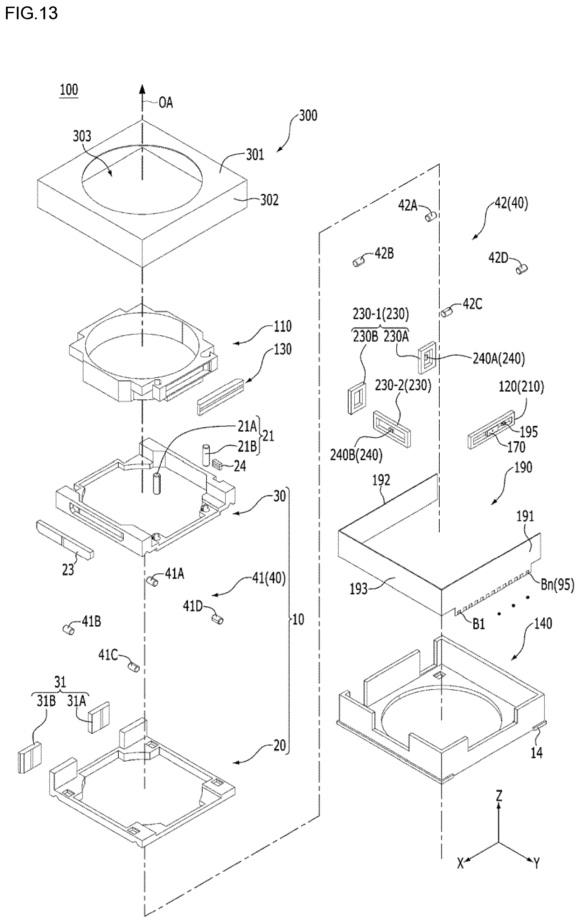

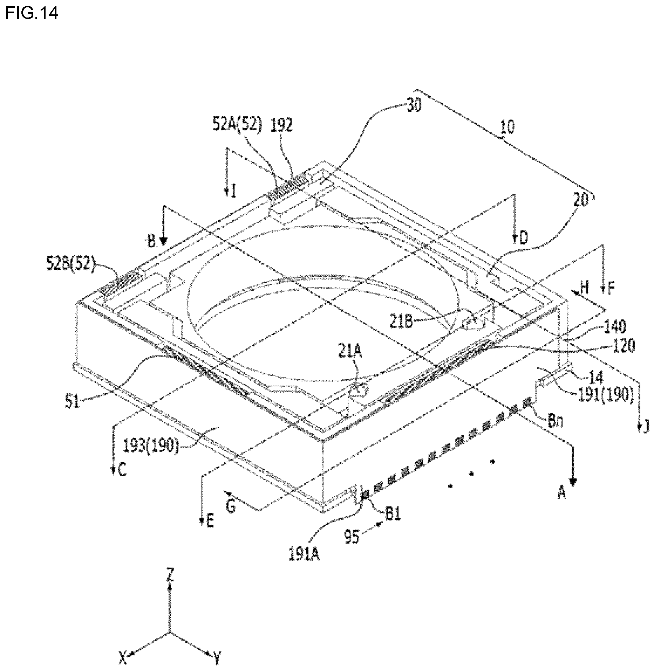

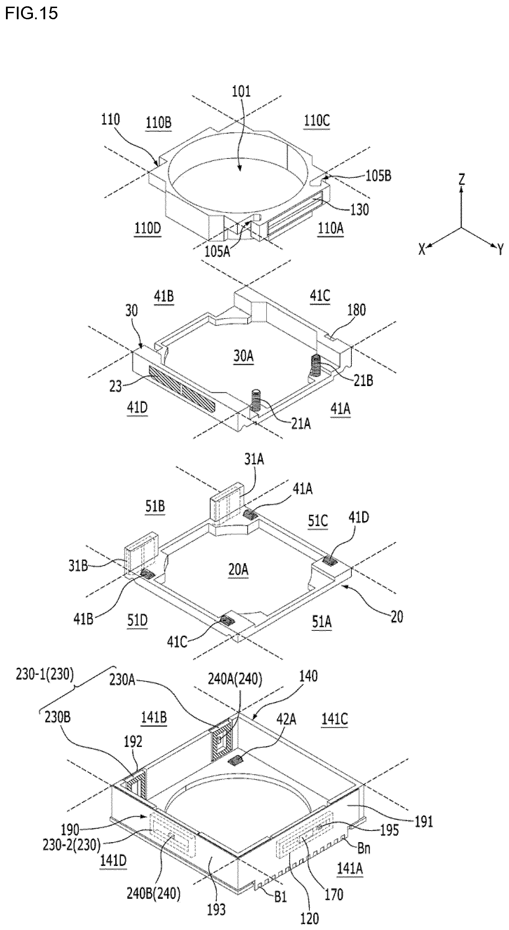

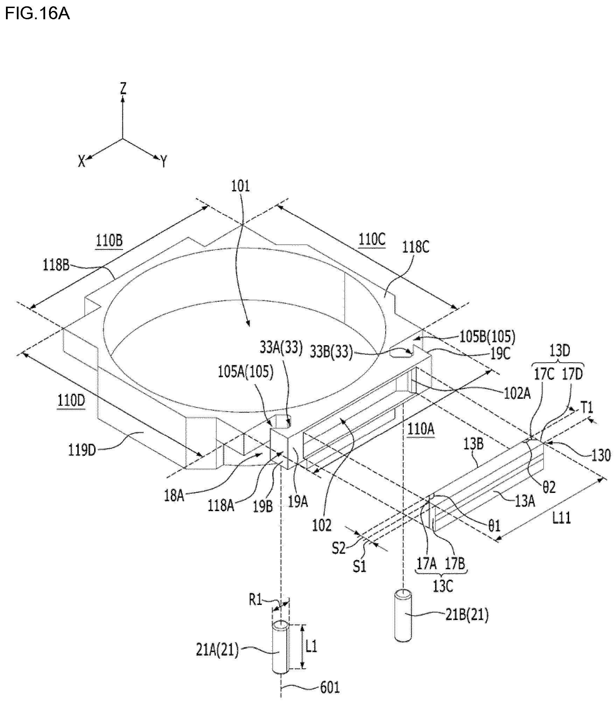

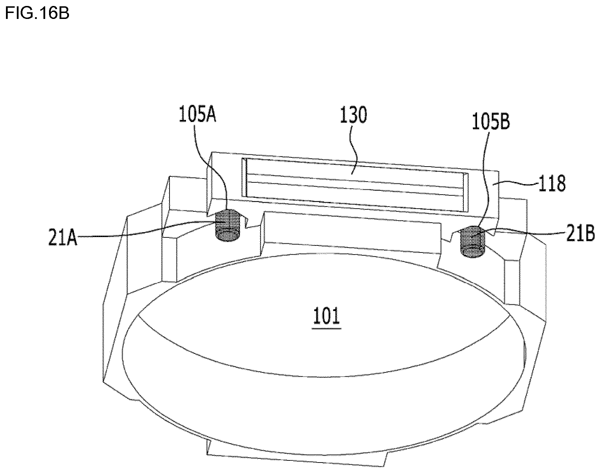

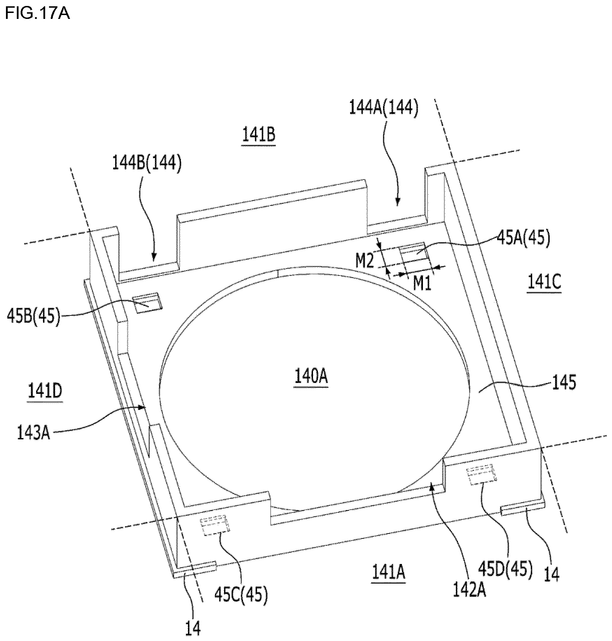

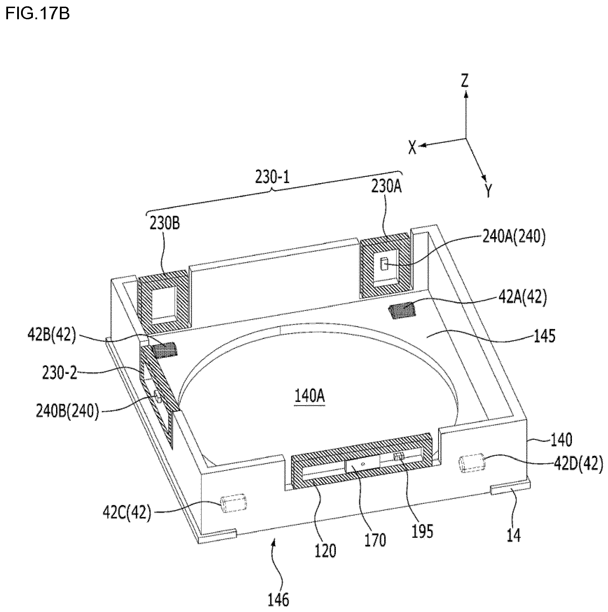

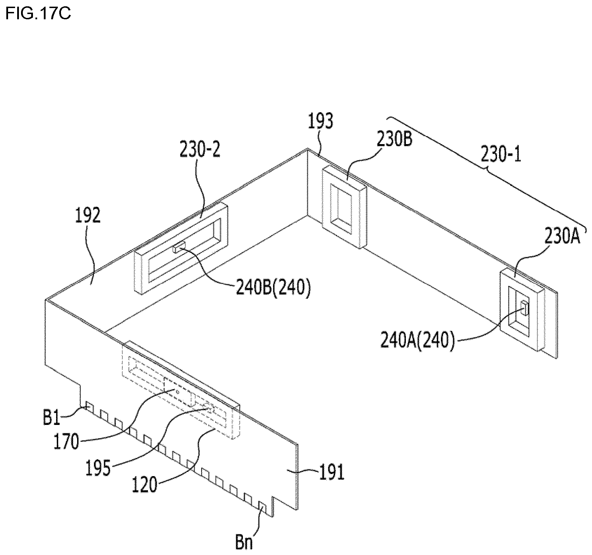

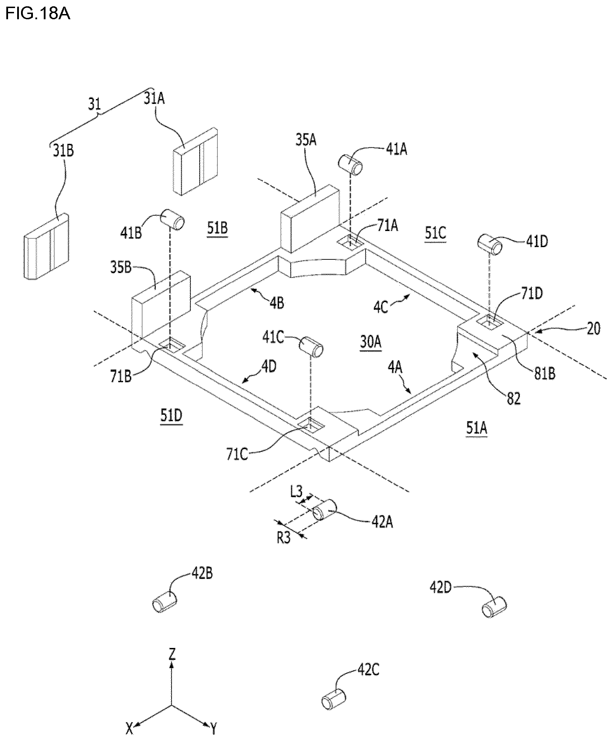

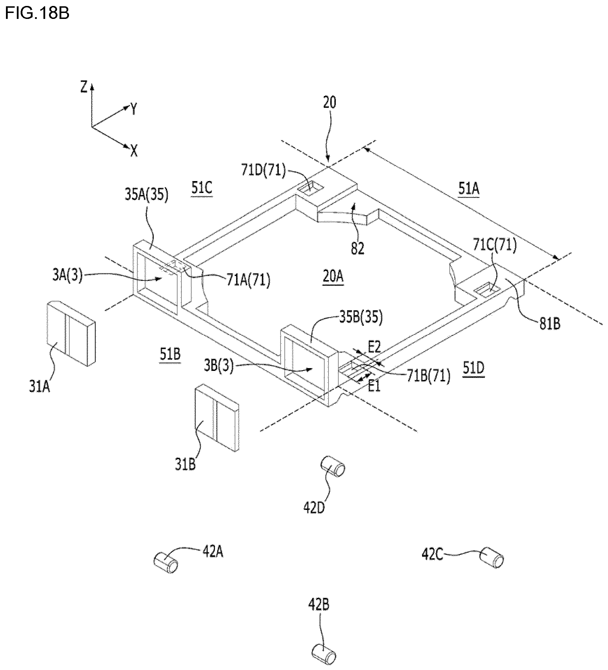

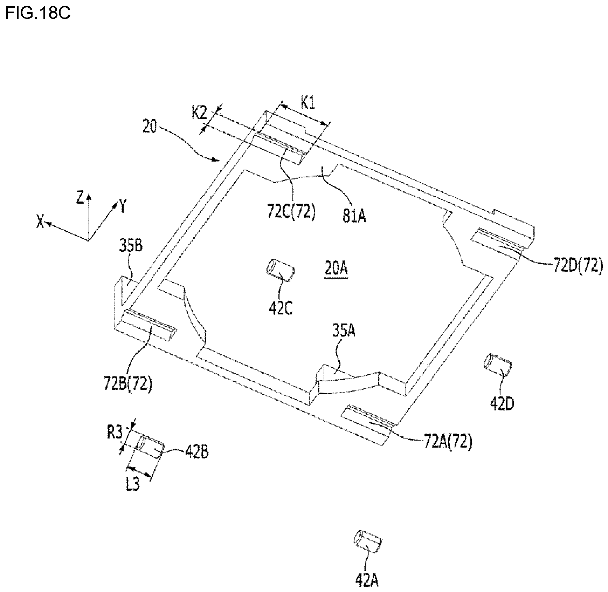

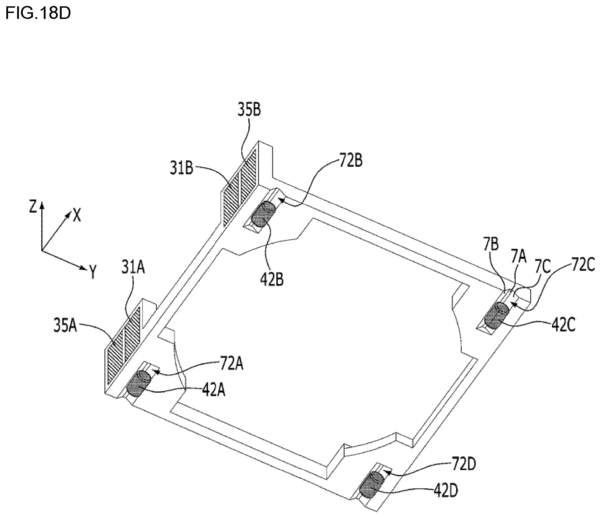

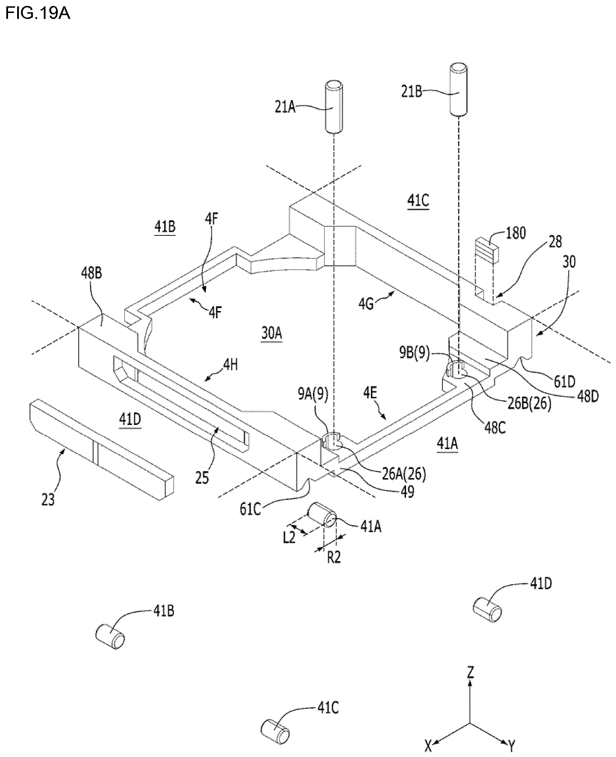

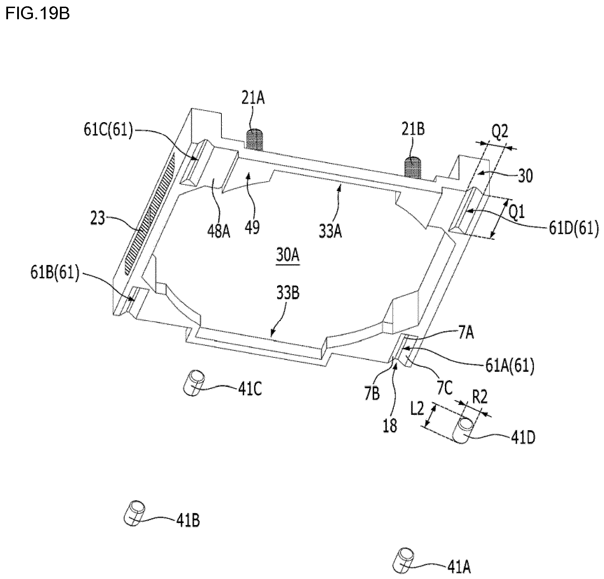

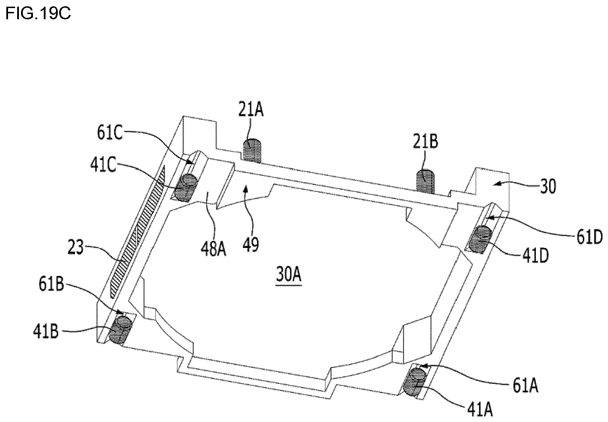

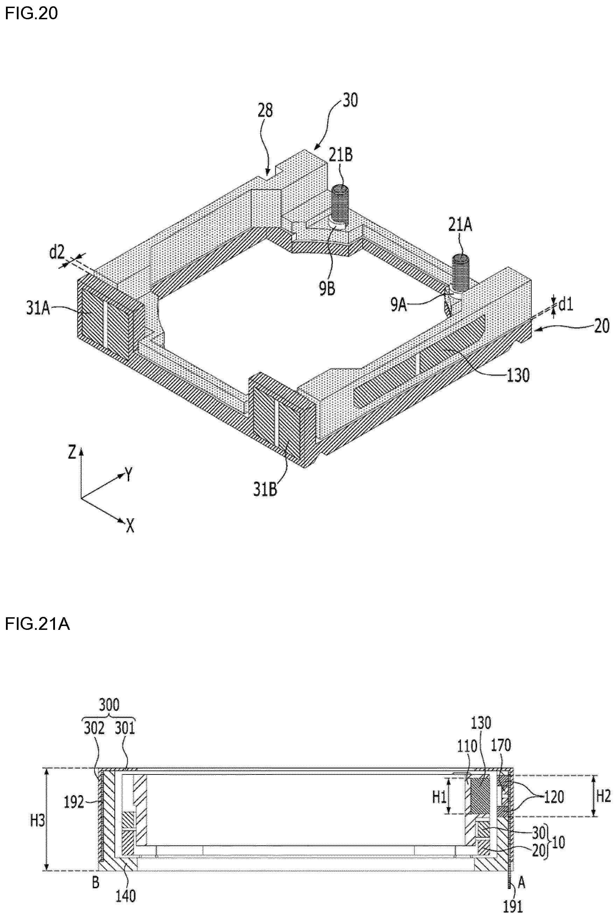

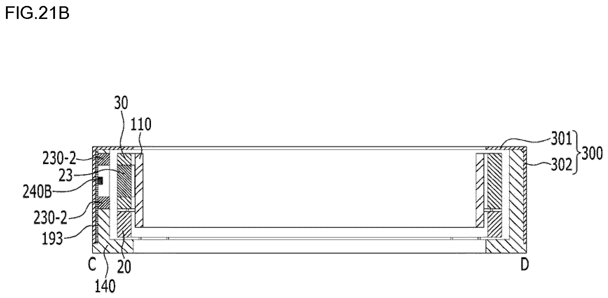

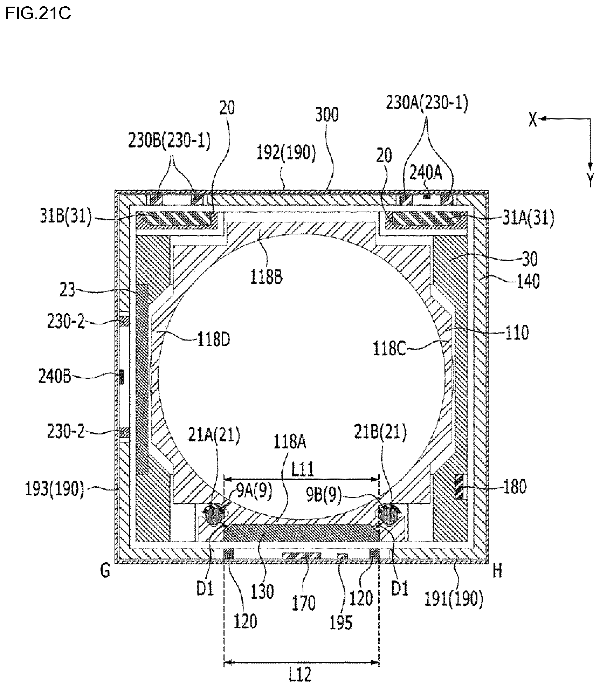

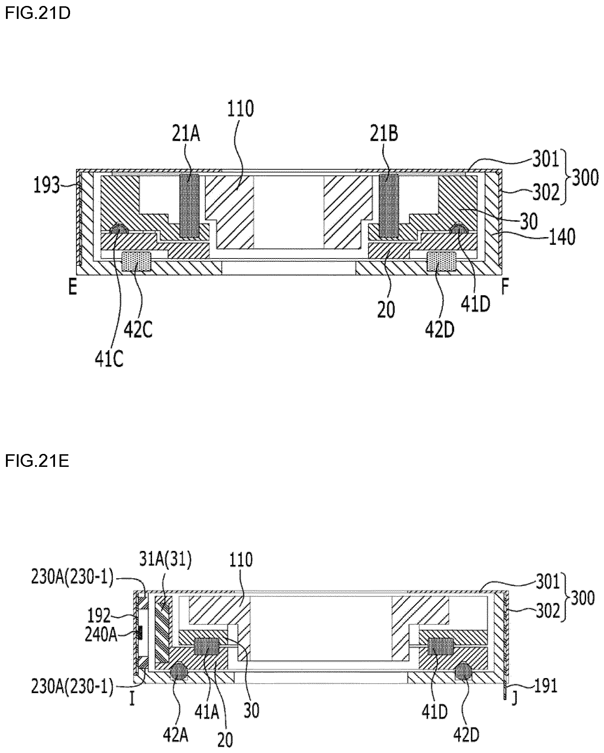

FIG. 13 is an exploded perspective view of the lens moving apparatus 100 according to an embodiment. FIG. 14 is a perspective view of the lens moving apparatus 100 excluding the cover member 300. FIG. 15 is an exploded perspective view of the bobbin 110 and the frame 10 shown in FIG. 13. FIG. 16A is an exploded perspective view of the bobbin 110, the magnet 130, and the sliding member 21. FIG. 16B is an assembled perspective view of the bobbin 110, the magnet 130, and the sliding member 21. FIG. 17A is a perspective view of the housing 140. FIG. 17B is an assembled perspective view of the housing 140, the coils 120, 230-1 and 230-2, the position sensors 170 and 240, the capacitor 195, and the sliding member 42. FIG. 17C is an assembled perspective view of the circuit board 190, the position sensors 170 and 240, the coils 120 and 230, and the capacitor 195. FIG. 18A is a perspective view of the first frame 20, the magnet 31, and the sliding members 41 and 42. FIG. 18B is a first perspective view of the first frame 20, the magnet 31, and the sliding member 42. FIG. 18C is a second perspective view of the first frame 20, the magnet 31, and the sliding member 42. FIG. 18D is an assembled perspective view of the first frame 20, the magnet 31, and the sliding member 42. FIG. 19A is a perspective view of the second frame 30, the magnet 23, the sliding members 41 and 21, and the magnet 180. FIG. 19B is a perspective view of the second frame 30, the magnet 23, and the sliding members 41 and 21. FIG. 19C is an assembled perspective view of the second frame 30, the magnet 23, and the sliding members 41 and 21. FIG. 20 is an assembled perspective view of the frames 20 and 30, the magnets 31 and 130, and the sliding member 21. FIG. 21A is a cross-sectional view of the lens moving apparatus 100, taken along line A-B in FIG. 14. FIG. 21B is a cross-sectional view of the lens moving apparatus 100, taken along line C-D in FIG. 14. FIG. 21C is a cross-sectional view of the lens moving apparatus 100, taken along line G-H in FIG. 14. FIG. 21D is a cross-sectional view of the lens moving apparatus 100, taken along line E-F in FIG. 14. FIG. 21E is a cross-sectional view of the lens moving apparatus 100, taken along line I-J in FIG. 14.

Referring to FIGs. 13 to 21E, the lens moving apparatus 100 may include a stationary unit, an AF moving unit, an OIS moving unit, and the sliding members 21 and 40.

The AF moving unit may move in the optical axis direction with respect to the stationary unit. For example, the AF moving unit may include the bobbin 110. In another embodiment, the AF moving unit may further include a component (for example, the magnet 130) coupled to the bobbin 110. In another embodiment, the AF moving unit may further include a lens module 400 coupled to the bobbin 110.

The OIS moving unit may be movable relative to the stationary unit in a direction perpendicular to the optical axis. For example, the OIS moving unit may include the frame 10. For example, the OIS moving unit may include the frame 10 and the AF moving unit. For example, the OIS moving unit may further include components coupled to the frame 10 (for example, the magnets 23 and 31) and the sliding member 21. The frame 10 may be movable along the sliding members 42 and 41 in a direction perpendicular to the optical axis. For example, the frame 10 may be slidable along the sliding member 42 and 41 in a direction perpendicular to the optical axis.

The lens moving apparatus 100 may further include the AF operation unit configured to move the AF moving unit in the optical axis direction. For example, the AF operation unit may include the magnet 123 and the coil 120. The lens moving apparatus 100 may further include OIS operation unit configured to moving the OIS moving unit in a direction perpendicular to the optical axis. For example, the OIS operation unit may include the coil 230 and the magnets 31 and 23.

For feedback operation, the lens moving apparatus 100 may further include a position sensor 170. Furthermore, for OIS feedback operation, the lens moving apparatus 100 may further include a position sensor 240.

The lens moving apparatus 100 may further include the circuit board 190, which is electrically connected to the coils 120 and 230 and the position sensors 170 and 240. The lens moving apparatus 100 may further include the capacitor 195. The lens moving apparatus 100 may further include the cover member 300 configured to accommodate the bobbin 110 and the frame 10 therein. The stationary unit may include at least one of the housing 140 or the cover member 300. Furthermore, the stationary unit may further include components coupled to the housing 140, for example, the circuit board 190, the coils 120 and 230, and the position sensors 170 and 240.

The bobbin 110, which is intended to receive the lens or the lens barrel therein, may be disposed on the housing 140. The bobbin 110 may alternatively be referred to as a "lens holder", or a "lens carrier".

The bobbin 110 may move in the optical axis direction. For example, by virtue of the electromagnetic interaction between the coil 120 and the magnet 130, the bobbin 110 may be moved in the first direction (for example, in the Z-axis direction).

Referring to FIGs. 15, 16A and 16B, the bobbin 110 may include a bore 101 configured to enable the bobbin 110 to be coupled to the lens module 400. For example, the lens module 400 may include at least one of a lens or a lens barrel. The shape of the opening 101 in the bobbin 110 may correspond to the shape of the lens or the lens barrel mounted in the bobbin. For example, the shape of the opening may be circular, oval, or polygonal. However, the disclosure is not limited thereto.

Although not illustrated in FIG. 16A, the bobbin 110 may include at least one stopper disposed on at least one of the upper and lower surfaces thereof. The stopper of the bobbin 110 may be constructed so as to project from the upper surface (or the lower surface) of the bobbin 110 in the first direction or in an upward direction (or in a downward direction) and to prevent the upper surface of the bobbin 110 from directly colliding with the inner surface of the upper plate 301 of the cover member 300 (or a lower portion 145 of the housing 140).

The bobbin 110 may include a seating portion 102 on which the magnet 130 is seated. For example, the seating portion 102 may be a groove depressed from the outer surface of the bobbin 110.

The bobbin 110 may include a plurality of lateral surfaces or outer lateral surfaces 110A to 110D. For example, the bobbin 110 may include a first lateral surface 110A, a second lateral surface 110B, a third lateral surface 110C, and a fourth lateral surface 110D.

For example, the second lateral surface 110B may face the first lateral surface 110A or may be positioned opposite to the first lateral surface 110A based on the optical axis OA. The third lateral surface 110C and the fourth lateral surface 110D may be positioned between the first lateral surface 110A and the second lateral surface 110B. The fourth lateral surface 110D may face the third lateral surface 110C or may be positioned opposite to the third lateral surface 110C based on the optical axis OA.

Although FIG. 16A illustrates the bobbin 110 including four lateral surfaces, the bobbin 110 may include three or more lateral surfaces in another embodiment. For example, the seating portion 102 may be formed on the first lateral surface 110A. For example, the lower portion of the seating portion 102 may be closed instead or being open toward the lower surface of the bobbin 110. Furthermore, the upper portion of the seating portion 102 may be closed instead of being open toward the upper surface of the bobbin 110. In another embodiment, for example, the seating portion 102 may include an opening toward at least one of the upper surface or the lower surface of the bobbin 110.

The bobbin 110 may include the seating portion 105 in which the sliding member 21 is disposed or received. For example, the bobbin 110 may include one or more seating portions 105A and 105B positioned between the first lateral surface 110A and the second lateral surface 110B of the bobbin 110.

For example, the seating portion 105 may be a hole or a through-hole which is formed through the bobbin 110 in the optical axis direction. For example, the seating portion 105 may include at least one opening 18A through which the lateral surface (or the outer circumferential surface) of the sliding member 21 is exposed. For example, the length of the opening 18A in the third direction may be less than the diameter R1 of the sliding member 21. Therefore, it is possible to prevent the sliding member 21 from escaping outwards through the opening 18A. By virtue of the opening 18A, the frictional force between the bobbin 110 and the sliding member 21 may be decreased, and the bobbin 110 may be easily moved in the optical axis direction. In addition, because increase in driving current applied to the coil 120 is prevented, it is possible to reduce power consumption.

Furthermore, because the opening 18A is formed in the seating portion 105, there may be no problem of the sliding member 21 sticking to the seating portion 105 of the bobbin 110 due to deteriorated linearity of the sliding member 21 when the bobbin 110 is moved in the optical axis direction during an AF operation.

The sliding member 21 may support the bobbin 110 with respect to the frame 10 such that the bobbin 110 is movable in the optical axis direction.

The sliding member 21 may alternatively be referred to as a "shaft", a "shaft member", a "support member", a "pin member", or a "rod member". For example, the sliding member 21 may be a member in which the length thereof in the optical axis direction is greater than the length thereof in a direction perpendicular to the optical axis. For example, the sliding member 21 may have a rounded outer circumferential surface for reduction of frictional force. For example, the cross-section of the sliding member 21 taken in a direction perpendicular to the optical axis may have a circular shape or an elliptical shape.

The length L1 of the sliding member 21 in the optical axis direction may be greater than the length R1 of the sliding member 21 in a direction perpendicular to the optical axis (L1 > R1). The length L1 of the sliding member 21 in the optical axis direction may be proportional to the entire stroke range of the bobbin 110 in the optical axis direction. The length L1 may be a shortest length of the sliding member 21 in the optical axis direction. The length R1 may be a shortest length of the sliding member 21 in the second or third direction.

For example, the sliding member 21 may include two shaft members 21A and 21B which are spaced apart from each other. In another embodiment, the sliding member 21 may include one shaft member. In a further embodiment, the sliding member 21 may include three or more shaft members. For example, the sliding member 21 may be coupled or fixed to the second frame 30.

For example, the bobbin 110 may include a first seating portion 105A configured to receive the first shaft member 21A therein and a second seating portion 105B configured to receive the first shaft member 21B therein.

For example, the bobbin 110 may include a projection 118A formed at the first lateral surface 110A thereof. For example, the projection 118A may project from the first lateral surface 110A of the bobbin 110 in the third direction (for example, in the Y-axis direction). For example, the seating portion 102 may be formed in the projection 118A. For example, the seating portion 102 may be formed in the first surface 19A of the projection 118A. For example, the first surface 19A of the projection 118A may be a surface which is opposed to of faces the coil 120.

The seating portions 105A and 105B may be formed in the projection 118A of the bobbin 110. For example, the first seating portion 105A may be formed in the second surface 19B of the projection 118A, and the second seating portion 105B may be formed in the third surface 19C of the projection 118A of the bobbin 110. For example, the second surface 19B of the projection 118A may be positioned between one side of the first surface 19A and the first lateral surface 110A of the bobbin 110. For example, the third surface 19C of the projection 118A may be positioned between the other side of the first surface 19A of the projection 118A and the first lateral surface 110A of the bobbin 110. For example, the second surface 19B and the third surface 19C may be positioned opposite each other.

For example, the first seating portion 105A may be a groove depressed from the second surface 19B of the projection 118A of the bobbin 110, and the second seating portion 105B may be a groove depressed from the third surface 19C of the projection 118A of the bobbin 110.

For example, each of the first and second seating portions 105A and 105B may include a first opening at the upper surface of the bobbin 110 and a second opening at the lower surface of the bobbin 110.

For example, the first seating portion 105A may be disposed adjacent to one end (or a first end) of the magnet 130, and the second seating portion 105B may be disposed adjacent to the other end (or a second end) of the magnet 130.

The seating portion 105 may include a groove 33 in which at least a portion of the sliding member 21 is disposed, seated or inserted. The groove 33 may serve as a guide member configured to suppress escape of the bobbin 110 from the sliding member 21 when the bobbin 110 is moved in the optical axis direction. For example, the groove 33 may alternatively be referred to as a "reception groove", a "guide groove", or a "guide portion".

For example, the groove 33 may include an opening at at least one of the upper surface or the lower surface of the bobbin 110. In another embodiment, the upper portion of the groove 33 may not be open but be closed at the upper surface of the bobbin 110. For example, when viewed from above, the shape of the groove 33 may be a triangular shape, a semicircular shape, or a polygonal shape (for example, a quadrilateral shape or a pentagonal shape). Alternatively, for example, the groove 33 may have a "V" shape or a "U" shape.

For example, the first seating portion 105A may include a first groove 33A formed in the inner surface thereof in which at least a portion of the first shaft member 21A is disposed or seated. For example, the first groove 33A may be positioned adjacent to the second surface 19B of the projection 118A and opposite the first 19A of the projection 118A.

For example, the second seating portion 105B may include a second groove 33B formed in the inner surface thereof in which at least a portion of the second shaft member 21B is disposed or seated. For example, the second groove 33B may be positioned adjacent to the third surface 19C of the projection 118A and opposite the first surface 19A of the projection 118A.

For example, the first seating portion 105A and the second seating portion 105B may have shapes symmetrical with each other based on the optical axis.

For example, the bobbin 110 may include at least one projection which projects from the lateral surface of the bobbin 110. For example, at least one of the second to fourth lateral surfaces 110B to 110D of the bobbin 110 may be provided with projections 118B to 118D. For example, the projection 118B may project in the opposite direction of the projection 118A. The projection 118C and the projection 118D may project in opposite directions.

The magnet 130 may be disposed on, coupled to or mounted to the bobbin 110. For example, the magnet 130 may be disposed on or coupled to the first lateral surface 110A of the bobbin 110. For example, the magnet 130 may be disposed in or coupled to the seating portion 102 of the bobbin 110.

The magnet 130 may have a shape corresponding to the first lateral surface 110A of the bobbin 110, for example, a rectangular parallelepiped shape. For example, at least one of two opposite ends of the magnet 130 may be sloped.

For example, the corner of one end of the magnet 130 adjacent to the first shaft member 21A may be eliminated by chamfering or may have a structure eliminated by chamfering. The corner of one end of the magnet 130 adjacent to first shaft member 21A may include a tilted surface, a chamfered surface, or sloping surface.

For example, the corner of the other end of the magnet 130 adjacent to the second shaft member 21B may be eliminated by chamfering or may have a structure eliminated by chamfering. The corner of one end of the magnet 130 adjacent to second shaft member 21B may include a tilted surface, a chamfered surface, or sloping surface

For example, the magnet 130 may include a first lateral surface 13A, which is opposed to or faces the coil 120, and a second lateral surface 14B opposite the first lateral surface 13A. The first lateral surface 13A of the magnet 130 may be exposed from the lateral surface of the bobbin 110.

For example, the length of the second surface 13B of the magnet 130 in the second direction (for example, in the X-axis direction) may be less than the length of the first surface 13A of the magnet 130 in the second direction (for example, in the X-axis direction).

The magnet 130 may include a first portion S1 including the first lateral surface 13A and a second portion S2 including the second lateral surface 13B. For example, the first portion S1 may be a portion which in constant or uniform in length in the second direction (for example, in X-axis direction). For example, the length of the second portion S2 of the magnet 130 in the second direction (for example, in the X-axis direction) may decrease toward the second lateral surface 13B from the first lateral surface 13A

For example, the magnet 130 may include a third lateral surface 13C positioned between one end (or one side) of the first lateral surface 13A and one end (or one side) of the second lateral surface 13B and a fourth lateral surface 13d positioned between the other end (or the other side) of the first lateral surface 13A and the other end (or the other side) of the second lateral surface 13B.

For example, the third lateral surface 13C of the magnet 130 may include a first surface 17A abutting the second lateral surface 13B and a second surface 17B positioned between the first lateral surface 13A and the first surface 17A. For example, the angle θ1 defined between the first surface 17A and the second lateral surface 13B may be an obtuse angle. For example, the angle defined between the second surface 17B and the first lateral surface 13A may be a right angle.

For example, the fourth lateral surface 13D of the magnet 130 may include a third surface 17C abutting the second lateral surface 13B and a fourth surface 17D positioned between the first lateral surface 13A and the third surface 17C. For example, the angle θ2 defined between the third surface 17C and the second lateral surface 13B may be an obtuse angle. For example, the angle defined between the fourth surface 17D and the first lateral surface 13A may be a right angle.

In another embodiment, the two opposite ends of the magnet 130 may not be sloped or may not be chamfered.

The magnet 1130 may be a monopolar magnetized magnet, which includes different polarities and an interface plane naturally formed between the different polarities. For example, the magnet 130 may be a monopolar magnetized magnet in which the N pole is separated from the S pole in the optical axis direction. In another embodiment, the magnet 130 may be a monopolar magnetized magnet in which the N pole is separated from the S pole in a direction perpendicular to the optical axis direction.

In a further embodiment, the magnet 130 may also be a tetrapolar magnet or a bipolar magnetized magnet in order to increase electromagnetic force. For example, the magnet 130 may include a first magnet having an N pole and an S pole, a second magnet having an S pole and an N pole, and a partition wall disposed between the first magnet and the second magnet. Here, the partition wall is a portion that is almost completely non-magnetic and which may include a zone having almost no polarity. The partition wall may be filled with air or a non-magnetic material, and may be referred to as a "neutral zone". For example, the first magnet and the second magnet may face each other in the optical axis direction such that different polarities of the first magnet and the second magnet face each other in the optical axis direction.

Referring to FIGs. 15, 17A and 17B, the housing 140 may define a space configured to receive the bobbin 110 and the frame 10, in conjunction with the cover member 300. For example, the housing 140 may be coupled to the cover member 300.

At least a portion of the housing 140 may be disposed in the cover member 300 and may receive the bobbin 110 therein. For example, the housing 140 may support the sliding member 42 and the circuit board 190. Alternatively, for example, the housing 140 may support at least one of the coils 120 and 230, the position sensors 170 and 240, and the capacitor 195.

The housing 140 may have a cavity configured to receive the bobbin 110 therein. Furthermore, the housing 140 may include a bore 140A corresponding to the bore 101 in the bobbin 110. For example, the bore 140A may be a through-hole and a cavity through which at least a portion of the bobbin 110 (or the lens module 400) is exposed. For example, bore 140A may be positioned in the center or the central area of the housing 140. For example, the bore 140A in the housing 140 may be a through-hole or a cavity which is formed through the housing 140 in the optical axis direction.

The bore 140A in the housing 140 may have a shape corresponding to the shape of the bobbin 110, for example, a polygonal shape (for example, a quadrilateral shape or an octagonal shape) or a circular shape (or an elliptical shape). However, the bore 140A is not limited thereto, and may have various shapes.

The housing 140 may include a plurality of lateral portions 141A to 141D. The housing 140 may include a corner positioned between two adjacent lateral portions.

The housing 140 may include a first lateral portion 141A which corresponds to or faces the first lateral surface 110A of the bobbin 110, a second lateral portion 141B which corresponds to or faces the second lateral surface 110B of the bobbin 110, a third lateral portion 141C which corresponds to or faces the third lateral surface 110C of the bobbin 110, and a fourth lateral portion 141D which corresponds to or faces the fourth lateral surfaces 110D of the bobbin 110.

The first lateral portion 141A (or the first lateral surface or the first outer lateral surface) of the housing 140 may be positioned opposite the second lateral portion 141B (or the second lateral surface or the second outer lateral surface) of the housing 140, and the third lateral portion 141C (or the third lateral surface or the third outer lateral surface) of the housing 140 may be positioned opposite the fourth lateral portion 141D (or the fourth lateral surface or the fourth outer lateral surface) of the housing 140.

Each of the first to fourth lateral portions 141A to 141D of the housing 140 may be oriented parallel to a corresponding one of the lateral plates 302 of the cover member 300.

The housing 140 may include a seating portion 142A on which the coil 120 is disposed. For example, the seating portion 142A may be disposed or formed at the first lateral portion 141A of the housing 140. For example, the seating portion 142A may be a through-hole which is formed through the first lateral portion 141A of the housing 140.

Because the seating portion 142A has the shape of a through-hole, a portion of the housing 140 may not be interposed between the coil 120 and the magnet 130, thereby increasing the electromagnetic force between the magnet 130 and the coil 120. Furthermore, because a portion of the housing 140 is not interposed between the position sensor 170 and the magnet 130, it is possible to improve the output of the position sensor 170 and the sensitivity of the position sensor 170.

In another embodiment, the seating portion 142A may have a groove shape depressed from the outer lateral surface (or the inner lateral surface) of the first lateral portion 141A of the housing 140.

The housing 140 may include seating portions 144 and 143A on which the coil 230 is disposed. For example, the housing 140 may include a first seating portion 144 on which a coil unit 230-1 is disposed and a second seating portion 143A on which a coil unit 230-2 is disposed.

For example, the first seating portion 144 may be disposed or formed at the second lateral portion 141B of the housing 140. For example, the first seating portion 144 may be a through-hole which is formed through the second lateral portion 141B of the housing 140. For example, the housing 140 may include two seating portions 144A and 144B which are spaced apart from each other. For example, the seating portion 144A may be disposed adjacent to one of two corners adjacent to the second lateral portion 141B of the housing 140, and the seating portion 144B may be disposed adjacent to the other of the two corners adjacent to the second lateral portion 141B of the housing 140.

For example, the second seating portion 143A may be disposed or formed at the fourth lateral portion 141D of the housing 140. For example, the second seating portion 143A may be a through-hole which is formed through the fourth lateral portion 141DC of the housing 140.

Because each of the seating portions 144 and 143A has the form of a through-hole, a portion of the housing 140 may not be interposed between the coil 230 and the magnets 31 and 23, thereby increasing the electromagnetic force between the magnets 31 and23 and the coil 230. Furthermore, because a portion of the housing 140 is not interposed between the position sensor 240 and the magnets 31 and 23, it is possible to improve the output of the position sensor 240 and the sensitivity of the position sensor 240.

In another embodiment, the seating portion 144 may have the form of a groove depressed from the outer surface (or the inner surface) of the second lateral portion 141B of the housing 140, and the seating portion 143A may have the form of a groove depressed from the outer surface (or the inner surface) of the fourth lateral portion 141D of the housing 140.

Although not illustrated in FIG. 17A, the housing 140 may include at least one protrusion to be coupled to the circuit board 190, and the circuit board 190 may include at least one hole to be coupled to the at least one protrusion of the housing 140. For example, the at least one protrusion may be disposed on the first lateral portion 141A of the housing 140.

The housing 140 may include a step 14 disposed on at least one of the lateral portions 141A to 141D of the housing 140. For example, the step 14 may project from the outer surfaces of the lateral portions 141A to 141D of the housing 140.

For example, two steps may be disposed on a lower portion of the outer surface of the first lateral portion 141A of the housing 140 so as to be spaced apart from each other. For example, the step 14 may be coupled to the lower end of the lateral plate 302 of the cover member 300. For example, the step 14 of the housing 140 and the lower end of the lateral plate 302 of the cover member 300 may be bonded or sealed to each other using an adhesive or a sealing member.

Although not illustrated in FIG. 17A, the housing 140 may include at least one stopper which projects from the upper surface of the housing 140.

Although not illustrated in FIG. 17A, the first lateral portion 141A of the housing 140 may be provided with a seating portion in which the circuit board 190 is disposed or seated.

The housing 140 may include at least one reception portion 45 configured to hold or support the sliding member 42. The reception portion 45 may alternatively be referred to as a "holding portion", a "groove", or a "reception groove". The reception portion 45 may be disposed on the lower portion 145 of the housing 140. The lower portion 145 of the housing 140 may be connected to the lower portions or the lower ends of the lateral portions 141A to 141D of the housing 140. For example, the bore 140A in the housing 140 may be formed in the lower portion 14 of the housing 140.

For example, the reception portion 45 may be formed in the inner surface (or the upper surface) of the lower portion 145 of the housing 140. For example, the reception portion 45 may be a groove depressed from the inner surface (or the upper surface) of the lower portion 145 of the housing 140.

The reception portion 45 may include a plurality of grooves which are spaced apart from each other. The number of reception portions may be two or more. For example, the reception portion 45 may include four grooves 45A to 45D which are spaced apart from each other. For example, each of the four grooves 45A to 45D may be disposed adjacent to a corresponding one of four corners of the housing 140.

For example, each of the four grooves 45A to 45D may be disposed between a corresponding one of the four corners of the housing 140 and the bore 140A in the housing 140.

Referring to FIG. 17B, the sliding member 42 may be disposed between the housing 140 and the first frame 20. The sliding member 42 may be disposed between the lower portion 145 of the housing 140 and the first frame 20.

The sliding member 42 may be coupled or fixed to the housing 140 using an adhesive. For example, at least a portion of the sliding member 42 may be coupled or fixed to the housing 140. At least one other portion of the sliding member 42 may be in contact with the first frame 20.

For example, the sliding member 42 may be coupled or fixed to the lower portion of the housing 140. For example, the sliding member 42 may be coupled or fixed to the inner surface (or the upper surface) of the lower portion of the housing 140. For example, at least a portion of the sliding member 42 may be coupled or fixed to the reception portion 45 of the housing 140. For example, the reception portion 45 having a groove structure may increase a contact area with the sliding member 42 and an adhesive, and may increase the coupling force between the sliding member 42 and the housing 140, thereby firmly holding the sliding member 43 to the housing 140.

At least one other portion of the sliding member 42 may project outwards from the reception portion 45 of the housing 140, and at least one other portion of the sliding member 42, which projects outwards from the reception portion 45, may be in contact with the first frame 20. For example, the at least other portion of the sliding member 42, which projects outwards from the reception portion 45, may be in contact with a groove 72 in the first frame 20.

The sliding member 42 may include a plurality of shaft members 42A to 42D. The number of shaft members may be two or more. For example, the sliding member 42 may include four shaft members 42A to 42D which are spaced apart from each other.

For example, each of the four shaft members 42A to 42D may be disposed adjacent to a corresponding one of the four corners of the housing 140. For example, each of the four shaft members 42A to 42D may be disposed between a corresponding one of the four corners of the housing 140 and the bore 140A in the housing 140.

In another embodiment, two shaft members 42A and 42B may extend in the second direction and may be connected to each other, and two shaft members 42C and 42D may extend in the second direction and may be connected to each other.

The coil 120 may move the AF moving unit in the optical axis direction by virtue of the interaction between the coil 120 and the magnet 130. The coil 120 may be disposed on the housing 140. For example, the coil 120 may be disposed on the housing 140 so as to correspond to, face or overlap the magnet 130. For example, the coil 120 may be disposed on the first lateral portion 141A. Referring to FIGs. 17A and 17B, the coil 120 may be disposed in the seating portion 142A of the housing 140.

The circuit board 190 may be disposed on, coupled to or fixed to the housing 140. For example, the circuit board 190 may include a first board 191 disposed on or coupled to the first lateral portion 141A of the housing 140.

For example, the circuit board 190 may include at least one terminal 95. For example, the circuit board 190 may include a plurality of terminals 95 (B1 to Bn, n being a natural number greater than 1). For example, the plurality of terminals 95 may be disposed on the first board 191.

For example, the plurality of terminals B1 to B5 may be disposed on the second surface of the first board 191. For example, the second surface of the first board 191 may be the opposite surface of the first surface of the first board 191. For example, the first surface of the first board 191 may be a surface which faces or is opposed to the outer circumferential surface of the bobbin 110.

For example, the first board 191 may include an extension 191A disposed between two steps of the first lateral portion 141A of the housing 140, and the plurality of terminals 95 may be disposed on the extension 191A. For example, the plurality of terminals 95 may be positioned lower than the lower portion or the lower surface of the housing 140. In another embodiment, the plurality of terminals 95 may be positioned at the same level as the lower portion or the lower surface of the housing 140, or may be positioned higher than the lower portion or the lower surface of the housing 140.

For example, the circuit board 190 may be a printed circuit board or a flexible printed circuit board.

For example, the coil 120 may be disposed on, mounted on or fixed to the circuit board 190 so as to correspond to or face the magnet 130 in the third direction (in the Y-axis direction). For example, the third direction may be a direction which is perpendicular to the optical axis and is directed toward the second lateral surface 110B from the first lateral surface 110A. Alternatively, for example, the third direction may be a direction which is perpendicular to the optical axis and is directed toward the second lateral portion 141B from the first lateral portion 141A.

For example, the coil 120 may be disposed on the first board 191 of the circuit board 190. For example, the coil, 120 may be disposed on, coupled to or fixed to the first surface of the first board 191. The coil 120 may be connected to the circuit board 190, for example, the first board 191 using a conductive adhesive or a solder. The coil 120 may be electrically connected to the circuit board 190, for example, the first board 191.

For example, the coil 120 may include a cavity. For example, the coil 120 may have the form of a ring. For example, the coil 120 may have the form of a ring wound about a line which is perpendicular both to the optical axis OA and to the outer lateral surface of the first lateral portion 141A of the housing 140. For example, the coil 120 may have the form of a ring having a length in a horizontal direction (or in the second direction) greater than a length in a vertical direction (or in the optical axis direction).

In order to generate electromagnetic force resulting from the electromagnetic interaction with the magnet 130, a drive signal may be applied to the coil 120. Here, the drive signal supplied to the coil 120 may be a DC signal, and may be a voltage type or a current type. Alternatively, for example, the drive signal applied to the coil 120 may include at least one of a DC signal and an AC signal.

The coil 120, to which the drive signal is supplied, may electromagnetically interact with the magnet 130 disposed at the bobbin 110, and an AF operation unit may be moved in the first direction by means of the electromagnetic force resulting from the electromagnetic interaction between the coil 120 and the magnet 130. By controlling the intensity and/or direction of the drive signal (for example, the drive current), it is possible to control movement of the AF operation unit in the first direction and thus to perform an autofocus function.

Referring to FIGs. 16A, 21A and 21C, for example, the length L11 of the magnet 130 in the second direction (for example, in the X-axis direction) may be equal to or greater than the length L12 of the coil 120 in the second direction. For example, the second direction may be a direction which is perpendicular to the optical axis (or the optical axis direction) and is directed toward the fourth lateral surface 110D from the third latera surface 110C of the bobbin 110. For example, the second direction may be a direction which is perpendicular to the optical axis and is directed toward the fourth lateral portion 141D from the third lateral portion 141C. In another embodiment, the length L11 may be less than the length L12.

For example, the length L11 of the magnet 130 in the second direction (for example, in the X-axis direction) may be equal to or less than the distance (or the shortest distance) between the first shaft member 21A and the second shaft member 21A. In other words, the length of the magnet 130 may be less than the distance between the first shaft member 21A and the second shaft member 21A.

In another embodiment, the length of the magnet 130 in the second direction (for example, in the X-axis direction) may be greater than the distance (or the shortest distance) between the first shaft member 21A and the second shaft member 21A. In other words, in another embodiment, the magnet 130 may extend by a distance greater than the distance between the first shaft member 21A and the second shaft member 21A. Alternatively, in another embodiment, at least a portion of the sliding member 21 may be disposed between one end and the other end of the magnet 130.

For example, the shortest distance D1 between the magnet 130 and the sliding member 21 may be greater than the thickness T1 of the magnet 130 (D1 > T1/2). For example, the distance D1 may be the shortest distance in a direction in which the magnet 130 faces the sliding member 21. For example, the thickness T1 of the magnet 130 may be the length of the magnet 130 in the third direction.

Furthermore, for example, the shortest distance D1 between the magnet 130 and the sliding member 21 may be less than three times the thickness T1 of the magnet 130 (D1 < 3T1). In another embodiment, the distance D1 may be equal to or greater than the thickness T1 but be less than twice the thickness T1. In a further embodiment, the distance D1 may be equal to or greater than 1.5 times the thickness T1 but be less than twice the thickness T1.

When the distance D1 is less than the half of the thickness T1, the distance between the sliding member 21 and the magnet 130 is excessively small and thus the attractive force between the sliding member 21 and the magnet 130 is excessively high, thereby making it difficult to move the bobbin 110 in the optical axis direction. In other words, moving the bobbin 110 in the optical axis direction may require increased power and increased power consumption.

When the distance D1 is equal to or greater than three times the thickness T1, the distance between the sliding member 21 and the magnet 130 is excessively great and thus the attractive force between the sliding member 21 and the magnet 130 is excessively low, thereby making it impossible to stably support the bobbin 110 by the sliding member 21.

The diameter R1 of the sliding member 21 may be equal to or greater than the half of the stroke of the bobbin 110 in the optical axis direction but be equal to or less than twice the stroke of the bobbin 110 in the optical axis direction. In another embodiment, for example, the diameter R1 may be equal to or greater than the half of the stroke of the bobbin 110 in the optical axis direction but be equal to or less than the 1.5 times the stroke of the bobbin 110 in the optical axis direction. For example, the stroke of the bobbin 110 in the optical axis direction may be the distance between the highest position and the lowest position of the bobbin 110. Furthermore, for example, the stroke of the bobbin 110 in the optical axis direction may be the distance between the highest position and the lowest position between which the bobbin 110 is physically movable.

The diameter R1 of the sliding member 21 may range from 0.4 mm to 2 mm. In another embodiment, the diameter R1 of the sliding member 21 may range from 0.6 mm to 1.5 mm. In a further embodiment, the diameter R1 of the sliding member 21 may range from 0.7 mm to 1 mm. When the diameter R1 is less than 0.4 mm, the diameter is excessively small, thereby making it impossible to stably support the bobbin 110. When the diameter R1 exceeds 2 mm, the diameter of the sliding member 21 may be excessively great and thus the size of the lens moving apparatus 100 in a direction perpendicular to the optical axis may increase.

For example, the stroke (or the movable distance) of the bobbin 110 in the optical axis direction may be equal to or greater than 12% of the length L1 of the sliding member 21 in the optical axis direction but be equal to or less than 50% of the length L1. When the stroke (or the movable distance) of the bobbin 110 in the optical axis direction is less than 12% of the length L1, because the length of the sliding member 21 is unnecessarily or unintentionally increased, compared to the stroke of the bobbin 110, the weight of the lens moving apparatus may be unnecessarily or unintentionally increased.

When the stroke (or the movable distance) of the bobbin 110 in the optical axis direction exceeds 50% of the length L1, the length L1 may be too small to stably support the bobbin 110, thus deteriorating reliability of AF operation. In another embodiment, the stroke (or the movable distance) of the bobbin 110 in the optical axis direction may be equal to or greater than 20% of the length L1 but be equal to or less than 40% of the length L1.

The length L1 of the sliding member 21 in the optical axis direction may be equal to or greater than the length H1 of the magnet 130 in the optical axis direction. In another embodiment, the length L1 may be less than the length H1.

For example, the length L1 of the sliding member 21 in the optical axis direction may be equal to or greater than 70% of the length H1 of the magnet 130 in the optical axis direction. Furthermore, for example, the length L1 of the sliding member 21 in the optical axis direction may be equal to or less than 150% of the length H1. In another embodiment, the length L1 may be equal to or greater than 80% of the length H1 but be equal to or less than 120% of the length H1. In a further embodiment, the length L1 may be equal to or greater than 90% of the length H1 but be equal to or less than 110% of the length H1.

When the length L1 is less than 70% of the length H1, the length of the sliding member 21 may be excessively small and thus the attractive force the sliding member 21 and the magnet 130 may be insufficient to stably support the bobbin 110 with respect to the housing 140. Meanwhile, when the length L1 exceeds 150% of the length H1, the length of the sliding member 21 may be excessively great and thus the size of the lens moving apparatus may be increased.

For example, at the highest position of the bobbin 110, the height of the upper surface (or the highest end) of the magnet 130 may be equal to or lower than the height of the upper surface (or the highest end) of the sliding member 21l. In another embodiment, at the highest position of the bobbin 110, the height of the upper surface (or the highest end) of the magnet 130 may be higher than the height of the upper surface (or the highest end) of the sliding member 21.

For example, at the lowest position of the bobbin 110, the height of the lower surface (or the lowest end) of the magnet 130 may be equal to or higher than the height of the lower surface (or the lowest end) of the sliding member 21. In another embodiment, at the lowest position of the bobbin 110, the height of the lower surface (or the lowest end) of the magnet 130 may be lower than the height of the lower surface (or the lowest end) of the sliding member 21.

The length L1 of the sliding member 21 in the optical axis direction may be equal to or greater than 40% of the distance H3 between the upper surface of the cover member 300 (or the upper surface of the upper plate 301) and the lower surface of the housing 140 (or the lower surface of the lower portion 144 but be equal to or less than the 90% of the distance H3. When the length L1 is less than 40% of the distance H3, the supporting force of the sliding member 21 with respect to the bobbin 110 may be decrease, thus making it impossible to stably support the bobbin 110 within a predetermined stroke range. Meanwhile, when the length L1 exceeds 90% of the distance H3, stable support of the bobbin 110 may be assured but the length of the sliding member 21 may be unnecessarily increased, thus increasing the weight of the lens moving apparatus. In another embodiment, the length L1 may be equal to or greater than 50% of the distance H3 but be equal to or less than 80% of the distance H3. Alternatively, in another embodiment, the length L1 may be equal to or greater than 60% of the distance H3 but be equal to or less than 80% of the distance H3.

The length H2 of the coil 120 in the optical axis direction may be less than the length L1 of the sliding member 21 in the optical axis direction. In another embodiment, the length L1 of the sliding member 21 in the optical axis direction may be equal to the length H2 of the coil 120 in the optical axis direction. In a further embodiment, the length H2 may be greater than the length L1.

For example, the length L2 of the coil 120 in the optical axis direction may be equal to or greater than the lower limit but be equal to or less than the upper limit. Here, the lower limit may be a value obtained by subtracting 30% of the length L1 from the length L1, and the upper limit may be a value obtained by adding 30% of the length L1 to the length L1. When the length H2 is less than the lower limit, the length of the coil 120 in the optical axis direction may be excessively small, thereby making it impossible to obtain a predetermined driving force required for AF operation. When the length H2 is equal to or greater than the upper limit, the length of the sliding member 21 may be excessively small, thereby making it impossible to stably support the bobbin 110 by the sliding member 21.

In a comparative example in which the shaft member is coupled to the bobbin through a portion (for example, the ring) of the bobbin, when the linearity of the shaft member is not good, there may be a problem in that the shaft member sticks to a portion (for example, the ring) of the bobbin. Furthermore, in the comparative example, in order to press the bobbin to the shaft member and thus to stably support the bobbin with respect to the housing, there is need for an additional yoke which is disposed on the housing so as to generate attractive force with respect to the magnet coupled to the bobbin.

Because the embodiment is constructed such that the bobbin 110 includes the seating portions 105A and 105B contacting a portion of the sliding member 21, sticking of the sliding member 21 caused by deteriorated linearity of the shaft member may not occur during an AF operation.

The position sensor 170 may detect the magnet 130 disposed on the bobbin 110. For example, the position sensor 170 may detect the displacement or position of the bobbin 110 in the optical axis direction.

For example, the position sensor 170 may be disposed on the housing 140. For example, the position sensor 170 may be disposed on the first lateral portion 141A of the housing 140. For example, the position sensor 170 may be disposed in the seating portion 142A of the housing 140. For example, the position sensor 170 may be disposed in the cavity in the coil 120. In another embodiment, the position sensor 170 may be disposed outside the cavity in the coil 120.

For example, the position sensor 170 may be coupled to the circuit board 190 using a conductive adhesive or a solder. For example, the position sensor 170 may be connected to the first board 191 using a conductive adhesive or a solder. For example, the position sensor 170 may be electrically connected to the circuit board 190, for example, the first board 191.

For example, the position sensor 170 may be disposed on the circuit board 190, for example, the first surface of the first board 191. For example, the position sensor 170 may be coupled to the circuit board 190, for example, the first surface of the first board 191.

For example, the position sensor 170 may correspond to, face or overlap the magnet 130 in a direction perpendicular to the optical axis.

For example, the position sensor 170 may detect the intensity of the magnetic field of the magnet 130 mounted on the bobbin 110 according to the movement of the bobbin 110, and may output an output signal corresponding to the result of detection.

The position sensor 170 may be embodied as a drive IC type including a hall sensor, or may be embodied as a position detection sensor alone, such as a Hall sensor.

For example, in the case in which the position sensor 170 is a driver IC including a Hall sensor, the position sensor 170 may transmit and receive data to and from the outside through data communication using a protocol, for example, I2C communication.

For example, in the case in which the position sensor 170 is a driver IC including a Hall sensor, the position sensor 170 may include first and second terminals to which power or a drive signal is input, a third terminal for a clock signal, a fourth terminal for a data signal, and fifth and sixth terminals for supply of a drive signal to the coil 120.

Here, each of the first to fourth terminals of the first position sensor 170 may be electrically connected to a corresponding one of the first to fourth terminals B1 to B4 of the circuit board 190. Furthermore, the fifth and sixth terminals of the position sensor 170 may be electrically connected to the first coil 120. For example, the fifth terminal of the position sensor 170 may be electrically connected to one end of the coil 120, and the sixth terminal of the position sensor 170 may be electrically connected to the other end of the coil 120.

In an embodiment in which the position sensor 170 is embodied as a Hall sensor alone, the position sensor 170 may include two input terminals and two output terminals. In this case, the circuit board 190 may include four terminals (for example, B5 and B6), which are electrically connected to two input terminals and two output terminals of the position sensor 170, and two terminals (for example, B5 and B6) electrically connected to the coil 120. Here, a drive signal may be supplied to the coil 120 via the two terminals (for example, B5 and B6) of the circuit board 190.

The capacitor 195 may be disposed on the housing 140. For example, the capacitor 195 may be disposed on the first lateral portion 140A of the housing 140. For example, the capacitor 195 may be disposed in the seating portion 142A of the housing 140. For example, the capacitor 195 may be disposed in the cavity in the coil 120.

The capacitor 195 may be disposed on or coupled to the circuit board 190, for example, the first board 191. For example, the capacitor 195 may be disposed on or coupled to the circuit board 180, for example, the first surface of the first board 191. The capacitor 195 may be configured to have a chip shape. The chip may include a first terminal, which corresponds to one end of the capacitor 195, and a second terminal, which corresponds to the other end of the capacitor 195. The capacitor 195 may alternatively be referred to as a "capacitive element" or "condenser".

The capacitor 195 may be electrically connected in parallel to first and second terminals (for example, B1 and B2) of the circuit board 190 through which power (or a drive signal) is supplied to the position sensor 170 from the outside. Alternatively, the capacitor 195 may be electrically connected in parallel to the first and second terminals of the first position sensor 170 to which power or a drive signal is supplied.

Since the capacitor 195 is electrically connected in parallel to the first and second terminals of the position sensor 170 or the first and second terminals of the circuit board 190, the capacitor 195 is capable of serving as a smoothing circuit for eliminating ripple components included in the power which is supplied to the position sensor 170 from the outside, and is thus capable of supplying stable and consistent power signals to the first position sensor 170.

The coil 230 may move the OIS moving unit in a direction perpendicular to the optical axis by virtue of the interaction with the magnets 31 and 23. The coil 230 may be disposed on the housing 140.

For example, the coil 230 may correspond to, face or overlap the magnets 31 and 23 in a direction perpendicular to the optical axis or in a horizontal direction.

For example, the coil 230 may include the coil unit 230-1 disposed on the housing 140 so as to correspond to, face or overlap the magnet 31, and the coil unit 230-2 disposed on the housing so as to correspond to, face or overlap the magnet 23.

For example, the coil unit 230-1 may be disposed on the second lateral portion 141B of the housing 140. Furthermore, for example, the coil unit 230-2 may be disposed on the fourth lateral portion 141D of the housing 140. In another embodiment, the coil unit 230-2 may be disposed on the third lateral portion 141C of the housing 140.

Referring to FIGs. 17A and 17B, the coil unit 230-1 may be disposed in the first seating portion 144 of the housing 140, and the coil unit 230-2 may be disposed in the second seating portion 143A of the housing 140.

The circuit board 190 may include a second board 192 disposed on or coupled to the second lateral portion 141B and a third board 193 disposed on or coupled to the fourth lateral portion 141D (or the third lateral portion 141C) of the housing 140. For example, the third board 193 may connect the first board 191 to the second board 192.

For example, the coil unit 230-1 may be disposed on, mounted on or fixed to the circuit board 190 so as to correspond to, face or overlap the magnet 31 in the third direction (or in the Y-axis direction). For example, the coil unit 230-1 may be disposed on the second board 192. For example, the coil unit 230-1 may be disposed on, coupled to or fixed to the first surface of the second board 192 that faces or is opposed to the outer circumferential surface of the bobbin 110. The coil unit 230-1 may be connected to the circuit board 230-1, for example, the second board 192 using a conductive adhesive or a solder. The coil unit 230-1 may be electrically connected to the circuit board 190, for example, the second board 192.

The coil unit 230-1 may include two coil units 230A and 230B or two coil bodies. In another embodiment, the coil unit 230-1 may include one coil unit or one coil body.

For example, each of the two coil units may be disposed so as to correspond to, face or overlap a corresponding one of the two magnet units 31A and 31B.

For example, the coil unit 230-2 may be disposed on, mounted on or fixed to the circuit board 190 so as to correspond to, face or overlap the magnet 23 in the second direction (in the X-axis direction). For example, the second direction (the X-axis direction) may be a direction which is perpendicular to the optical axis and is directed toward the fourth lateral surface 110D from the third lateral surface 110C of the bobbin 110. Furthermore, for example, the second direction may be a direction which is perpendicular to the optical axis and is directed toward the fourth lateral portion 141D from the third lateral portion 141C of the housing 140.

For example, the coil unit 230-2 may be disposed on the third board 193 of the circuit board 190. For example, the coil unit 230-2 may be disposed on, coupled to or fixed to the third board 193 which faces or is opposed to the outer circumferential surface of the bobbin 110. The coil unit 230-2 may be connected to the circuit board 190, for example, the third board 193 using a conductive adhesive or a solder.

For example, the coil unit 230-1 may include a cavity. For example, each of the two coil units 230A and 230B may include a cavity. The coil unit 230-1 may have a ring shape. For example, each of the two coil units 230A and 230B may have a ring shape. For example, the coil unit 230-1 may have the form of a ring which is wound around a line which is perpendicular to the optical axis OA and is perpendicular to the outer surface of the second lateral portion 141B of the housing 140.

Furthermore, the coil unit 230-2 may include a cavity. For example, the coil unit 230-2 may have a ring shape. For example, the coil unit 230-2 may have the form of a ring which is wound around a line which is perpendicular to the optical axis OA and is perpendicular to the outer surface of the fourth lateral portion 141D (or the third lateral portion 141C) of the housing 140.

In another embodiment, each of the coil units 120 and 230 may be formed on the circuit board 190 in the form of an FP (fine pitch) coil.

In order to create electromagnetic force resulting from the electromagnetic interaction between the magnet 31 and the coil 230-1, a first drive signal may be applied to the coil 230-1. For example, the two coil units 230A and 230B may be connected to each other in series. A first drive signal may be supplied to the two coil units 230A and 230B which are connected to each other in series. For example, the coil unit 230-1 may include a connecting line which connects the two coil units 230A and 230B to each other in series.

In order to create electromagnetic force resulting from electromagnetic interaction between the magnet 23 and the coil 230-2, a second drive signal may be applied to the coil 230-2.

The first and second drive signals may be independent signals. Furthermore, each of the first and second drive signals may be of a DC signal. Furthermore, each of the first and second drive signals may be a voltage type or a current type. Furthermore, for example, each of the first and second drive signals may include at least one of a DC signal or an AC signal.

The OIS moving unit may be movable in the second direction (for example, in the X-axis direction) by virtue of the interaction between the magnet 31 and the coil unit 230-1 to which the first drive signal is applied, and the OIS moving unit may be movable in the third direction (for example, in the Y-axis direction) by virtue of the interaction between the magnet 23 and the coil unit 230-2 to which the second drive signal is applied.

The position sensor 240 may detect the magnets 31 and 23 disposed on the OIS moving unit. For example, the position sensor 240 may detect displacement or position of the OIS moving unit, for example, the frame 10 in a direction perpendicular to the optical axis.

For example, the position sensor 240 may be disposed on the housing 140. For example, the position sensor 240 may include a first sensor 240A disposed on the second lateral portion 141B of the housing 140 and a second sensor 240B disposed on the fourth lateral portion 141D of the housing 140.

For example, the first sensor 240A may be disposed so as to correspond to, face or overlap the magnet 31 in the third direction (for example, in the Y-axis direction). For example, the second sensor 240B may be disposed so as to correspond to, face or overlap the magnet 23 in the second direction (for example, in the X-axis direction).

For example, the first sensor 240A may be disposed in the first seating portion 144A of the housing 140. For example, the second sensor 240B may be disposed in the second seating portion 43A of the housing 140.

For example, the first sensor 240A may be disposed in the cavity in the coil unit 230-1, for example, the coil unit 230A. The second sensor 240B may be disposed in the cavity in the coil unit 230-2. In another embodiment, the first sensor 240A (or the second sensor 240B) may be disposed outside the cavity in the coil unit 230-1 (or 230-2).

For example, the first sensor 240A and the second sensor 240B may be coupled to the circuit board 190 using a conductive adhesive or a solder. For example, the first sensor 240A may be connected to the second board 192 using a conductive adhesive or a solder, and the second sensor 240B may be connected to the third board 192 using a conductive adhesive or a solder. For example, the first sensor 240A may be electrically connected to the circuit board 190, for example, the second board 192, and the second sensor 240B may be electrically connected to the circuit board 190, for example, the third board 193.

For example, the first sensor 240A may be disposed on the circuit board 190, for example, the first surface of the second board 192. For example, the first sensor 240A may be coupled to the circuit board 190, for example, the first surface of the second board 192. For example, the second sensor 240B may be disposed on the circuit board 190, for example, the first surface of the third board 193. For example, the second sensor 240B may be coupled to the circuit board 190, for example, the first surface of the third board 193.

For example, the first sensor 240A may detect the magnetic field intensity of the magnet 31 according to movement of the OIS moving unit, and may output the first output signal corresponding to the result of detection. For example, the second sensor 240B may detect the magnetic field intensity of the magnet 23 according to the movement of the OIS moving unit, and may output the second output signal corresponding to the result of detection.

Each of the first sensor 240A and the second sensor 240B may be embodied as a driver IC including a Hall sensor or may be embodied as a position detection sensor, such as a Hall sensor, alone. Here, the description of the case in which the position sensor 170 is embodied as a driver IC including a Hall sensor may be applied to the first sensor 240A and the second sensor 240B with or without modification. In addition, the description of the case in which the position sensor 170 is embodied as a position detection sensor, such as a Hall sensor, may be applied to the first sensor 240A and the second sensor 240B with or without modification.

Referring to FIGs. 18A to 20, the frame 10 may be disposed in the housing 140. The bobbin 110 may be disposed in the frame 10. The frame 10 may be movable in the second direction or in the third direction. The frame 10 may alternatively be referred to as a "carrier", a "moving portion", a "holder", a "case", or a "base".

For example, the frame 10 may include the first frame 20 and the second frame 30 disposed on the first frame 20.

Referring to FIG. 15, the first frame 20 may include a bore 20A or a cavity configured to receive the bobbin 110. The bore 20A in the first frame 20 may be a through-hole (or the cavity) formed through the first frame 20 in the optical axis direction.

The first frame 20 may include first to fourth lateral portions 51A to 51D which respectively correspond to, faces or overlaps the first to fourth lateral surfaces 110A to 110D of the bobbin 110 or the first to fourth lateral portions 141A to 141D of the housing 140.

For example, the inner surfaces of the lateral portions 51A to 51D of the first frame 20 may be provided with one or more grooves 4A to 4D. For example, the first to fourth lateral portions 51A to 51D may be provided with grooves 4A to 4D which are depressed from the inner surfaces thereof.

The first frame 20 may include a seating portion 3 in which the magnet 31 is received or disposed. For example, the seating portion 3 may be disposed on the second lateral portion 51B of the first frame 20. For example, the seating portion 3 may have the form of a groove. For example, the seating portion 3 may be a groove formed in the second lateral portion 5B of the first frame 20. In another embodiment, the seating portion 3 may have the form of a through-hole. For example, the shape of the seating portion 3 may coincide with or be identical to the shape of the magnet 31.

For example, the first frame 20 may include a projection 35 which projects from the upper surface of the second lateral portion 51B of the first frame 20 in the optical axis direction or in an upward direction, and the seating portion 3 may be formed in the projection 35. For example, the seating portion 3 may be a groove depressed from the outer surface of the projection 35.

For example, the first frame 20 may include a first projection 35A and a second projection 35B, which project from the upper surface of the second lateral portion 51B in the optical axis direction or in an upward direction. A first seating portion 3A may be formed in the first projection 35A, and a second seating portion 3B may be formed in the second projection 35B. The magnet unit 31A may be disposed in the first seating portion 35A, and the magnet unit 31B may be disposed in the second seating portion 35B. In another embodiment, the number of seating portions 3 of the first frame 20 may be one, and the magnet 31 may include on magnet unit and may be disposed in the seating portion 3.

Referring to FIGs. 18C and 18D, the first frame 20 may include a groove 72 in which at least one other portion of the sliding member 42 is disposed, seated or inserted. For example, the groove 72 may be depressed from the lower surface 81A of the first frame 20. The lower surface 81A of the first frame 20 may be opposed to or face the upper surface 145 of the lower portion 145 of the housing 140.

The groove 72 may serve as a guide member configured to suppress escaping of the first frame 20 from the sliding member 42 when the first frame 20 is moved along the sliding member 42 in the second direction (for example, in the X-axis direction). For example, the groove 72 may alternatively be referred to as a "reception groove", a "guide groove", a "guide portion", or a "rail groove".

The groove 72 may include a plurality of grooves 45A to 45D which are spaced apart from each other. For example, the groove 72 may include four grooves 72A to 72D, and each of the four grooves 72A to 72D may be disposed adjacent to a corresponding one of the four corners of the first frame 20.

For example, each of the four grooves 72A to 72D may be disposed between a corresponding one of the four corners of the first frame 20 and the bore 20A in the first frame 20.

The groove 72 may correspond to, face or overlap the reception portion of the housing 140 in the first direction or in the optical axis direction. For example, each of the plurality of grooves 72A to 72D of the first frame 20 may correspond to, face or overlap a corresponding one of the plurality of grooves 45A to 45D of the housing 140 in the first direction or in the optical axis direction.

For example, the groove 72 may correspond to, face or overlap the sliding member 42 in the first direction or in the optical axis direction. For example, each of the plurality of grooves 72A to 72D of the first frame 20 may correspond to, face or overlap a corresponding one of the plurality of shaft members 42A to 42D in the first direction or in the optical axis direction.

For example, the groove 72 may extend in the second direction. For example, the length K1 of the groove 71 in the second direction may be greater than the length K2 of the groove 72 in the third direction. The length K1 may be the shortest length of the groove 72 in the second direction, and the length K2 may be the shortest length of the groove 72 in the third direction. In another embodiment, the length of the groove 72 in the second direction may be equal to the length of the groove 72 in the third direction.

For example, the length K1 of the groove 72 in the second direction may be greater than the length L3 of the sliding member 42 in the second direction. In another embodiment, the length K1 and the length L3 may be equal to each other.

For example, the length L3 of the sliding member 42 in the second direction may be greater than the length R3 of the sliding member 42 (or the diameter of the sliding member 42) in the third direction (or in the first direction). In another embodiment, the length L3 and the length R3 may be equal to each other.

For example, the length K1 of the groove 72 in the second direction may be greater than the length M of the groove 45 in the housing 140 in the second direction. Because the length K1 is greater than the length M1, the first frame may be easily movable in the second direction. In another embodiment, the length K1 and the length M1 may be equal to each other. The length M1 of the groove 45 in the housing 140 in the second direction may be greater than the length M2 of the groove 45 in the third direction. In another embodiment, the length M1 and the length M2 may be equal to each other.

For example, the groove 72 may include an opening at the outer surface of the first frame 20. In another embodiment, the groove 72 may not be open but be closed at the outer surface of the first frame 20. For example, the groove 72 may not be open but be closed at the inner surface of the first frame 20.

Referring to FIG. 18D, the groove 72 may include a first surface 7A having a height difference with respect to the lower surface 81A of the first frame 20, a second surface 7B connecting one side of the first surface 71 to the lower surface 81A, and a third surface 7C connecting the other side of the first surface 7A to the lower surface 81A. The first surface 7A may be positioned higher than the lower surface 81A, and may be positioned closer to the upper surface 81B of the first frame than to the lower surface 81A. For example, the second surface 7B and the third surface 7C may be sloping surfaces with respect to the first surface 7A. In another embodiment, the groove 72 may exclude the first surface 7A. Here, the second surface 7B (referred to hereinafter as a "first surface") and the third surface 7C (referred to hereinafter as a "second surface") may meet each other, and a boundary line may be formed between the second surface 7B and the third surface 7C.

For example, the sliding member 42 may be in contact with at least one of the first to third surfaces of the groove 72. The contact region or area between the first frame 20 and the sliding member 42 may be decided according to the shape of the groove 72 of the first frame 20. For example, when the groove 72 has a V shape, the V-shaped inner surface (for example, two surfaces) of the groove 72 in the frame 20 may be in contact with the sliding member 42.

For example, when viewed in the first direction or from below, the shape of the groove 72 or the cross-sectional shape of the groove 72 in the first direction may be a triangular shape, a semicircular shape, or a polygonal shape (for example, a quadrilateral shape, a pentagonal shape or the like). Alternatively, for example, the groove 72 may have a "V" shape or a "U" shape.

Referring to FIGs. 18A and 18B, the first frame 20 may include a reception portion 71 configured to hold or support the sliding member 41. The reception portion 71 may alternatively be referred to as a "holding portion", a "groove", or a "reception groove". The reception portion 71 may be disposed or formed in the upper surface 81B of the first frame 20. For example, the reception portion 71 may be disposed or formed in the upper surface 81B of at least one of the lateral portions 51A to 51D of the first frame 20. For example, the reception portion 71 may be a groove depressed from the upper surface 81B of the first frame 20.

For example, the reception portion 71 may include a plurality of grooves. For example, the number of reception portions may be two or more. For example, the reception portion 71 may include four grooves 71A to 71D which are spaced apart from one another. For example, each of the four grooves 71A to 71D may be disposed adjacent to a corresponding one of the four corners of the first frame 20.

For example, each of the four grooves 71A to 71D may be disposed between a corresponding one of the four corners of the first frame 20 and the bore 20A in the first frame 20.

The sliding member 41 may be coupled or fixed to the first frame 20 using an adhesive. For example, at least a portion of the sliding member 41 may be coupled or fixed to the first frame 20.

For example, the sliding member 41 may be coupled or fixed to the upper portion or the upper surface 81B of the first frame 20. For example, at least a portion of the sliding member 41 may be coupled or fixed to the reception portion 71 of the first frame 20. For example, the groove-shaped reception portion 71 may increase the contact area with the sliding member 41 and an adhesive and may increase the coupling force between the sliding member 41 and the first frame 20, thereby firmly fixing the sliding member 41 to the first frame 20.

At least one other portion of the sliding member 41 may project outwards from the reception portion 71 of the first frame 20, and the at least other portion of the sliding member 41, which projects outwards from the reception portion 71, may be in contact with the second frame 30. For example, the at least other portion of the sliding member 41, which projects outwards from the reception portion 71 may be in contact with the groove 61 in the second frame 30.

The sliding member 41 may include a plurality of shaft members 41A to 41D. The number of shaft members may be two or more. For example, the sliding member 41 may include four shaft members 41A to 41D which are spaced apart from one another.

For example, each of the four shaft members 41A to 41D may be disposed adjacent to a corresponding one of the four corners of the first frame 20. For example, each of the four shaft members 41A to 41D may be disposed between a corresponding one of the four corners of the first frame 20 and the bore 20A in the second frame 20.

In another embodiment, two shaft members 41A and 41D may extend in the third direction and may be connected to each other, and the other two shaft members may extend in the third direction and may be connected to each other.

Referring to FIGs. 19A to 19C, the second frame 30 may include a bore 30A or a cavity in which the bobbin 110 is to be received. The bore 30A (or the cavity) in the second frame 30 may be a through-hole formed through the second frame 30 in the optical axis direction.

The second frame 30 may include first to fourth lateral portions 41A to 41D which respectively correspond to, face or overlap the first to fourth lateral surfaces 110A to 110D of the bobbin 110 or the first to fourth lateral portions 141A to 141D of the housing 140.

The first to fourth lateral portions 41A to 41D of the second frame 30 may respectively correspond to, face or overlap the first to fourth lateral portions 51A to 51D of the first frame 20.

For example, the inner surfaces of the lateral portions 41A to 41D of the second frame 30 may be one or more grooves 4E to 4G. For example, the first to fourth lateral portions 41A to 41D may be provided with the grooves 4E to 4G which are depressed from the inner surfaces thereof.

At least portions of the projections 118A to 118D of the bobbin 110 may be disposed in the grooves 4A to 4D in the first frame 20 and the groove 4F to 4H in the second frame 20. By virtue of the projections 118A to 118D of the bobbin 110 and the grooves 4A to 4H in the first and second frames 20 and 30, it is possible to prevent the bobbin 110 from being rotated or tilted about the optical axis beyond a predetermined range.

The second frame 30 may include a seating portion 25 in which the magnet 23 is to be received or disposed. For example, the seating portion 25 may be disposed on the fourth lateral portion 41D of the second frame 30. In another embodiment, the seating portion 25 may be disposed on the third lateral portion 41C of the second frame 30. For example, the seating portion 25 may have the form of a through-hole. For example, the seating portion 25 may be a cavity or a through-hole which is formed through the fourth lateral portion 41D of the second frame 30. In another embodiment, the seating portion 25 may have the form of a groove. The shape of the seating portion 25 may coincide with or be identical to the shape of the magnet 23.

The second frame 30 may include the groove 61 in which at least one other portion of the sliding member 41 is disposed, seated or inserted. For example, the groove 61 may be depressed from the lower surface 48A of the second frame 30. The lower surface 48A of the second frame 30 may be opposed to or face the upper surface 81B of the first frame 20.

The groove 61 may serve as a guide member configured to suppress escape of the second frame 30 from the sliding member 41 when the second frame 30 is moved along the sliding member 41 in the third direction (for example, in the Y-axis direction) . For example, the groove 61 may alternatively be referred to as a "reception groove", a "guide groove", a "guide portion", or a "rail groove".

The groove 61 may include a plurality of grooves 61A to 61D which are spaced apart from one another. For example, the groove 61 may include four grooves 61A to 61D, and each of the four grooves 61A to 61D may be disposed adjacent to a corresponding one of the four corners of the second frame 30.

For example, each of the four grooves 61A to 61D may be disposed between a corresponding one of the four corners of the second frame 30 and the bore 30A in the second frame 30.

The groove 61 in the second frame 30 may correspond to, face or overlap the reception portion 71 of the first frame 20 in the first direction or in the optical axis direction.

For example, each of the plurality of grooves 61A to 61D in the second frame 30 may correspond to, face or overlap a corresponding one of the plurality of groves 71A to 71D in the first frame 20 in the first direction or in the optical axis direction.

For example, the groove 61 in the second frame 30 may correspond to, face or overlap the sliding member 41 in the first direction or in the optical axis direction. For example, each of the plurality of grooves 61A to 61D in the second frame 30 may correspond to, face or overlap a corresponding one of the plurality of shaft members 41A to 41D of the sliding member 41 in the first direction or in the optical axis direction.

For example, the groove 61 may extend in the third direction (for example, in the Y-axis direction). For example, the length Q1 of the groove in the third direction may be greater than the length Q2 of the groove 61 in the second direction. The length Q1 may be the shortest length of the groove 61 in the third direction, and the length Q2 may be the shortest length of the groove 61 of the second direction. In another embodiment, the length of the groove 61 in the second direction may be equal to the length of the groove 61 in the third direction.

For example, the length Q1 of the groove 61 in the third direction may be greater than the length L2 of the sliding member 41 in the third direction (Q1 > L2). In another embodiment, the length Q1 and the length L2 may be equal to each other. The length L2 of the sliding member 41 in the third direction may be greater than the length R2 of the sliding member 41 (or the diameter of the sliding member 41). In another embodiment, the length L2 and the length R2 may be equal to each other.

For example, the length Q1 of the groove 61 in the second frame 30 in the third direction may be greater than the length E1 of the reception portion 71 of the first frame 20 in the third direction. Because the length Q1 is greater than the length E1, it is easy for the second frame 30 to move in the third direction. In another embodiment, the length Q1 and the length E1 may be equal to each other. For example, the length E1 of the reception portion 71 of the first frame 20 may be greater than the length E2 of the reception portion 17 in the second direction. In another embodiment, the length E1 and the length E2 may be equal to each other.

For example, the groove 61 may include an opening at the outer surface of the second frame 30. In another embodiment, the groove 61 may not be open but be closed at the outer surface of the second frame 20. For example, the groove 61 may not be open but be closed at the inner surface of the first frame 20. The description of the first to third surfaces 7A to 7C of the groove 72 in the first frame 20 shown in FIG. 18D may be applied to the groove 61 in the second frame 30 shown in FIG. 19B with or without modification.

For example, the sliding member 41 may be in contact with at least one of the first to third surfaces 7A to 7C of the groove 61. The contact region or area between the second frame 30 and the sliding member 41 may be decided according to the shape of the groove 61 in the second frame 30. For example, when the groove 61 has a V shape, the inner surface (for example, two surfaces) of the V-shaped inner surface of the groove 61 in the frame 30 may be in contact with the sliding member 41.

For example, the shape of the groove 61 when viewed in the first direction or from below or the cross-sectional shape of the groove 61 in the first direction may be a triangular shape, a semicircular shape, or a polygonal shape (for example, a quadrilateral shape, a pentagonal shape or the like). Alternatively, the groove 61 may have a "V" shape or a "U" shape.

Referring to FIGs. 18A and 18B, the upper surface 81B of the first frame 20 may be provided with a groove 82, and the lower surface of the second frame 30 may be provided with a projection 49 corresponding to the groove 82 in the first frame 20. The groove 82 may be depressed from the upper surface 81B of the first frame 20, and the projection 49 may project from the lower surface 48A of the second frame 30.

For example, the groove 82 may include an opening at the outer surface of the first lateral portion 51a of the first frame 20.

For example, the projection 49 of the second frame 30 may be inserted into or disposed in the groove 82 in the first frame 20. For example, the groove 82 may be disposed on the upper surface of the first lateral portion 51A of the first frame 20, and the projection 49 may be disposed on the lower surface of the first lateral portion 41A of the second frame 30. By virtue of the groove 82 in the first frame 20 and the projection 49 of the second frame 30, it is possible to guide movement of the second frame 30 in the third direction. By virtue of the groove 82 in the first frame 20 and the projection 49 of the second frame 30, it is possible to guide the position in which the second frame 30 is disposed on the first frame 20.

The second frame 30 may include a reception portion 28 in which the magnet 180 is to be disposed. For example, the reception portion 28 may be disposed on the third lateral portion 41C of the second frame 30. For example, the reception portion 28 may be a groove depressed from the upper surface 48B of the second frame 30. For example, the reception portion 28 may include an opening at the upper surface 48B of the second frame 30. Furthermore, for example, the reception portion 28 may include an opening at the outer surface of the third lateral portion 41C of the second frame 30.

Furthermore, the second frame 30 may include a reception portion 26 in which the sliding member 21 is to be received. The reception portion 26 may be disposed on the first lateral portion 41A of the second frame 30.

In order to assure the movable range or the stroke range in the optical axis direction, the lower end of the sliding member 21 may be coupled to a region of the second frame 30 positioned lower than the upper surface 48B of the second frame 30.

For example, the second frame 30 may include a first surface 48C having a height difference with reference to the upper surface 48B of the second frame 30. For example, the first surface 48C may be positioned below the upper surface 48B of the second frame 30. For example, the first surface 48C may be a portion of the upper surface of the first lateral portion 41A of the second frame 30.

For example, the reception portion 26 may be a groove depressed from the first surface 48C of the second frame 30. In another embodiment, the reception portion 26 may be a through-hole. The lower portion or the lower end of the sliding member 21 may be coupled or fixed to the reception portion 26 using an adhesive. Another portion of the sliding member 21 may be disposed in the seating portion 105 of the bobbin 110.

The reception portion 26 may include two grooves 26A and 26B which correspond to, face or overlap the two shaft members 21A and 21B.

The second frame 30 may include a support 9 which is disposed around the reception portion 28 and projects from the first surface 48C in the first direction. The support 8 may alternatively be referred to as a "protrusion", a "projection", or a "guide portion". When viewed from above, although the support 9 has a semicircular shape or a semi-elliptical shape, the support 9 may have a circular shape or an elliptical shape in another embodiment.

The support 9 may include a first support 9A disposed adjacent to the first groove 9A in the second frame 30 and a second support 9B disposed adjacent to the second groove 9A in the second frame 30. The support 9 may support a region of the sliding member 21 abutting one end of the sliding member 21 disposed in the reception portion 9 of the second frame 30.

Referring to FIGs. 19A and 21C, for example, a region of the sliding member 210 supported by the support 9 may be a region which is positioned opposite the region contacting the groove 33 in the bobbin 110. Alternatively, a region of the sliding member 21 supported by the support 9 may be a region of the sliding member 21 which is opposed to or faces the second lateral portion 41B of the second frame 30.

For example, the support 9 may correspond to, face or overlap the seating portion 105 of the bobbin 110 in the optical axis direction. Because the support 9 overlaps the seating portion 105 of the bobbin 110 in the optical axis direction, it is possible to avoid spatial interference with the bobbin 110 of the support 9 when the bobbin 110 moves in the optical axis direction.

The second frame 30 may include a second surface 48DF which is positioned higher than the first surface 48C but lower than the upper surface 48B. For example, the second surface 48D may be positioned at the first lateral portion 41A of the second frame 30. For example, the second surface 48D may be positioned between the first surface 38C and the upper surface 48B.

The magnet 31 may be disposed on the first frame 20. For example, the magnet 31 may be disposed on the second lateral portion 51B of the first frame 20. The magnet 31 may include a first magnet unit 31A and a second magnet unit 31B.

The magnet 23 may be disposed on the second frame 30. For example, the magnet 23 may be disposed on the fourth lateral portion 41D of the second frame 30.

Each of the magnets 31 and 23 may be a monopolar magnetized magnet, which includes different polarities and an interface plane naturally formed between the different polarities. For example, each of the magnets 31 and 23 may be a monopolar magnetized magnet in which the N pole is separated from the S pole in a direction perpendicular to the optical axis. In another embodiment, each of the magnets 31 and 23 may be a monopolar magnetized magnet in which the N pole is separated from the S pole in the optical axis direction.

In a further embodiment, each of the magnets 31 and 23 may also be a tetrapolar magnet or a bipolar magnetized magnet in order to increase electromagnetic force. For example, each of the magnets 31 and 23 may include a first magnet having an N pole and an S pole, a second magnet having an S pole and an N pole, and a partition wall disposed between the first magnet and the second magnet.

At least a portion of the sliding member 21 may be coupled or fixed to the second frame 30. For example, at least a portion of the sliding member 21 may be coupled or fixed to the reception portion 26 of the second frame 30 using an adhesive. The sliding member 21 may support the bobbin 110 with respect to the second frame 30 such that the bobbin 110 is movable in the optical axis direction.

At least a portion of the bobbin 110, for example, the seating portion 105 may be in contact with at least a portion of the sliding member 21. For example, the groove 33 in the bobbin 110 may be in contact with at least one other portion of the sliding member 210.

In order to reduce the frictional force between the bobbin 110 and the sliding member 21, a lubricant may be disposed between the bobbin 110 and the sliding member 21. For example, although the lubricant may be a grease-based lubricant, for example, SDM (steel dust meter)-378 grease, the present disclosure is not limited thereto.

For example, the lubricant may be disposed between the seating portion 105 of the bobbin 110 and the sliding member 21. Furthermore, for example, the lubricant may be disposed between the groove 33 in the seating portion 105 and the sliding member 21. By virtue of the lubricant, sliding movement of the bobbin 110 with respect to the sliding member 21 may be smoothly performed.

The sliding member 42 may be disposed between the housing 140 and the first frame 20. At least a portion of the sliding member 42 may be coupled or fixed to the housing 140.

At least one other portion of the sliding member 42 may be in contact with the first frame 20.

In order to reduce the frictional force between the first frame 20 and the sliding member 42, a lubricant may be disposed between the first frame 20 and the sliding member 42. For example, the lubricant may be disposed between the groove 72 in the first frame 20 and the sliding member 42. For example, the lubricant may be disposed in the groove 72 in the first frame.

The first frame 20 may be disposed on the sliding member 42, and may be slidable and slidably movable along the sliding member 42 in the second direction (for example, in the X-axis direction). For example, the first frame 20 may not be movable in the third direction (for example, in the Y-axis direction).

Furthermore, the sliding member 41 may be disposed between the first frame 20 and the second frame 30. At least a portion of the sliding member 41 may be coupled or fixed to the first frame 20.

At least one other portion of the sliding member 41 may be in contact with the second frame 30.

In order to reduce the frictional force between the second frame 30 and the sliding member 41, a lubricant may be disposed between the second frame 30 and the sliding member 41. For example, the lubricant may be disposed between the groove 71 in the second frame 30 and the sliding member 41. For example, the lubricant may be disposed in the groove 71 in the second frame 30.

The second frame 30 may be disposed on the sliding member 41, and may be slidable or slidably movable along the sliding member 41 in the third direction (for example, in the Y-axis direction).

Referring to FIG. 20, the lower portion (or the lower surface) of the second frame 30 may be spaced apart from the upper portion (or the upper surface) of the first frame 10 by a predetermined distance d1. Furthermore, the end of one side (or a lateral surface) of the second frame 30 may be spaced apart from the end of one side (or the projection 35) of the first frame 10 by a predetermined distance d2. The reason for this is to allow the second frame 30 to be moved along the sliding member 41 in the third direction.

One of the sliding members 41 may alternatively be referred to as a "first sliding member", and the other of the sliding members 41 and 42 may alternatively be referred to as a "second sliding member".

Each of the sliding members 41 and 42 may alternatively be referred to as a "shaft", a "shaft member", a "support member", a "pin member", or a "rod member". For example, each of the sliding members 41 and 42 may have an outer rounded circumferential surface for reduction of frictional force. For example, the cross-section of each of the sliding members 41 and 42 taken in the optical axis direction may have a circular shape or an elliptical shape.

Each of the sliding members 21, 41 and 42 may be a magnetic body or may include a magnetic body. The magnetic body may be a ferromagnetic material. For example, each of the sliding members 21, 41 and 42 may be a metal material (for example, iron) having magnetism or may include a metal material (for example, iron) having magnetism.

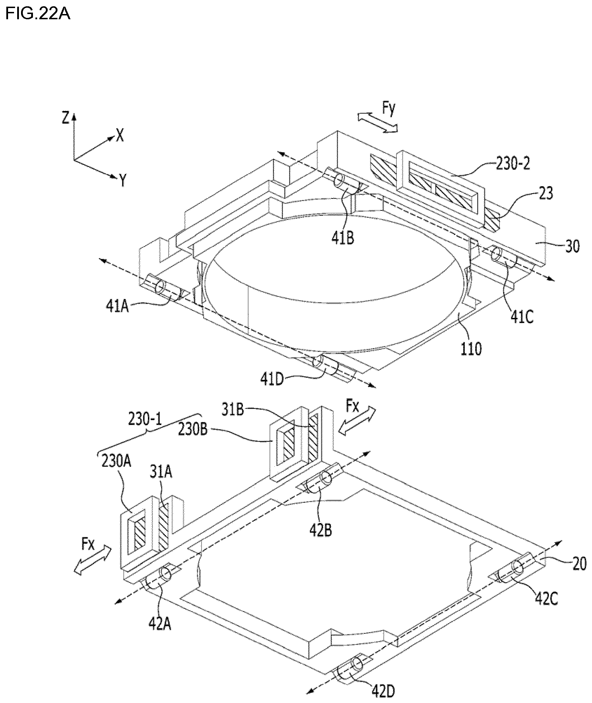

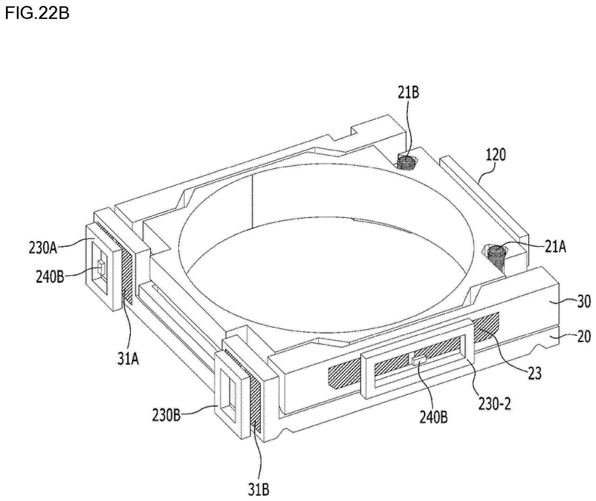

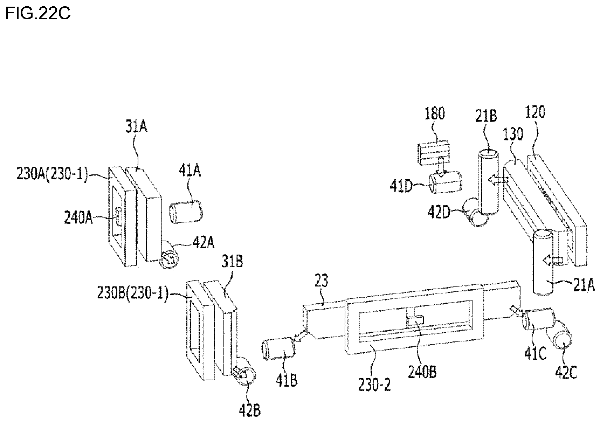

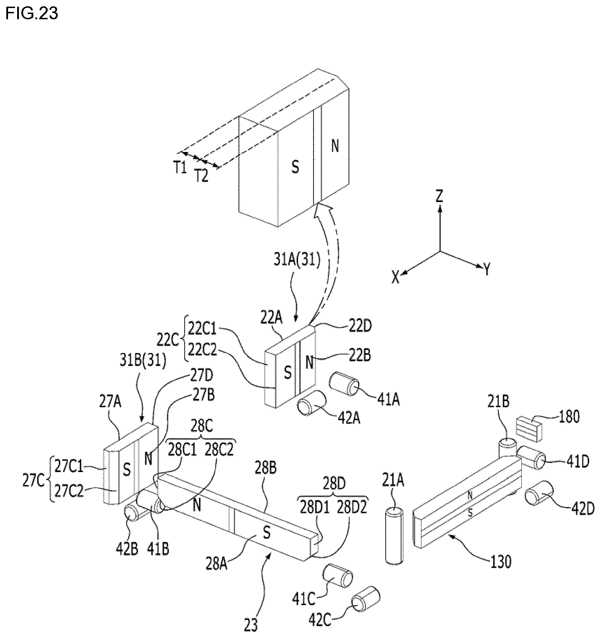

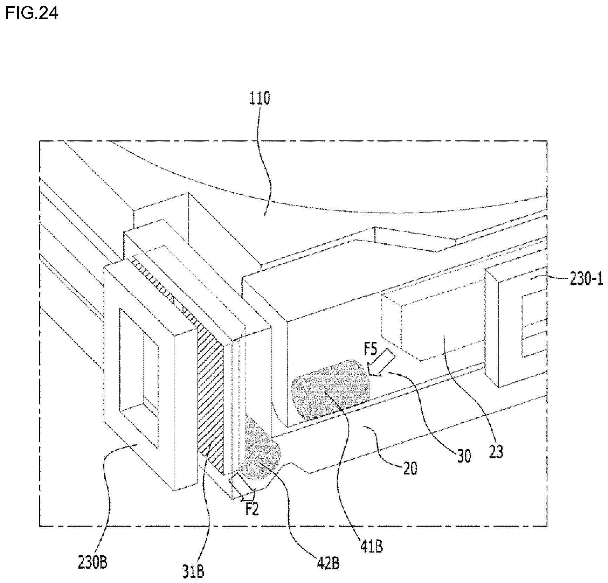

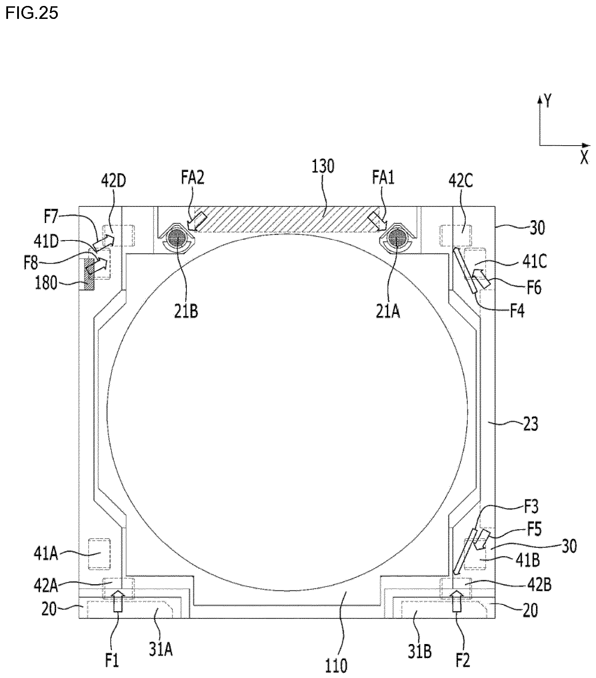

FIG. 22A illustrates electromagnetic force acting on the first and second frames 20 and 30. FIG. 22B is a perspective view of the coils 230-1 and 230-2, the magnets 31 and 23, and the first and second frames 20 and 230. FIG. 22C is a perspective view of the coils 120 and 230, the magnets 31, 23 and 130, the sliding members 21, 41 and 42, and the position sensor 240. FIG. 23 is a perspective view of the magnets 31, 23 and 130 and the sliding members 21, 41 and 42. FIG. 24 illustrates the attractive force between the magnets 31B and 23 and the sliding members 41B and 42B. FIG. 25 illustrates the attractive force acting between the magnets 31 and 23 and the sliding members 41 and 42.

Attractive force FA1 and FA2 may act between the sliding member 21 and the magnet 130. By virtue of the attractive force FA1 and FA2 acting between the sliding member 21 and the magnet 130, the bobbin 110 may be in close contact with the sliding member 21, and a predetermined force may be applied to the sliding member 21. As a result, the bobbin 110 may be supported by the sliding member 21 by the predetermined force.

Attractive force FA1 and FA2 may be generated between the sliding member 21 fixed to the second frame 30 and the magnet 130 coupled to the bobbin 110. By virtue of the attractive force FA1 and FA2, the sliding member 21 positioned between the bobbin 110 and the housing 140 may be pressed by the bobbin 110 and the housing 140, and thus the sliding member 21 may stably support the bobbin 110 with respect to the second frame 30.

In order to increase the attractive force FA1 and FA2 between the sliding member 21 and the magnet 130, the corner portion of the magnet 130 adjacent to the sliding member 21 may be eliminated so as to have a chamfered portion.

For example, the corner portion of one end of the magnet 130 adjacent to the first shaft member 21A of the sliding member 21 may be eliminated by chamfering, and one end of the magnet 130 may have a first flat surface 17A opposed to the first shaft member 21A.

The corner portion of the other end of the magnet 130 adjacent to the second shaft member 21B of the sliding member 21 may be eliminated by chamfering, and the other end of the magnet 130 may have a second flat surface 17C opposed to the second shaft member 21B. The second portion S2 of the magnet 130 may be adjacent to the sliding member 21, and the length of the second portion S2 of the magnet 130 in the second direction (for example, in the X-axis direction) may decrease toward the second lateral surface 13B from the first lateral surface 13A of the magnet 130.

By virtue of electromagnetic force resulting from the interaction between the coil 120 and the magnet 130, the bobbin 110 may be slidable or slidably movable along the sliding member 21 in the first direction.

For example, the sliding member 21 may not face or overlap the magnet 130 in the third direction (for example, in the Y-axis direction).

The sliding member 42 may be a magnetic body, and attractive force may be generated between the sliding member 42 and the magnet 31. The first frame 20 may be biased toward the housing 140 due to the attractive force acting between the sliding member 42 and the magnet 31. For example, the first frame 20 may be in close contact with the housing 140 due to the attractive force between the sliding member 42 and the magnet 31.

The first frame 20 may be supported by the housing 140 such that the first frame 20 is movable in the second direction due to the attractive force between the sliding member 42 and the magnet 31. Furthermore, for example, the first frame 20 may be pressed by the sliding member 42 due to the attractive force acting between the sliding member 42 and the magnet 31. Furthermore, for example, the first frame 20 may be maintained in the state of being in contact with the sliding member 42 due to the attractive force acting between the sliding member 42 and the magnet 31.

The sliding member 41 may be a magnetic body, and attractive force may be generated between the sliding member 41 and the magnet 23. The second frame 30 may be biased toward the housing 140 due to attractive force acting between the sliding member 41 and the magnet 23. For example, the second frame 30 may be in close contact with the first frame 20 due to the attractive force between the sliding member 41 and the magnet 23.

The second frame 30 may be supported by the housing 140 such that the second frame 30 is movable in the third direction by the attractive force between the sliding member 41 and the magnet 23. Furthermore, for example, the second frame 20 may be pressed toward the sliding member 41 due to the attractive force between the sliding member 41 and the magnet 23. Furthermore, for example, the second frame 30 may be maintained in the state of being in contact with the sliding member 41 due to the attractive force acting between the sliding member 41 and the magnet 23.

Attractive force F1 and F2 may act between the sliding member 42 and the magnet 31. For example, the attractive force F1 may act between the shaft member 42A and the magnet unit 31A, and the attractive force F2 may act between the shaft member 42B and the magnet unit 31B.

The sliding member 42 may be fixed to the housing 140, and the magnet 31 may be coupled or fixed to the first frame 20 and may be positioned higher than the sliding member 42. Consequently, the first frame 20, which is the moving unit, may be in close contact with the housing 140, which is the stationary unit.

The first frame 20 on which the magnet 31 is disposed may be biased toward the housing 140 due to the attractive force F1 and F2 acting between the magnet 31 and the sliding member 42.

For example, the left lower portion of the first frame 20 may be in close contact with the housing 140 due to the attractive force F1 acting between the magnet unit 31A and the first shaft member 42A. Furthermore, for example, the right lower portion of the first frame 20 may be in close contact with the housing 140 due to the attractive force F2 acting between the magnet unit 31B and the second shaft member 42B.

In order to increase the attractive force acting between the sliding member 42 and the magnet 31, the corner portion of the magnet 31 adjacent to the sliding member 42 may be eliminated so as to have a chamfered portion.

For example, the corner portion of one end of the magnet unit 31A adjacent to the shaft member 42A of the sliding member 42 may be eliminated by chamfering, and the one end of the magnet unit 31A may have a first flat surface 22C2 opposed to the shaft member 42A.

Furthermore, the corner portion of one end of the magnet unit 31B adjacent to the shaft member 42B of the sliding member 42 may be eliminated by chamfering, and the one end of the magnet unit 31B may have a second flat surface 27C2 opposed to the shaft member 42B. For example, the corner portion of one end of each of the magnet units 31A and 31B may have a tilted surface, a chamfered surface, or a sloping surface.

The magnet unit 31A (or 31B) may include a first portion T1 including a first lateral surface 22A (or 27A), which is opposed to or faces the coil 230-1, and a second portion T2 including a second lateral surface 22B (or 27B), which is opposed to the bobbin 110 or is the opposite surface of the first lateral surface 22A (or 27A).

For example, the length of the second portion T2 of the magnet unit 31A (or 31B) in the second direction may decrease toward the second lateral surface 22B (or 27B) from the first lateral surface 22A (or 27A) of the magnet unit 31A (or 31B). The second portion T2 may be positioned closer to the shaft members 42A and 42B than the first portion T1.

The magnet unit 31A (or 31B) may include a third lateral surface 22C (or 27C) positioned between one side of the first lateral surface 22A (or 27A) and one side of the second lateral surface 22B (or 27B) and a fourth lateral surface 22D (or 27D) positioned between the other side of the first lateral surface 22A (or 27A) and the other side of the second lateral surface 22B (or 27B) .

For example, the third lateral surface 22C (or 27C) of the magnet unit 31A (or 31B) may include a first surface 22C1 (or 27C1) abutting the first lateral surface 22A (or 27A) and a second surface 22C2 (or 27C2) positioned between the first surface 22C1 (or 27C1) and the second lateral surface 22B (or 27B) .

For example, the first surface 22C1 may be perpendicular to the first lateral surface 22A (or 27A) of the magnet unit 31A (or 31B), and the angle defined between the first surface 22C1 (or 27C1) and the second surface 22C2 (or 27C2) may be an obtuse angle.

Attractive force F3 and F4 may act between the sliding member 42 and the magnet 23. The sliding member 42 may be fixed to the housing 140, and the magnet 23 may be coupled or fixed to the second frame 30 and may be positioned higher than the sliding member 42. Consequently, the second frame 30 may be in close contact with the first frame 20, which is the moving unit, and/or the housing 140, which is the stationary unit.

For example, attractive force F3 may act between one side (or one end) of the magnet 23 and the shaft member 42B, and the right lower portion of the first frame 20 may be in close contact with the housing 140 due to the attractive force F3.

For example, attractive force F4 may act between the other side (or the other end) of the magnet 23 and the shaft member 42C, and the right upper portion of the first frame 20 may be in close contact with the housing 140 due to the attractive force F4.

Furthermore, attractive force F5 and F6 may act between the sliding member 41 and the magnet 23. The sliding member 41 may be fixed to the first frame 20, and the magnet 23 may be coupled or fixed to the second frame 30 and may be positioned higher than the sliding member 41. Consequently, the second frame 30 may be in close contact with the first frame 10, which is the moving unit, and/or the housing 140, which is the stationary unit.

For example, attractive force F5 may act between one side (or one end) of the magnet 23 and the shaft member 41B, and the right lower portion of the second frame 30 may be in close contact with the right lower portion of the first frame 20 due to the attractive force F5.

For example, attractive force F6 may act between the other side (or the other end) of the magnet 23 and the shaft member 41C, and the right upper portion of the second frame 30 may be in close contact with the right upper portion of the first frame 20 due to the attractive force F6.

In order to increase the attractive force F5 and F6 acting between the magnet 23 and the sliding members 41B and 41C, the first corner portion of one end of the magnet 23 may be eliminated so as to have a chamfered portion, and the second corner portion of the magnet 23 adjacent to the shaft member 41C may be eliminated so as to have a chamfered portion. For example, each of the first corner portion and the second corner portion of the magnet 23 may be a chamfered surface or a sloping surface which is sloped toward the lower surface from the upper surface of the magnet 23.

Because the corner portion of the magnet 31 adjacent to the sliding member 42 is eliminated by chamfering and the corner portion of the magnet 23 adjacent to the sliding member 41 is eliminated by chamfering, it is possible to reduce magnetic field interference between the magnet 31 and the magnet 23. Consequently, the embodiment is able to prevent erroneous OIS operation caused by magnetic field interference between the magnet 31 and the magnet 23 and to improve reliability of OIS operation.

Furthermore, because the corner portions of the two opposite ends of the magnet 23 are eliminated by chamfering, the embodiment is able to reduce the space occupied by the magnet 23 and to create the maximum attractive force with respect to the sliding member 41.

For example, the first corner portion of one end of the magnet 23 adjacent to the shaft member 41B may have a first flat surface 28C2 opposed to the first shaft member 41B.

For example, the second corner portion of the other end of the magnet 23 adjacent to the shaft member 41C may have a second flat surface 28D2 opposed to the second shaft member 41C.

For example, the magnet 23 may include an upper portion A1 and a lower portion A2 positioned below the upper portion A1. The length of the lower portion A2 of the magnet 23 in the third direction may decrease toward the lower surface from the upper surface of the magnet 23. The lower portion A2 may be positioned closer to the shaft members 41C and 41B than the upper portion A1.

For example, the magnet 23 may include an upper surface, a lower surface, a first lateral surface 28A which is opposed to or faces the coil 230-1, a second lateral surface 28B which is opposed to the bobbin 110 and is the opposite surface of the first lateral surface 28A, a third lateral surface 28C positioned between the first lateral surface 28A and the second lateral surface 28B, and a fourth lateral surface 28D which is positioned between the other side of the first lateral surface and the other side of the second lateral surface 28B and is the opposite surface of the third lateral surface 28C.

For example, the third lateral surface 28C of the magnet 23 may include a first surface 28C1 and a second surface 28C2 which is positioned below the first surface 28C1 and is opposed to the shaft member 41B. For example, the first surface 28C1 may be perpendicular to the upper surface of the magnet 230, and the angle defined between the first surface 28C1 and the surface 28C2 may be an obtuse angle.

The fourth lateral surface 38D of the magnet 23 may include a third surface 28D1 and a fourth surface 28D2 which is positioned below the third surface 28D1 and is opposed to the shaft member 41C. For example, the third surface 28D1 may be perpendicular to the upper surface of the magnet 230, and the angle defined between the third surface 28D1 and the fourth surface 28D2 may be an obtuse angle.

When viewed in the optical axis direction or from above in FIG. 25, the magnet 31 may not overlap the sliding member 42. In another embodiment, when viewed in the optical axis direction of from above, at least a portion of the magnet 31 may be disposed so as to overlap the sliding members (for example, 42A and 42B).

When viewed in the optical axis direction or from above in FIG. 25, the magnet 23 may not overlap the sliding members 41B and 41C. In another embodiment, when viewed in the optical axis direction or from above, at least a portion of the magnet 23 may be disposed so as to overlap the sliding members (for example, 41B and 41C).

For example, when viewed in the optical axis direction or from above, the shaft members 41a and 42A may be disposed farther inward than the magnet 31. When viewed in the optical axis direction or from above, the shaft members 41B and 42B may be positioned between the magnet unit 31B and the magnet 23.

For example, when viewed in the optical axis direction or from above in FIG. 25, the sliding member 41 may be disposed closer to the third and fourth lateral portions of the first and second frames 20 and 30 than to the first and second lateral portions of the first and second frames 20 and 30.

For example, when viewed in the optical axis direction or from above, the sliding member 42 may be disposed closer to the first and second lateral portions of the first and second frames 20 and 30 than to the third and fourth lateral portions of the first and second frames 20 and 30. In another embodiment, the sliding member 42 may be disposed closer to the former than to the latter.

The lens moving apparatus 100 may further include a magnet 180 disposed on the second frame 30. The magnet 180 may be disposed on the third lateral portion 41C. For example, the magnet 180 may be disposed in the reception portion 28 of the second frame 30.

For example, when viewed in the optical axis direction or from above, at least a portion of the magnet 180 may be disposed so as to correspond to, face or overlap the sliding member 41D or 42D. For example, when viewed in the optical axis direction or from above, at least a portion of the magnet 180 may be disposed so as to overlap the shaft member 41D of the sliding member 41.

In another embodiment, when viewed in the optical axis direction or from above, the magnet 180 may be disposed so as to overlap at least one of the shaft members 41D or 42D.

Although FIG. 22C illustrates one magnet 180 which correspond to, faces or overlaps the shaft member 41D, another embodiment may further include at least one magnet (not shown) which corresponds to, faces or overlaps at least one of the shaft members 41A, 41B or 41C. Here, the at least one additional magnet may be disposed on, coupled to or fixed to the second frame 30. The second frame 30 may be provided with a reception portion, for example, a groove configured to receive the at least one additional magnet therein. Attractive force may act between the at least one magnet and the at least one shaft member which correspond to each other, and the frames 20 and 30 may be stable supported.

The magnet 31 may be disposed on the first frame 20 so as to correspond to, face or overlap the coil 230-1 in the third direction. For example, the electromagnetic force Fx resulting from the interaction between the magnet 31 and the coil 230-1 may be exerted in the second direction.

The magnet 23 may be disposed on the second frame 30 so as to correspond to, face or overlap the coil 230-2 in the second direction. For example, the electromagnetic force Fy resulting from the interaction between the magnet 23 and the coil 230-2 may be exerted in the third direction.

Because the sliding member 42 is fixed to the housing 140 and the groove 71 in the first frame 20 extends in the second direction, the first frame 20 is movable in the second direction but is immovable in the third direction. Furthermore, because the sliding member 41 is fixed to the first frame 20 and the groove 71 in the second frame 20 extends in the third direction, the second frame 30 is movable in the third direction but is immovable in the second direction.

By virtue of the interaction between the magnet 31 and the coil 230-1, the first frame 20 may be moved in the second direction, and the second frame disposed on the first frame 20 may be moved in the second direction together with the second frame 20. Here, because attractive force acts between the sliding member 21 coupled to the second frame 30 and the magnet 130, the bobbin 110 may also be movable in the second direction together with the second frame 30.

By virtue of the interaction between the magnet 23 and the coil 230-2, the second frame 30 may be movable in the third direction. Here, because attractive force acts between the sliding member 21 coupled to the second frame 30 and the magnet 130, the bobbin 110 may be movable in the third direction together with the second frame 30.

In short, by virtue of the interaction between the magnet 31 and the coil 230-1, the first and second frames 20 and 30 and the bobbin 110 may be movable in the second direction. Furthermore, by virtue of the interaction between the magnet 23 and the coil 230-2, the first frame 20 is immovable but the second frame 30 and the bobbin 110 may be movable in the third direction. When the lens module 400 is coupled to the bobbin 110, the lens module 400 may also be movable in the second and third directions together with the bobbin 110.

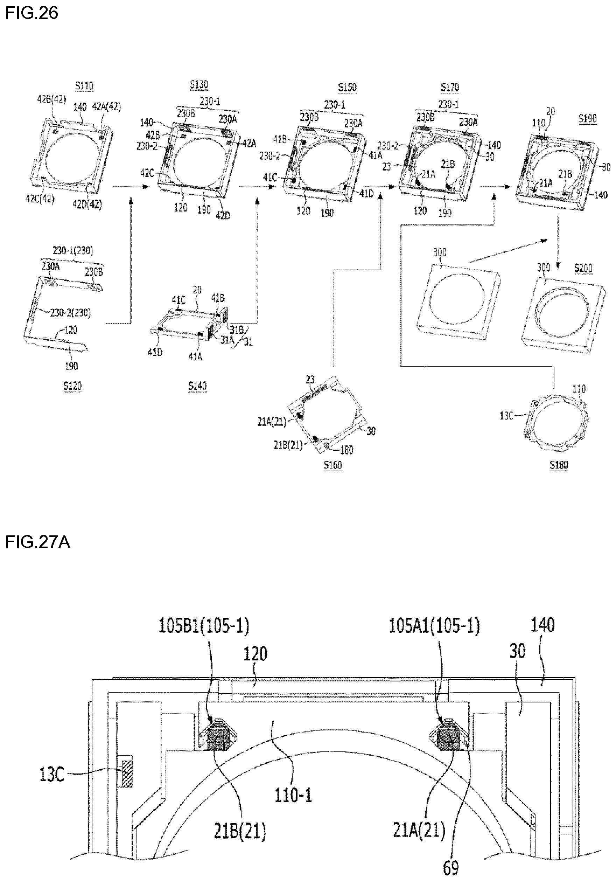

FIG. 26 illustrates an assembly sequence of the lens moving apparatus 100 according to an embodiment.

Referring to FIG. 26, the sliding member 42 is coupled to the groove 45 in the housing 140 using an adhesive (S110). The coils 230 and 120, the position sensors 170 and 240 and the capacitor 195 are coupled to the circuit board 190 using a solder or a conductive adhesive (S120). The circuit board 190 is coupled to the housing 140 using an adhesive (S130).

The magnet 31 is coupled to the seating portion 3 of the first frame 20 using an adhesive. The sliding member 41 is coupled to the reception portion 71 of the first frame 20 using an adhesive.

The first frame 20 is disposed on the sliding member 42 such that a portion of the sliding member is disposed in the groove 72 in the first frame 20.

Using an adhesive, the magnet 23 is coupled to the seating portion 25 of the second frame 30, the magnet 180 is coupled to the reception portion 28 of the second frame 30, and the sliding member 21 is coupled to the reception portion 26 of the second frame 30 (S160).

The second frame 30 is disposed on the sliding member 41 and the first frame 20 such that a portion of the sliding member 41 is disposed in the groove 61 in the second frame 20 (S170).

The magnet 130 is coupled to the seating portion 102 of the bobbin 110 using an adhesive (S180). The bobbin 110 is disposed in the bore 20A in the first frame 20 and the bore 30A in the second frame 30 such that the sliding member 21 is inserted into the seating portion 105 of the bobbin 110 (S190). Subsequently, the lower end of the cover member 300 is coupled to the step 14 of the housing 140 using an adhesive.

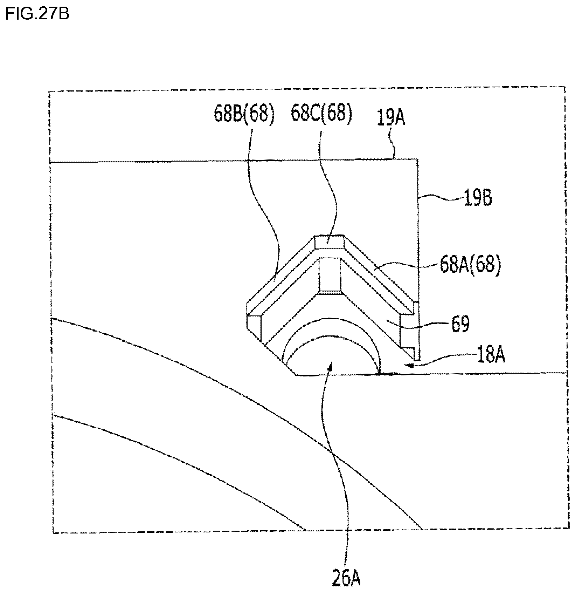

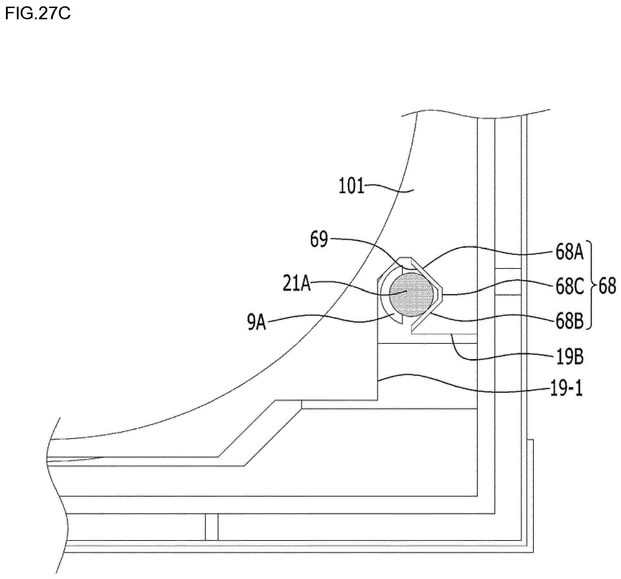

FIG. 27A is a perspective view of the seating portion 105-1 of the bobbin 110-1 and the sliding member 21 according to another embodiment. FIG. 27B is an enlarged view of the seating portions 105A1 and 105B1 shown in FIG. 27A. FIG. 27C is a plan view of the seating portion 105-1 of the bobbin 110-1 and the sliding member 21 shown in FIG. 27A.

Referring to FIGs. 27A to 27C, the seating portion 105-1 may include at least one projection (or protrusion) 69 projecting from the inner surface 68. The projection 69 may reduce the contact area with the sliding member 21 and may thus reduce the frictional force between the bobbin 110-1 and the sliding member 21. Because the frictional force between the bobbin 110-1 and the sliding member 21 is reduced by virtue of the projection 69, the embodiment is able to reduce the electromagnetic force between the coil 120 and the magnet 130 required to move the bobbin 110-1 in the optical axis direction and to reduce driving current required for AF operation and power consumption.

For example, the seating portion 105-1 may include a first lateral surface 68A and a second lateral surface 68B and a third lateral surface 68C positioned between the first lateral surface 68A and the second lateral surface 68B. For example, the first lateral surface 68A may abut the second surface 19B of the projection 118A of the bobbin 110.

For example, the projection 69 may be formed at the first lateral surface 68A, the second lateral surface 68B and the third lateral surface 68C of the seating portion 105-1. For example, when viewed in the optical axis direction or from above, the projection 69 may have a U shape or a V shape.

In another embodiment, the projection 60 may be formed at at least one of the first lateral surface 68A, the second lateral surface 58B or the third lateral surface 68C of the seating portion 105-1. In another embodiment, the projection 69 may include a plurality of protrusions which are spaced apart from each other. Each of the protrusions may have a hemispherical shape, a dome shape, or a polyhedral shape. In another embodiment, the projection 69 may have a stripe shape.

A projection such as the projection 69 shown in FIG. 27B may also be formed at the groove 72 in the first frame 20 or the groove 61 in the second frame 30, and the description of the projection 69 may also be applied to the projection formed at the groove 72 in the first frame 20 or the groove 61 in the second frame 30. By virtue of the projection formed at the groove 72 in the first frame 20 and the groove 61 in the second frame 30, it is possible to reduce the frictional force between the sliding members 42 and 41 and the frames 20 and 30. In addition, the embodiment is able to reduce the electromagnetic force between the coil 230 and the magnets 31 and 23 required to move the frame 10 and to reduce driving current required for OIS operation and power consumption.

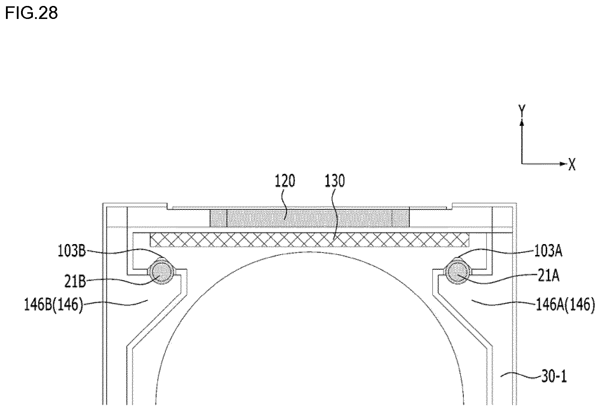

FIG. 28 is a plan view of the bobbin 110-2, the second frame 30-1 and the sliding member 21 according to another embodiment. The bobbin 110-2 may be a modification of the bobbin 110 shown in FIG. 16A, and the second frame 30-1 may be a modification of the second frame 30 shown in FIG. 15.

Referring to FIG. 28, the bobbin 110-2 may include one or more grooves 103A and 103B in which at least a portion of the sliding member 21 is to be disposed or received. For example, the bobbin 110-2 may include a first groove 103A in which at least a portion of the first shaft member 21A is disposed, inserted or received and a second groove 103B in which at least a portion or the second shaft member 21B is disposed, inserted or received. For example, the grooves 103A and 103B may be disposed on the first lateral portion 110A of the bobbin 110-2.

The second frame 30-1 may include a support 146 configured to fix or support the sliding member 21. The support 146d may be disposed in the reception portion 105 of the bobbin 110. The support 146 may alternatively be referred to as a "fixing portion", a "projection", or a "protrusion". The support 146 may project from the internal surface (or the inner surface) of the lateral portion of the second frame 30-1.

For example, the second frame 30-1 may include a first support 146A disposed on the internal surface (or the inner surface) of the third lateral portion 41C of the second frame 30-1 and a second support 146B disposed on the internal surface (or the inner surface) of the fourth lateral portion 41D.

For example, the first support 146A may project toward the fourth lateral portion 41D of the second frame 30-1, and the second support 146B may project toward the third lateral portion 41C of the second frame 30-1.

The sliding member 21 may be coupled or fixed to the support 146 of the second frame 30-1 using an adhesive. For example, the first shaft member 21A may be coupled or fixed to the first support 146A of the second frame 30-1, and the second shaft member 21B may be coupled or fixed to the second support 146B of the second frame 30-1.

For example, the support 146 of the second frame 30-1 may include a groove to which at least a portion of the sliding member 21 is to be coupled. At least one other portion of the sliding member 21 may project outwards from the groove in the support 146 of the second frame 30-1 and may be disposed in the grooves 103A and 103B in the bobbin 110-2.

The coil 120 and the magnet 130-1 may correspond to, face or overlap each other in the third direction (or in the Y-axis direction). For example, the sliding member 21 may be disposed between the magnet 130-1 and the support 146 of the second frame 30-1. The sliding member 21 may correspond to, face or overlap the magnet 130-1 in the third direction.

For example, the sliding member 21 may face or overlap the magnet 130-1 in the third direction (for example, in the Y-axis direction).

For example, the first shaft member 21A may be disposed between one end (or a first end) of the magnet 130-1 and the first support 146A. For example, the first shaft member 21A may correspond to, face or overlap one end (or a first end) of the magnet 130-1 in the third direction. For example, the first shaft member 21A may correspond to, face or overlap the first support 146A of the second frame 30-1 in the third direction.

For example, the second shaft member 21B may be disposed between the other end (or the second end) of the magnet 130-1 and the second support 146B. For example, the second shaft member 21B may correspond, face or overlap the other end (or the second end) of the magnet 130-1 in the third direction. For example, the second shaft member 21B may correspond to, face or overlap the second support 146B of the second frame 30-1 in the third direction.

In another embodiment, the lower portion or the lower end of the sliding member 21 may be coupled to the upper surface of the second frame 30-1. For example, the upper surface of the second frame 30-1 may be provided with a groove in which at least a portion, for example, the lower portion or the lower end of the sliding member 21 is inserted, disposed or coupled.

Because the embodiment does not include an additional yoke which exerts attractive force with respect to the magnet 130 but includes the sliding member 21 made of a magnetic material, by virtue of the attractive force acting between the magnet 130 and the sliding member 21, it is possible to cause the bobbin 110 to be in close contact with the sliding member 21, to stably support the AF moving unit, and to perform a stable AF operation.

In addition, because the embodiment does not include additional yokes which exert attractive force with respect to the magnets 31 and 23 but includes the sliding members 41 and 42 made of a magnetic material, by virtue of the attractive force F1 and F2 acting between the magnet 42 and the sliding member 42 and the attractive force F5 and F6 acting between the magnet 23 and the sliding member 41, it is possible to cause the first frame 20 to be in close contact with the sliding member 42 and to cause the second frame 30 to be in close contact with the sliding member 41.

Furthermore, because the left lower portion, the right lower portion and the right upper portion of the frame 10 are biased toward the housing 140 due to the attractive force F1, F2, F5 and F6, the embodiment is able to cause the frame 10 to be stable and close contact with the housing 140, to stably support the OIS moving unit, and to perform a stable OIS operation.

In addition, because the additional magnet 180 is disposed on the fourth lateral portion 41D of the second frame 30 according to the embodiment, by virtue of the attractive force F8 acting between the magnet 180 and the shaft member 41D of the sliding member 41, it is possible to apply force to the right upper portion of the second frame 30 and thus to cause the right upper portion of the second frame 30 to be close contact with the first frame 20 (or the housing 140). In other words, because the magnet 180 is additionally provided, by virtue of the attractive force acting between the magnets 31, 23 and 180 and the sliding members 41 and 42, it is possible to apply force to the four ends of the frame 10, to thus cause the frame 10 to be more stable close contact with the housing 140. Furthermore, it is possible to stably support the OIS moving unit and to perform a stable OIS operation.

The embodiment uses the sliding member (or the shaft member) 21 configured to support the bobbin 110 for an AF operation and the sliding members 42 and 41 made of a magnetic material configured to support the frame 10 for OIS operation. Accordingly, because there is no need to provide an additional yoke, it is possible to reduce the size of the lens moving apparatus and the manufacturing cost.

In addition, because portions of corners of two opposite ends of the magnet 130 are cut off, the embodiment is able to reduce the space occupied by the magnet 130 and thus to improve the space availability of the lens moving apparatus, thereby realizing miniaturization of the lens moving apparatus.

Furthermore, because the cut surface of the magnet 130 faces the sliding member 21, it is possible to increase the attractive force acting between the magnet 130 and the sliding member 21 and to increase force required to support the AF moving unit, for example, the bobbin 110.

In addition, because the cut surfaces of the magnets 31 and 23 face the sliding members 42 and 41, it is possible to increase the attractive force acting between the magnets 21 and 23 and the sliding members 42 and 41 and to increase force required to support the OIS moving unit, for example, the first and second frames 20 and 30.

Furthermore, because the groove 105 in the bobbin 110 is provided with the projection 69 which has a height difference with respect to at least one of the upper surface of the bobbin 110 or the lower surface of the bobbin 110, the embodiment is able to reduce the frictional force between the bobbin 110 and the sliding member 21.

In addition, because the corner portion of the magnet 31 adjacent to the sliding member 42 is eliminated by chamfering and the corner portion of the magnet 23 adjacent to the sliding member 41 is eliminated by chamfering, it is possible to reduce magnetic field interference between the magnet 31 and the magnet 23. Consequently, the embodiment is able to prevent erroneous OIS operation caused by magnetic field interference between the magnet 31 and the magnet 23 and to improve reliability of OIS operation.

Furthermore, because the corners of the two opposite ends of the magnet 23 are eliminated so as to have chamfered portions, the embodiment is able to reduce the space occupied by the magnet 23 and to create the maximum attractive force with respect to the sliding member 41.

The embodiment may be constructed such that the three corners of the frame 10 are biased and are supported with respect to the housing 140 due to the attractive force acting between the shaft members 41 and 42 and the magnets 31 and 23. Furthermore, the magnet 180 may be fixed to the second frame 30, and the one corner of the frame 10 may be additionally biased due to the attractive force acting between the magnet 180 and the shaft member 41. Consequently, the four corner regions of the frame 10 may be biased, and the frame 10 may be more stably supported with respect to the housing 140.

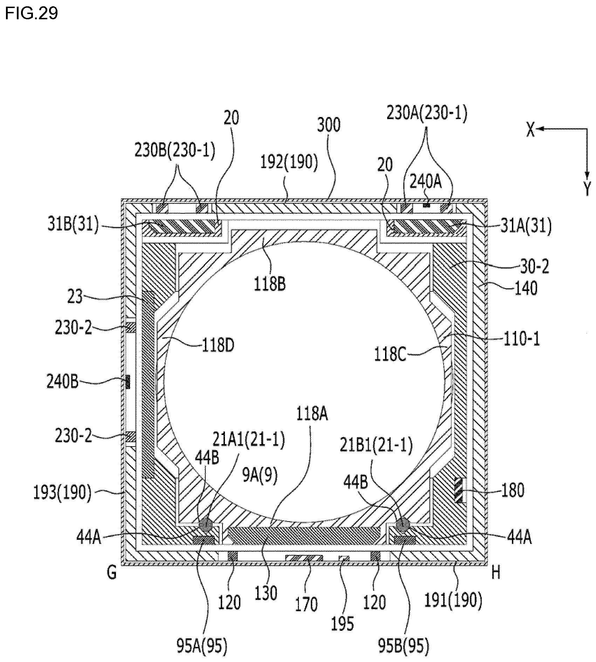

FIG. 29 is a cross-sectional view of the lens moving apparatus according to another embodiment, taken in a direction perpendicular to the optical axis.

The lens moving apparatus shown in FIG. 29 may be a modification of the lens moving apparatus 100 shown in FIGs. 13 to 28, and the description of the lens moving apparatus 100 shown in FIG. 13 to 28 may also be applied to the lens moving apparatus shown in FIG. 29 with or without modification, except for the following description.

In the lens moving apparatus shown in FIG. 29, the sliding member 21-1 may be a non-magnetic body. The sliding member 21-1 may be disposed between the bobbin 110 and the second frame 30-2. For example, the sliding member 21-1 may be disposed between the outer surface (or the outer circumferential surface) of the bobbin 110 and the inner surface (or the inner circumferential surface) of the second frame 30-2. For example, at least a portion of the sliding member 21-1 may be fixed to the second frame 30-2. At least a portion of the sliding member 21-1 may be coupled, attached or fixed to the inner surface (or the inner circumferential surface) of the second frame 30-2. The lower portion of the lower end of the sliding member 21-1 may be coupled, attached or fixed to the upper surface of the second frame 30-2.

For example, the second frame 30-2 may include a groove 44A in which at least a portion of the sliding member 21-1 is inserted, disposed or coupled. For example, the groove 44A may be disposed in the inner circumferential surface (or the inner surface) of the second frame 30-2. For example, at least a portion of the sliding member 21-1 may be coupled, attached or fixed to the groove 44A in the second frame 30-2 using an adhesive.

The bobbin 110-1 may be in contact with at least one other portion of the sliding member 21-1. For example, the at least other portion of the sliding member 21-1 may be in contact with the outer surface (or the outer circumferential surface) of the bobbin 110-1.

For example, the bobbin 110-1 may include a groove 44B in or with which at least one other portion of the sliding member 21-1 is inserted, disposed or in contact. For example, the groove 44B may be disposed on the outer surface (or the outer circumferential surface) of the bobbin 110-1.

The sliding member 21-1 may include a first sliding member 21A1 and a second sliding member 21B1.

For example, each of the first sliding member 21A1 and the second member 21B1 may be a non-magnetic body which does not exert attractive force with respect to the magnet 130.

The lens moving apparatus shown in FIG. 29 may include an additional yoke 95 configured to exert attractive force resulting from the interaction with the magnet 130. The yoke 95 may be disposed on the second frame 30-2.

For example, the yoke 95 may include a first yoke 95A disposed in a first region of the second frame 30-1 which corresponds to, faces or overlaps the first sliding member 21A1 and a second yoke 95B disposed in a second region of the second frame 30-1 which corresponds to, faces or overlaps the second sliding member 21B1.

For example, the yoke 95 may face or overlap the sliding member 21-1 in a direction toward the second lateral portion 141B from the first lateral portion 141A of the housing 140.

For example, at least a portion of the yoke 95 may be disposed so as to correspond to, face or overlap the magnet 130. At least a portion of the yoke 95 may be disposed so as to correspond to, face or overlap the sliding member 21-1 in a direction different from the direction in which the magnet 130 and the yoke 95 are opposed to each other. For example, at least a portion of the yoke 95 may be disposed so as to correspond to, face or overlap the sliding member 21-1 in a direction toward the fourth lateral portion 141D from the third lateral portion 141C of the housing 140. In another embodiment, the yoke and the magnet may face or overlap each other in a direction in which the yoke and the sliding member face each other.

For example, the first yoke 95A and the second yoke 95B may be spaced apart from each other. For example, the magnet 130 may be disposed between the first yoke 95A and the second yoke 95B. In another embodiment, the first yoke 95A and the second yoke 95B may be connected to each other.

The yoke 95 may be a magnetic body, and the bobbin 110 may be supported with respect to the housing such that the bobbin 110 is movable in the optical axis direction by virtue of the attractive force acting between the yoke 95 and the magnet 130. Furthermore, for example, the bobbin 110 may be pressed to the sliding member 21 by virtue of the attractive force acting between the yoke 95 and the magnet 130. Furthermore, for example, the bobbin 110 may be maintained in the state of being in contact with the sliding member 21 by virtue of the attractive force acting between the yoke 95 and the magnet 130.

In another embodiment, each of the sliding members 21 and 21-1 may be a magnetic body, and the additional yoke 95 as in the embodiment shown in FIG. 29 may further be provided.

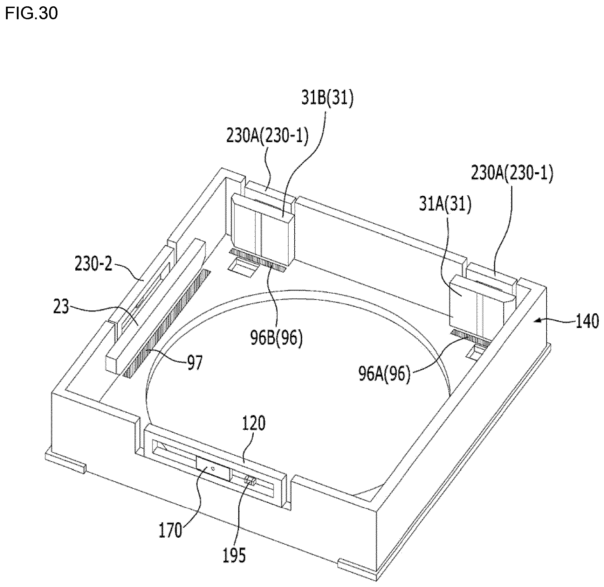

FIG. 30 illustrates another embodiment including an additional OIS yoke.

In the embodiment shown in FIG. 30, each of the sliding members 41 and 42 may be a non-magnetic body, and additional yokes 96 and 97 configured to exert attractive force required to support the first frame 20 and the second frame 30 may be provided. The embodiment shown in FIG. 30 may be a modification of the lens moving apparatus 100 shown in FIG. 28. Hereinafter, the description of the lens moving apparatus 100 shown in FIGs. 13 to 28 may also be applied to the embodiment shown in FIG. 30, except for the following description.

The yokes 96 and 97 may be disposed on the housing 140. For example, the yokes 96 and 97 may be disposed on the lower portion 145 of the housing 140. For example, the lower portion 145 of the housing 140 may be provided with a reception portion, for example, a groove in which the yokes 96 and 97 are disposed, inserted or coupled.

For example, at least a portion of the first yoke 96 may correspond to, face or overlap the magnet 31 disposed on the first frame 20 in the optical axis direction.

For example, the first yoke 96 may include a first yoke unit 96A, which corresponds to, faces or overlaps the first magnet unit 31A in the optical axis direction, and a second yoke unit 96B, which corresponds to, faces or overlaps the second magnet unit 31B in the optical axis direction.

For example, the second yoke 97 may correspond to, face or overlap the magnet 23 disposed on the second frame 30 in the optical axis direction.

Each of the yokes 96 and 97 may have a shape corresponding to or coinciding with a corresponding one of the magnets 31 and 23.

The first yoke 96 may be a magnetic body, and attractive force may act between the first yoke 96 and the magnet 31. The first frame 20 may be biased toward the housing 140 by virtue of the attractive force acting between the first yoke 96 and the magnet 31. For example, the first frame 20 may be in close contact with the housing 140 by virtue of the attractive force acting between the first yoke 96 and the magnet 31.

The first frame 20 may be supported with respect to the housing 140 such that the first frame 20 is movable in the second direction by virtue of the attractive force acting between the first yoke 96 and the magnet 31. Furthermore, for example, the first frame 20 may be pressed toward the sliding member 42 by virtue of the attractive force acting between the first yoke 96 and the magnet 31. Furthermore, for example, the first frame 20 may be maintained in the state of being in contact with the sliding member 42 by virtue of the attractive force acting between the first yoke 96 and the magnet 31.

The second yoke 97 may be a magnetic body, and attractive force may act between the second yoke 97 and the magnet 23. The second frame 30 may be biased toward the housing 140 by virtue of the attractive force acting between the second yoke 97 and the magnet 23. For example, the second frame 30 may be in close contact with the first frame 20 by virtue of the attractive force acting between the second yoke 97 and the magnet 23.

The second frame 30 may be supported with respect to the housing 140 such that the second frame 30 is movable in the third direction by virtue of the attractive force acting between the second yoke 97 and the magnet 23. Furthermore, for example, the second frame 20 may be biased toward the sliding member 41 by virtue of the attractive force acting between the second yoke 97 and the magnet 23. Furthermore, for example, the second frame 30 may be maintained in the state of being in contact with the sliding member 41 by virtue of the attractive force acting between the second yoke 97 and the magnet 23.

Although not illustrated in FIG. 30, the embodiment may further include a yoke (not shown) which is disposed on the housing 140 and corresponds to, faces or overlaps the magnet 180 in the optical axis direction. Here, attractive force may act between the magnet 180 and the additional yoke, and the frames 20 and 30 may be stably supported.

The description of the lens moving apparatus 1100 shown in FIGs. 1 to 12 may also be applied to the lens moving apparatus 100 shown in FIG. 13 with or without modification.

Meanwhile, the lens moving apparatuses according to the above-described embodiments may be used in various fields, such as, for example, those of a camera device or an optical device.

The lens moving apparatus 100 according to the embodiment may be included in an optical instrument, which is designed to form the image of an object in a space using reflection, refraction, absorption, interference, diffraction or the like, which are characteristics of light, to extend eyesight, to record an image obtained through a lens or to reproduce the image, to perform optical measurement, or to propagate or transmit an image. For example, although the optical instrument according to the embodiment may be a mobile phone, cellular phone, smart phone, portable smart instrument, digital camera, laptop computer, digital broadcasting terminal, PDA(Personal Digital Assistant), PMP(Portable Multimedia Player), navigation device or the like, the disclosure is not limited thereto. Furthermore, any device capable of taking images or photographs is possible.

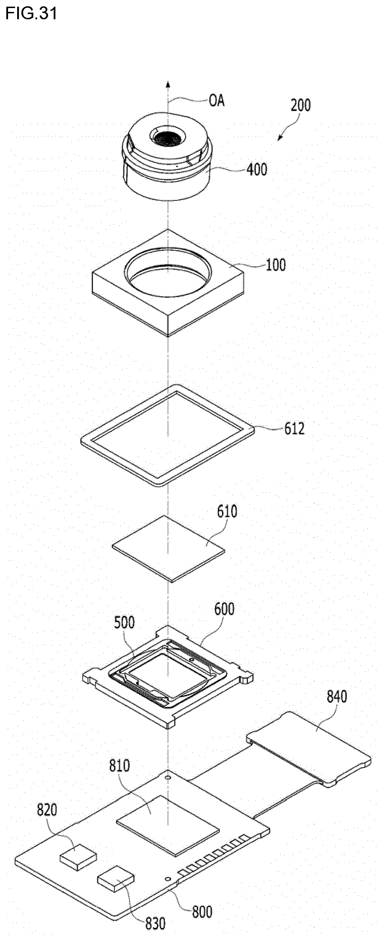

FIG. 31 is an exploded perspective view illustrating a camera device 200 according to an embodiment.

Referring to FIG. 31, the camera device 200 may include a lens or a lens barrel 400, the lens moving apparatus 100, an adhesive member 612, a filter 610, a first holder 600, a second holder 800, an image sensor 810, a motion sensor 820, a controller 830, and a connector 840. The lens moving apparatus 100 may be the embodiment shown in FIGs. 13 to 28.

The lens or the lens barrel 400 may be mounted in the bobbin 110 of the lens moving apparatus 100.

The first holder 600 may be disposed under the base 210 of the lens moving apparatus 100. The filter 610 may be mounted on the first holder 600, and the first holder 600 may have a raised portion 500 on which the filter 610 is seated.

The adhesive member 612 may couple or attach the base 210 of the lens moving apparatus 100 to the first holder 600. The adhesive member 612 may be, for example, epoxy, thermohardening adhesive, or ultraviolet hardening adhesive.

The filter 610 may serve to prevent light within a specific frequency band that passes through the lens barrel 400 from being introduced into the image sensor 810. The filter 610 may be, for example, an infrared-light-blocking filter, without being limited thereto. Here, the filter 610 may be oriented parallel to the X-Y plane.

The region of the first holder 600 in which the filter 610 is mounted may have formed therein an opening in order to allow the light that passes through the filter 610 to be introduced into the image sensor 810.

The second holder 800 may be disposed under the first holder 600, and the image sensor 810 may be mounted on the second holder 600. The image sensor 810 may be an area on which an image included in the light that passes through the filter 610 and that is introduced thereinto is formed.

The second holder 800 may include, for example, various circuits, devices, and a controller in order to convert the image, formed on the image sensor 810, into electrical signals and to transmit the electrical signals to an external component. The second holder 800 may be embodied as a circuit board, on which the image sensor 810 may be mounted, on which a circuit pattern may be formed, and to which various devices may be coupled.

The image sensor 810 may receive an image contained in the light introduced through the lens moving apparatus 100, 1100, 2100 and may convert the received image into electrical signals.

The filter 610 and the image sensor 810 may be spaced apart from each other so as to be opposite each other in the first direction.

The motion sensor 820 may be mounted on the second holder 800, and may be conductively connected to the controller 830 through the circuit pattern formed on the second holder 800.

The motion sensor 820 may output information about a rotational angular speed caused by motion of the camera device 200. The motion sensor 820 may be embodied as a dual-axis or triple-axis gyro sensor or an angular speed sensor.

The controller 830 may be mounted on the second holder 800. The second holder 800 may be conductively connected to the lens moving apparatus 100. For example, the second holder 800 may be conductively connected to the coil 120 of the lens moving apparatus 100, and may provide a drive signal to the coil 120.

The connector 840 may be conductively connected to the second holder 800, and may be have a port that is intended to be conductively connected to an external device.

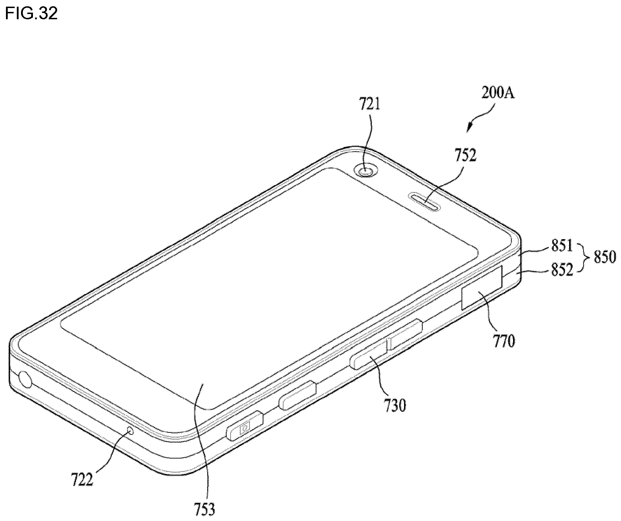

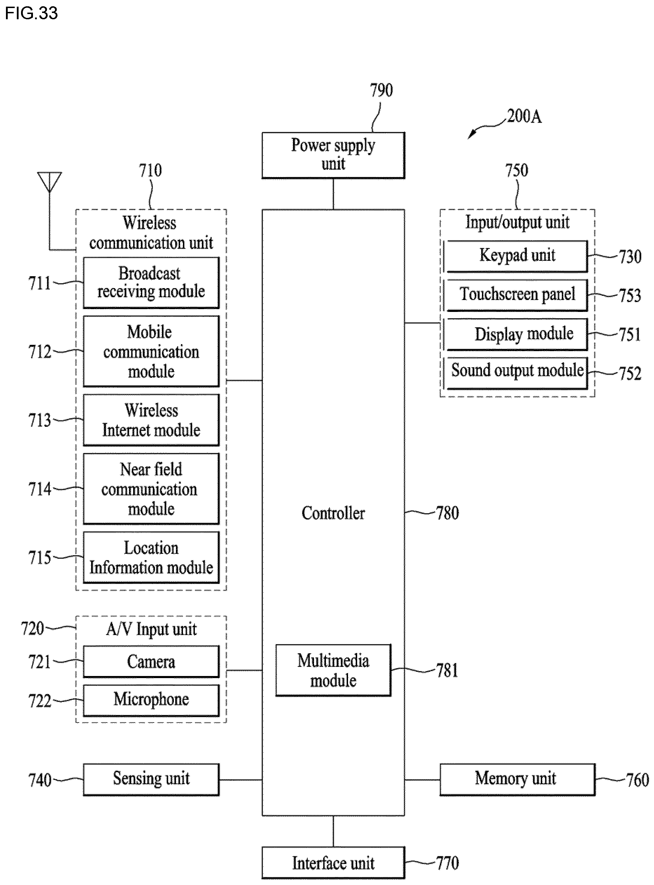

FIG. 32 is a perspective view illustrating an optical device according to an embodiment. FIG. 33 is a view illustrating the configuration of the optical device 200A show in in FIG. 32.

Referring to FIGs. 32 and 33, the optical device 200A may include a body 850, a wireless communication unit 710, an audio/video (A/V) input unit 720, a sensing unit 740, an input/output unit 750, a memory unit 760, an interface unit 770, a controller 780, and a power supply unit 790.

The body 850 shown in FIG. 32 has a bar shape, without being limited thereto, and may be any of various types, such as, for example, a slide type, a folder type, a swing type, or a swivel type, in which two or more sub-bodies are coupled so as to be movable relative to each other.

The body 850 may include a case (e.g. casing, housing, or cover) defining the external appearance of the terminal. For example, the body 850 may be divided into a front case 851 and a rear case 852. Various electronic components of the terminal may be accommodated in the space defined between the front case 851 and the rear case 852.

The wireless communication unit 710 may include one or more modules, which enable wireless communication between the terminal 200A and a wireless communication system or between the terminal 200A and a network in which the terminal 200A is located. For example, the wireless communication unit 710 may include a broadcast-receiving module 711, a mobile communication module 712, a wireless Internet module 713, a nearfield communication module 714, and a location information module 715.

The A/V input unit 720 serves to input audio signals or video signals, and may include, for example, a camera 721 and a microphone 722.

The camera 721 may be the camera 200 including the camera device 1200, 200 according to the embodiment.

The sensing unit 740 may sense the current state of the terminal 200A, such as, for example, the opening or closing of the terminal 200A, the location of the terminal 200A, the presence of a user's touch, the orientation of the terminal 200A, or the acceleration/deceleration of the terminal 200A, and may generate a sensing signal to control the operation of the terminal 200A. When the terminal 200A is, for example, a slide-type cellular phone, the sensing unit 740 may sense whether the slide-type cellular phone is opened or closed. Furthermore, the sensing unit 740 may sense the supply of power from the power supply unit 790, coupling of the interface unit 770 to an external device and the like.

The input/output unit 750 serves to generate, for example, visual, audible, or tactile input or output. The input/output unit 750 may generate input data to control the operation of the terminal 200A, and may display information processed in the terminal 200A.

The input/output unit 750 may include a keypad unit 730, a display module 751, a sound output module 752, and a touchscreen panel 753. The keypad unit 730 may generate input data in response to input on a keypad.

The display module 751 may include a plurality of pixels, the color of which varies in response to electrical signals applied thereto. For example, the display module 751 may include at least one among a liquid crystal display, a thin-film-transistor-liquid crystal display, an organic light-emitting diode, a flexible display and a 3D display.

The sound output module 752 may output audio data received from the wireless communication unit 710 in, for example, a call-signal reception mode, a call mode, a recording mode, a voice recognition mode, or a broadcast reception mode, or may output audio data stored in the memory unit 760.

The touchscreen panel 753 may convert variation in capacitance, caused by a user's touch on a specific region of a touchscreen, into electrical input signals.

The memory unit 760 may temporarily store programs for the processing and control of the controller 780, and input/output data (for example, telephone numbers, messages, audio data, stationary images, moving images and the like). For example, the memory unit 760 may store images captured by the camera 721, for example, pictures or moving images.

The interface unit 770 serves as a path through which the lens moving apparatus is connected to an external device connected to the terminal 200A. The interface unit 770 may receive power or data from the external component, and may transmit the same to respective constituent elements inside the terminal 200A, or may transmit data inside the terminal 200A to the external component. For example, the interface unit 770 may include a wired/wireless headset port, an external charger port, a wired/wireless data port, a memory card port, a port for connection to a device equipped with an identification module, an audio input/output (I/O) port, a video input/output (I/O) port, an earphone port and the like.

The controller 780 may control the general operation of the terminal 200A. For example, the controller 780 may perform control and processing related to, for example, voice calls, data communication, and video calls.

The controller 780 may include a multimedia module 781 for multimedia playback. The multimedia module 781 may be embodied in the controller 780 or may be embodied separately from the controller 780.

The controller 780 may perform a pattern recognition process capable of recognizing writing input or drawing input carried out on a touch screen as a character and an image, respectively.

The power supply unit 790 may supply power required to operate the respective constituent elements upon receiving external power or internal power under the control of the controller 780.

The features, configurations, effects and the like described above in the embodiments are included in at least one embodiment, but the invention is not limited only to the embodiments. In addition, the features, configurations, effects and the like exemplified in the respective embodiments may be combined with other embodiments or modified by those skilled in the art. Accordingly, content related to these combinations and modifications should be construed as falling within the scope of the embodiments.

### [Industrial Applicability]

The embodiments may be used for a lens moving apparatus, a camera device and an optical instrument, which are capable of reducing the manufacturing cost and of reducing the space occupied by the yoke, thus improving design freedom and reducing the size thereof.

## Claims

1. A lens moving apparatus comprising:
a housing;
a bobbin disposed in the housing;
a sliding member disposed between the housing and the bobbin and fixed to the housing;
a magnet disposed on the bobbin; and
a coil disposed on the housing to move the bobbin in an optical axis direction by virtue of interaction with the magnet,
wherein the sliding member is a magnetic body which exerts attractive force with respect to the magnet.

2. The lens moving apparatus according to claim 1, wherein the bobbin is slidably moved along the sliding member in the optical axis direction.

3. The lens moving apparatus according to claim 1, wherein the housing comprises a groove to which at least a portion of the sliding member is fixed.

4. The lens moving apparatus according to claim 1, wherein the bobbin comprises a groove in which at least one other portion of the sliding member is inserted and disposed.

5. The lens moving apparatus according to claim 1, wherein the housing comprises a groove which a lower portion of the sliding member is inserted into and fixed to.

6. The lens moving apparatus according to claim 1, wherein the housing comprises a projection projecting an inner surface of a lateral portion of the housing, and the sliding member is fixed to the projection.

7. The lens moving apparatus according to claim 1, wherein at least a portion of the bobbin is disposed between the magnet and the sliding member.

8. The lens moving apparatus according to claim 1, wherein the sliding member overlaps the magnet in a direction which is perpendicular to the optical axis direction and which the magnet faces the coil.

9. The lens moving apparatus according to claim 8, wherein the sliding member does not overlap the coil in the direction which is perpendicular to the optical axis direction and in which the magnet faces the coil.

10. The lens moving apparatus according to claim 1, wherein a shortest distance between the sliding member and the magnet is greater than half of a length of the magnet in a direction which is perpendicular to the optical axis direction and which the magnet faces the coil but is less than three times a thickness of the magnet.
